# EUROPEAN PATENT APPLICATION

(11) **EP 4 723 641 A1**
(43) Date of publication of application: **08.04.2026**
(21) Application number: 24815954.3
(22) Date of filing: 21.03.2024
(51) Int. Cl.: H04N 19/593, H04N 19/11, H04N 19/176, H04N 19/70, H04N 19/132, H04N 19/105, H04N 19/119

(54) **IMAGE ENCODING METHOD, ENCODING DEVICE, DECODING METHOD, AND DECODING DEVICE USING INTRA PREDICTION MODE**

(30) Priority: 01.06.2023 KR 20230071182; 05.10.2023 KR 20230132461
(71) Applicant: Samsung Electronics Co., Ltd., Suwon-si, Gyeonggi-do 16677 (KR)
(72) Inventor: PARK, Minwoo, Suwon-si, Gyeonggi-do 16677 (KR); PARK, Minsoo, Suwon-si, Gyeonggi-do 16677 (KR); LI, Ling, Suwon-si, Gyeonggi-do 16677 (KR); PARK, Jeeyoon, Suwon-si, Gyeonggi-do 16677 (KR); CHOI, Kwangpyo, Suwon-si, Gyeonggi-do 16677 (KR)
(74) Representative: Appleyard Lees IP LLP
(86) International application number: PCT/KR2024/095608
(87) International publication number: WO 2024/248580

(57) **Abstract**

An image decoding method and apparatus, and an image encoding method and apparatus, are provided. The image decoding method includes obtaining information about a first intra prediction mode of a current block from a bitstream, determining the first intra prediction mode of the current block by using the information about the first intra prediction mode, determining a search range of a second intra prediction mode based on based on the first intra prediction mode, determining the second intra prediction mode for the current block within the search range of the second intra prediction mode, and generating a prediction block by performing intra prediction on the current block by using the second intra prediction mode, and generating a reconstructed image based on the prediction block.

## Description

### TECHNICAL FIELD

The present disclosure relates to image encoding and decoding field. In detail, the present disclosure relates to an apparatus and method for encoding and decoding an image by using an intra prediction mode.

### BACKGROUND ART

In image encoding and decoding, images are split into blocks, and each block is prediction encoded and prediction decoded through inter prediction or intra prediction.

Inter prediction is a technology for compressing images by removing temporal redundancy between the images. In the inter prediction, current image blocks are predicted using reference images. A reference block that is most similar to a current block may be searched for from a predetermined search range within a reference image. The current block is predicted based on the reference block, and a prediction block generated as a result of the prediction is subtracted from the current block to generate a residual block.

The intra prediction is a technology for compressing an image by removing spatial redundancy within the image. The intra prediction generates a prediction block based on the surrounding pixels of the current block according to a prediction mode. A residual block is generated by subtracting the prediction block from the current block.

The residual block generated through the inter prediction or the intra prediction may be transferred to a decoder through transform and quantization. The decoder performs inverse quantization and inverse transform on the residual block, and reconstructs the current block by combining the prediction block of the current block with the residual block. The decoder may remove artifacts in the reconstructed current block by filtering the reconstructed current block in certain cases.

### DISCLOSURE OF INVENTION

### SOLUTION TO PROBLEM

According to an embodiment of the present disclosure, an image decoding method is provided. The image decoding method may include obtaining information about a first intra prediction mode of a current block from a bitstream. The image decoding method may include determining the first intra prediction mode of the current block by using the information about the first intra prediction mode. The image decoding method may include determining a search range of a second intra prediction mode based on based on the first intra prediction mode. The search range may include a plurality of intra prediction modes including the first intra prediction mode. The image decoding method may include determining the second intra prediction mode for the current block within the search range of the second intra prediction mode. The image decoding method may include generating a prediction block by performing intra prediction on the current block by using the second intra prediction mode. The image decoding method may include generating a reconstructed image based on the prediction block.

According to an embodiment of the present disclosure, an image decoding apparatus is provided. The image decoding apparatus may include memory and at least one processor. The at least one processor is configured to execute at least one instruction stored in the memory to obtain information about the first intra prediction mode of a current block from a bitstream. The at least one processor is configured to execute the at least one instruction stored in the memory to determine the first intra prediction mode of a current block by using information about the first intra prediction mode. The at least one processor is configured to execute the at least one instruction stored in the memory to determine the search range of the second intra prediction mode based on the first intra prediction mode. The search range may include a plurality of intra prediction modes including the first intra prediction mode. The at least one processor is configured to execute the at least one instruction stored in the memory to determine the second intra prediction mode for a current block within the search range of the second intra prediction mode. The at least one processor is configured to execute the at least one instruction stored in the memory to determine a prediction block by performing intra prediction on the current block by using the second intra prediction mode. The at least one processor is configured to execute the at least one instruction stored in the memory to generate a reconstructed image based on the prediction block.

According to an embodiment of the present disclosure, an image encoding method is provided. The image encoding method may include determining a first intra prediction mode of a current block. The image encoding method may include determining a search range of a second intra prediction mode based on based on the first intra prediction mode. The search range may include a plurality of intra prediction modes including the first intra prediction mode. The image encoding method may include determining the second intra prediction mode for the current block within the search range of the second intra prediction mode. The image encoding method may include generating a prediction block by performing intra prediction on the current block by using the second intra prediction mode. The image encoding method may include generating a bitstream including information about the first intra prediction mode of a current block.

According to an embodiment of the present disclosure, a computerreadable storage medium storing a bitstream is provided. The bitstream may be encoded by an image encoding method. The image encoding method may include determining a first intra prediction mode of a current block. The image encoding method may include determining a search range of a second intra prediction mode based on based on the first intra prediction mode. The search range may include a plurality of intra prediction modes including the first intra prediction mode. The image encoding method may include determining the second intra prediction mode for the current block within the search range of the second intra prediction mode. The image encoding method may include generating a prediction block by performing intra prediction on the current block by using the second intra prediction mode. The image encoding method may include generating a bitstream including information about the first intra prediction mode of a current block.

### BRIEF DESCRIPTION OF DRAWINGS

FIG. 1 is a block diagram of an image decoding apparatus according to an embodiment of the present disclosure.
FIG. 2 is a block diagram of an image encoding apparatus according to an embodiment of the present disclosure.
FIG. 3 illustrates a process of determining at least one coding unit by splitting a current coding unit, according to an embodiment of the present disclosure.
FIG. 4 illustrates a process of determining at least one coding unit by splitting a coding unit having a non-square shape, according to an embodiment of the present disclosure.
FIG. 5 illustrates a process of splitting a coding unit based on at least one of block shape information and split shape mode information, according to an embodiment of the present disclosure.
FIG. 6 illustrates a method of determining a certain coding unit among an odd number of coding units, according to an embodiment of the present disclosure.
FIG. 7 illustrates an order in which a plurality of coding units are processed when a plurality of coding units are determined by splitting a current coding unit, according to an embodiment of the present disclosure.
FIG. 8 illustrates a process of determining that the current coding unit is split into an odd number of coding units when the coding unit is not processed in a certain order, according to an embodiment of the present disclosure.
FIG. 9 illustrates a process of determining at least one coding unit by splitting a first coding unit, according to an embodiment of the present disclosure.
FIG. 10 illustrates that the shape in which a second coding unit is split is limited when the second coding unit in a non-square shape determined by splitting the first coding unit satisfies a predetermined condition, according to an embodiment of the present disclosure.
FIG. 11 illustrates a process of splitting a coding unit in a square shape when split shape mode information does not able to indicate split into a coding unit in a four-square shape, according to an embodiment of the present disclosure.
FIG. 12 illustrates that a processing order in a plurality of coding units varies depending on a coding unit split process, according to an embodiment of the present disclosure.
FIG. 13 illustrates a process of determining the depth of a coding unit as the shape and size of the coding unit vary when a plurality of coding units are determined by recursively splitting the coding unit, according to an embodiment of the present disclosure.
FIG. 14 illustrates an index (a part index, hereinafter PID) for classifying coding units and depths that may be determined depending on the shapes and sizes of coding units, according to an embodiment of the present disclosure.
FIG. 15 illustrates that a plurality of coding units are determined according to a plurality of certain data units included in a picture, according to an embodiment of the present disclosure.
FIG. 16 illustrates coding units that may be determined for each picture when a combination of shapes into which a coding unit may be split differs for each picture, according to an embodiment of the present disclosure.
FIG. 17 illustrates various shapes of coding units that may be determined based on split shape mode information expressed by binary code, according to an embodiment of the present disclosure.
FIG. 18 illustrates other shapes of a coding unit that may be determined based on split shape mode information expressed by binary code, according to an embodiment of the present disclosure.
FIG. 19 is a block diagram of an image encoding and decoding system that performs loop filtering, according to an embodiment of the present disclosure.
FIG. 20 is a block diagram illustrating a configuration of an image decoding apparatus according to an embodiment of the present disclosure.
FIG. 21 is a diagram illustrating a process of predicting a current image by using a reference sample, according to an embodiment of the present disclosure.
FIG. 22 is a diagram illustrating intra prediction directions according to an embodiment of the present disclosure.
FIG. 23 is a flowchart illustrating an image decoding method that performs intra prediction on a current block by using an intra prediction mode, according to an embodiment of the present disclosure.
FIG. 24 is a diagram illustrating a process of determining an intra prediction mode, according to an embodiment of the present disclosure.
FIG. 25 is a diagram illustrating a process of determining an intra prediction mode, according to an embodiment of the present disclosure.
FIG. 26 is a diagram illustrating a process of determining an intra prediction mode, according to an embodiment of the present disclosure.
FIG. 27 is a flowchart illustrating a process of determining an intra prediction mode based on a predetermined condition, according to an embodiment of the present disclosure.
FIG. 28 is a diagram illustrating a reference area of a current block according to an embodiment of the present disclosure.
FIG. 29 is a diagram illustrating a reference area of a current block according to an embodiment of the present disclosure.
FIG. 30 is a diagram illustrating interpolation filtering for a current block according to an embodiment of the present disclosure.
FIG. 31 is a diagram illustrating a process of determining a reference block by using template matching, according to an embodiment of the present disclosure.
FIG. 32 is a diagram illustrating a process of determining a sub-block of a current block, according to an embodiment of the present disclosure.
FIG. 33 is a diagram illustrating a process of determining an intra prediction mode of a current block including a plurality of sub-blocks, according to an embodiment of the present disclosure.
FIG. 34 is a block diagram illustrating a configuration of an image encoding apparatus according to an embodiment of the present disclosure.
FIG. 35 is a flowchart illustrating an image encoding method that performs intra prediction for a current block by using an intra prediction mode, according to an embodiment of the present disclosure.

### MODE FOR THE INVENTION

As the present disclosure allows for various changes and numerous embodiments, particular embodiments will be illustrated in the drawings and described in detail in the written description. However, this is not intended to limit the present disclosure to particular modes of practice, and it is to be appreciated that all changes, equivalents, and substitutes that do not depart from the spirit and technical scope of the present disclosure are encompassed in the present disclosure.

In the description of the present disclosure, certain detailed explanations of related art are omitted when it is deemed that they may unnecessarily obscure the essence of the present disclosure. Furthermore, numbers (e.g., first, second, etc.) used in the description of an embodiment correspond to identification signs to distinguish one component from another component.

In the present disclosure, expressions such as 'at least one of a, b, or c' may denote 'a', 'b', 'c', 'a and b', 'a and c', 'b and c', 'all of a, b, and c', or modifications thereof.

In the present disclosure, when a component 'connected' or is 'coupled' to another component, the component is connected or coupled to the other component directly or, unless specified otherwise, through another component therebetween.

In the present disclosure, a component expressed by '...portion (unit),' 'module,' etc. may be formed as two or more components are incorporated into one component or one component is separated into two or more components. Furthermore, each of the components to be described below may additionally perform some or all of the functions of other components in addition to a main function thereof, and some of the main functions of each component may be exclusively performed by other components.

In the present disclosure, an 'image' may include a picture, a still image, a frame, a moving picture composed of a plurality of consecutive still images, or a video.

In the present disclosure, a 'sample' may refer to data assigned to a sampling position of an image and may include data to be subject to processing. For example, a sample may include pixels within a frame of a spatial area. A block may refer to a unit including a plurality of samples.

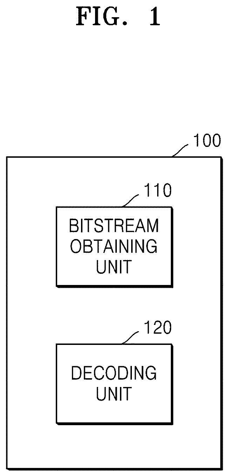

In the following description, an image encoding method and apparatus based on a coding unit of a tree structure and a transform unit, and an image decoding method and apparatus, according to an embodiment of the present disclosure, are disclosed with reference to FIGS. 1 to 19.

FIG. 1 is a block diagram of an image decoding apparatus 100 according to an embodiment of the present disclosure.

The image decoding apparatus 100 may include a bitstream obtaining unit 110 and a decoding unit 120. The bitstream obtaining unit 110 and the decoding unit 120 may each include at least one processor. In addition, the bitstream obtaining unit 110 and the decoding unit 120 may each include a memory storing instructions executed by the at least one processor.

The bitstream obtaining unit 110 may receive a bitstream. The bitstream includes information obtained by encoding an image by an image encoding apparatus 200 described below. In addition, the bitstream may be transmitted from the image encoding apparatus 200. The image encoding apparatus 200 and the image decoding apparatus 100 may be connected to each other in a wired or wireless manner, and the bitstream obtaining unit 110 may receive a bitstream in a wired or wireless manner. The bitstream obtaining unit 110 may receive a bitstream from a storage medium, such as optical media, hard disks, etc. The decoding unit 120 may reconstruct an image based on the information obtained from the received bitstream. The decoding unit 120 may obtain a syntax element for reconstructing an image from the bitstream. The decoding unit 120 may reconstruct an image based on the syntax element.

In detail, in the operation of the image decoding apparatus 100, the bitstream obtaining unit 110 may receive a bitstream.

The image decoding apparatus 100 may perform an operation of obtaining a bin string corresponding to a split shape mode of a coding unit from the bitstream. The image decoding apparatus 100 may perform an operation of determining split rules of a coding unit. In addition, the image decoding apparatus 100 may perform an operation of splitting a coding unit into a plurality of coding units, based on a bin string corresponding to the split shape mode and at least one of the split rules. In order to determine the split rules, the image decoding apparatus 100 may determine an allowable first range of a size of the coding unit, according to a ratio of the width and height of the coding unit. In order to determine the split rules, the image decoding apparatus 100 may determine an allowable second range of a size of a coding unit, according to the split shape mode of the coding unit.

In the following description, splitting of a coding unit according to an embodiment of the present disclosure is described in detail.

First, one picture may be split into one or more slices or one or more tiles. One slice or one tile may be a sequence of one or more maximum coding units (Coding Tree Unit; CTU). According to an implementation example, one slice may include one or more tiles, and one slice may include one or more maximum coding units. A slice including one or a plurality of tiles may be determined within a picture.

There is a maximum coding tree block (Coding Tree Block; CTB) that is a concept in contrast to the maximum coding unit (CTU). The maximum coding tree block (CTB) refers to an NxN block including NxN samples (N is an integer). Each color component may be split into one or more maximum coding tree blocks.

When a picture has three sample arrays (sample arrays respectively for Y, Cr, and Cb components), the maximum coding unit (CTU) is a unit including a maximum coding tree block of a luma sample, two maximum coding tree blocks of chroma samples corresponding thereto, and syntax structures used for encoding the luma sample and the chroma samples. When a picture is a monochromic picture, the maximum coding unit is a unit including a maximum coding tree block of a monochromic sample and syntax structures used for encoding the monochromic samples. When a picture is a picture that is encoded into a color plane that is separated by each color component, the maximum coding unit may be a unit including the corresponding picture and syntax structures used for samples of the picture.

One maximum coding tree block (CTB) may be split into MxN coding blocks including MxN samples (M and N are integers).

When a picture has a sample array for each of Y, Cr, and Cb components, a coding unit (CU) is a unit including a coding block of a luma sample, two coding blocks of chroma samples corresponding thereto, and syntax structures used for encoding the luma sample and the chroma samples. When a picture is a monochromic picture, the coding unit is a unit including a coding block of a monochromic sample and syntax structures used for encoding the monochromic samples. When a picture is a picture that is encoded into a color plane that is separated by each color component, the coding unit may be a unit including the corresponding picture and syntax structures used for samples of the picture.

As described above, the maximum coding tree block and the coding unit are distinct concepts, and the coding block and the coding unit are distinct concepts. In other words, a (maximum) coding unit refers to a data structure including a (maximum) coding block including a corresponding sample and a syntax structure corresponding thereto. However, as a person skilled in the art could understand that the (maximum) coding unit or the (maximum) coding block refers to a block of a predetermined size including a certain number of samples, in the specification below, the maximum coding tree block and the maximum coding unit, or the coding block and the coding unit, are mentioned without distinction unless there are special circumstances.

An image may be split into maximum coding units (CTU). The size of the maximum coding unit may be determined based on information obtained from a bitstream. The shape of the maximum coding unit may have a square of the same size. However, the present disclosure is not limited thereto.

For example, information about the maximum size of a luma coding block may be obtained from the bitstream. For example, the maximum size of a luma coding block indicated by the information about the maximum size of a luma coding block may be one of 4x4, 8x8, 16x16, 32x32, 64x64, 128x128, and 256x256.

For example, information about the difference between the maximum size of a luma coding block where binary split is possible and the size of a luma block may be obtained from the bitstream. The information about the luma block size difference may indicate the difference between the luma maximum coding unit and the maximum luma coding block where binary split is possible. Accordingly, by combining the information about the maximum size of a luma coding block where binary split is possible and the information about the luma block size difference obtained from the bitstream, the size of the luma maximum coding unit may be determined. The size of the chroma maximum coding unit may be determined by using the size of the luma maximum coding unit. For example, when a ratio of Y:Cb:Cr is 4:2:0 according to a color format, the size of a chroma block may be half the size of a luma block, and likewise the size of a chroma maximum coding unit may be half the size of a luma maximum coding unit.

According to an embodiment, as the information about the maximum size of a luma coding block where binary split is possible is obtained from the bitstream, the maximum size of a luma coding block where binary split is possible may be determined variably. Unlike the above, the maximum size of a luma coding block where ternary split is possible may be fixed. For example, in I picture, the maximum size of a luma coding block where ternary split is possible may be 32x32, and in P picture or B picture, the maximum size of a luma coding block where ternary split is possible may be 64x64.

In addition, the maximum coding unit may be hierarchically split into coding units based on the split shape mode information obtained from the bitstream. As the split shape mode information, at least one of information indicating whether quad split is possible, information indicating whether multi-split is possible, split direction information, or split type information may be obtained from the bitstream.

For example, the information indicating whether quad split is possible may indicate whether a current coding unit may be quad split (QUAD_SPLIT) or may not be quad split.

When the current coding unit is not quad split, the information indicating whether multi-split is possible may indicate whether the current coding unit may be no longer split (NO_SPLIT) or may be binary/ternary split.

When the current coding unit is binary split or ternary split, the split direction information indicates that the current coding unit is split in one of a horizontal direction or a vertical direction.

When the current coding unit is split in the horizontal or vertical direction, the split type information indicates that the current coding unit is split by binary split or ternary split.

The split mode of the current coding unit may be determined according to the split direction information and the split type information. The split mode when the current coding unit is binary split in the horizontal direction may be determined as a binary horizontal split (SPLIT_BT_HOR), the split mode when the current coding unit is ternary split in the horizontal direction may be determined as a ternary horizontal split (SPLIT_TT_HOR), the split mode when the current coding unit is binary split in the vertical direction may be determined as a binary vertical split (SPLIT_BT_VER), and the split mode when the current coding unit is ternary split in the vertical direction may be determined as a ternary vertical split (SPLIT_TT_VER).

The image decoding apparatus 100 may obtain, from the bitstream, the split shape mode information from one bin string. The form of the bitstream received by the image decoding apparatus 100 may include fixed length binary code, unary code, truncated unary code, predetermined binary code, etc. The bin string indicates information as a sequence of binary numbers. The bin string may include at least one bit. The image decoding apparatus 100 may obtain the split shape mode information corresponding to the bin string based on the split rules. The image decoding apparatus 100 may determine whether to quad split the coding unit or not, or determine the split direction and split type, based on one bin string.

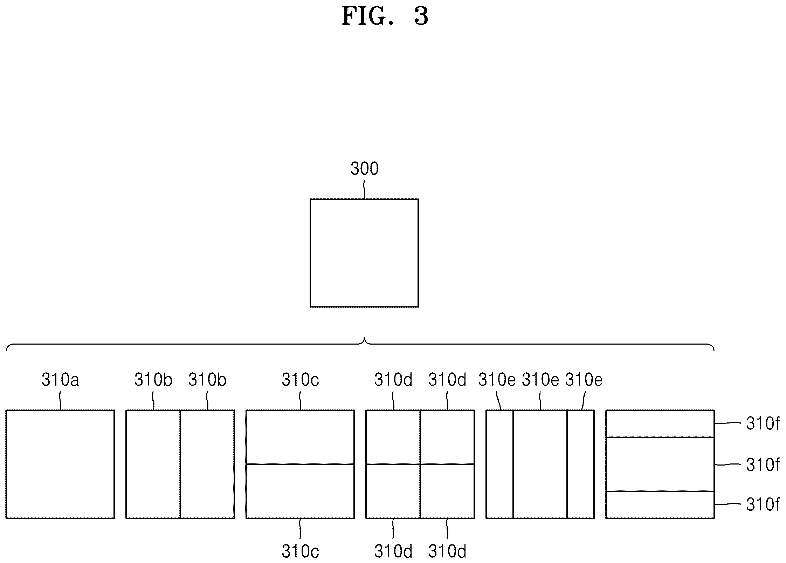

The coding unit may be the same as or less than the maximum coding unit. For example, the maximum coding unit that is a coding unit having the maximum size is one of the coding units. When the split shape mode information about the maximum coding unit indicates not being split, the coding unit determined in the maximum coding unit may have the same size as the maximum coding unit. When the split shape mode information about the maximum coding unit indicates being split, the maximum coding unit may be split into coding units. In addition, when the split shape mode information about the coding unit indicates being split, the coding units may be split into coding units having a smaller size. However, the split of an image is not limited thereto, and the maximum coding unit and the coding unit may not be distinguished. The split of the coding unit is described in detail with reference to FIGS. 3 to 16.

In addition, one or more prediction blocks for prediction may be determined from the coding unit. The prediction block may be the same as or less than the coding unit. In addition, one or more transform blocks for transform may be determined from the coding unit. The transform block may be the same as or smaller than the coding unit.

The shape and size of the transform block and the prediction block may not be relevant to each other.

In another embodiment, prediction may be performed by using the coding unit as a prediction block. In addition, transform may be performed by using the coding unit as a transform block.

The split of the coding unit is described in detail with reference to FIGS. 3 to 16. The current block and a surrounding block of the present disclosure may indicate one of the maximum coding unit, the coding unit, the prediction block, and the transform block. Furthermore, the current block or the current coding unit may be a block on which decoding or encoding is currently performed or a block on which split is currently performed. The surrounding block may be a block that is reconstructed before the current block. The surrounding block may be spatially or temporally adjacent to the current block. The surrounding block may be located on one of the lower left side, left side, upper left side, upper side, upper right side, right side, and lower right side of the current block.

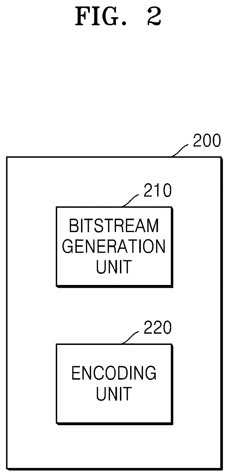

FIG. 2 is a block diagram of the image encoding apparatus 200 capable of encoding an image based on at least one of block shape information or split shape mode information, according to an embodiment of the present disclosure.

The image encoding apparatus 200 may include an encoding unit 220 and the bitstream generation unit 210. The encoding unit 220 may receive an input image to encode the input image. The encoding unit 220 may encode the input image to obtain at least one syntax element. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, a delta QP, a reference index, a prediction direction, or a transform index. The encoding unit 220 may determine a context model based on the block shape information including at least one of a shape, a direction, a width to height ratio, or a size of a coding unit.

The bitstream generation unit 210 may generate a bitstream based on an encoded input image. For example, the bitstream generation unit 210 may generate a bitstream by entropy encoding the syntax element based on a context model. In addition, the image encoding apparatus 200 may transmit the bitstream to the image decoding apparatus 100.

According to an embodiment of the present disclosure, the encoding unit 220 of the image encoding apparatus 200 may determine the shape of a coding unit. For example, the coding unit may have a square or non-square shape, and information indicating the shape may be included in the block shape information.

According to an embodiment of the present disclosure, the encoding unit 220 may determine the shape in which the coding unit is split. The encoding unit 220 may determine the shape of at least one coding unit included in the coding unit, and the bitstream generation unit 210 may generate a bitstream including the split shape mode information including information about the shape of a coding unit.

According to an embodiment of the present disclosure, the encoding unit 220 may determine whether the coding unit is split or not. When the encoding unit 220 determines that the coding unit includes only one coding unit or not splitting, the bitstream generation unit 210 may generate a bitstream including split shape mode information indicating not splitting. In addition, the encoding unit 220 may split the coding unit into a plurality of coding units included in the coding unit, and the bitstream generation unit 210 may generate a bitstream including split shape mode information indicating that the coding unit is split into a plurality of coding units.

According to an embodiment of the present disclosure, the split shape mode information may include information indicating how many coding units the coding unit is split into or in which direction the coding unit is split. For example, the split shape mode Information may indicate that the coding unit is split in at least one of the vertical and horizontal directions, or that the coding unit does is not split.

The image encoding apparatus 200 may determine information about the split shape mode based on the split shape mode of a coding unit. The image encoding apparatus 200 may determine a context model based on at least one of the shape, direction, width to height ratio, or a size of a coding unit. The image encoding apparatus 200 may generate, as a bitstream, information about the split shape mode for splitting the coding unit, based on the context model.

In order to determine the context model, the image encoding apparatus 200 may obtain an array for matching at least one of the shape, direction, width to height ratio, size of a coding unit, or an index for a context model. The image encoding apparatus 200 may obtain the index for a context model, from the array, based on at least one of the shape, direction, width to height ratio, or a size of a coding unit. The image encoding apparatus 200 may determine the context model based on the index for a context model.

In order to determine the context model, the image encoding apparatus 200 may determine the context model further based on the block shape information including at least one of the shape, direction, width to height ratio, or a size of a surrounding coding unit adjacent to the coding unit. In addition, the surrounding coding unit may include at least one of coding units located on the lower left side, left side, upper left side, upper side, upper right side, right side, or lower right side.

Furthermore, in order to determine the context model, the image encoding apparatus 200 may compare the length of the width of a surrounding coding unit on the upper side with the length of the width of the coding unit. Furthermore, the image encoding apparatus 200 may compare the length of the height of surrounding coding units on the left and right sides with the length of the height of the coding unit. Furthermore, the image encoding apparatus 200 may determine the context model based on the comparison results.

As the operation of the image encoding apparatus 200 is similar to the operation of the image decoding apparatus 100 described with reference to FIGS. 3 to 19, a detailed description thereof is omitted.

FIG. 3 illustrates a process, performed by the image decoding apparatus 100, of determining at least one coding unit by splitting a current coding unit, according to an embodiment of the present disclosure.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. The block shape information is information indicating at least one of the shape, direction, width to height ratio, or a size of a coding unit.

The shape of a coding unit may include a square and a non-square. When the lengths of the width and the height of a coding unit is the same (i.e., when the block shape of a coding unit is 4Nx4N), the image decoding apparatus 100 may determine the block shape information of a coding unit as a square. The image decoding apparatus 100 may determine the shape of a coding unit as a non-square.

When the lengths of the width and the height of a coding unit are different from each other (i.e., when the block shape of a coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of a coding unit as a non-square. When the shape of a coding unit is a non-square, the image decoding apparatus 100 may determine the width to height ratio of the block shape information of a coding unit as at least one of 1:2, 2:1, 1:4, 4:1, 1:8, 8:1, 1:16, 16:1, 1:32, or 32:1. Furthermore, the image decoding apparatus 100 may determine whether a coding unit is in a horizontal direction or a vertical direction, based on the width of the coding unit and the height of the coding unit. Furthermore, the image decoding apparatus 100 may determine the size of a coding unit based on at least one of the length of the width, the length of the height, or the area of a coding unit.

According to an embodiment of the present disclosure, the image decoding apparatus 100 may determine the shape of a coding unit by using the block shape information and the shape in which a coding unit is split by using the split shape mode information. In other words, a coding unit split method indicated by the split shape mode information may be determined according to the block shape indicated by the block shape information used by the image decoding apparatus 100.

The image decoding apparatus 100 may obtain the split shape mode information from the bitstream. However, the present disclosure is not limited thereto, and the image decoding apparatus 100 and the image encoding apparatus 200 may determine the split shape mode information that is predetermined based on the block shape information. The image decoding apparatus 100 may determine predetermined split shape mode information with respect to the maximum coding unit or the minimum coding unit. For example, the image decoding apparatus 100 may determine the split shape mode information as a quad split with respect to the maximum coding unit. Furthermore, the image decoding apparatus 100 may determine the split shape mode information as "not splitting" with respect to the minimum coding unit. In detail, the image decoding apparatus 100 may determine the size of the maximum coding unit as 256x256. The image decoding apparatus 100 may determine the predetermined split shape mode information as a quad split. The quad split is a split shape mode in which both the width and height of a coding unit are bisected. The image decoding apparatus 100 may obtain a coding unit having a 128x128 size from a maximum coding unit having a 256x256 size based on the split shape mode information. In addition, the image decoding apparatus 100 may determine the size of the minimum coding unit as 4x4. The image decoding apparatus 100 may obtain split shape mode information indicating "not splitting" with respect to the minimum coding unit.

According to an embodiment of the present disclosure, the image decoding apparatus 100 may use block shape information indicating that a current coding unit has a square shape. For example, the image decoding apparatus 100 may determine whether to not split a square coding unit, split the same vertically, split the same horizontally, or split the same into four coding units, based on the split shape mode information. Referring to FIG. 3, when block shape information of a current coding unit 300 indicates a square shape, the decoding unit 120 may not split a coding unit 310a having the same size as the current coding unit 300 based on split shape mode information indicating not splitting, or may determine coding units 310b, 310c, 310d, 310e, and 310f that are split based on split shape mode information indicating a predetermined split method.

Referring to FIG. 3, according to an embodiment of the present disclosure, the image decoding apparatus 100 may determine two coding units 310b obtained by splitting the current coding unit 300 in the vertical direction, based on split shape mode information indicating splitting in the vertical direction. The image decoding apparatus 100 may determine two coding units 310c obtained by splitting the current coding unit 300 in the horizontal direction, based on split shape mode information indicating splitting in the horizontal direction. The image decoding apparatus 100 may determine four coding units 310d obtained by splitting the current coding unit 300 in the vertical direction and the horizontal direction, based on split shape mode information indicating splitting in the vertical direction and the horizontal direction. According to an embodiment of the present disclosure, the image decoding apparatus 100 may determine three coding units 310e obtained by splitting the current coding unit 300 in the vertical direction, based on split shape mode information indicating ternary splitting in the vertical direction. The image decoding apparatus 100 may determine three coding units 310f obtained by splitting the current coding unit 300 in the horizontal direction, based on split shape mode information indicating ternary splitting in the horizontal direction. However, the split shape in which a square coding unit may be split are not limited to the shapes described above, and various shapes that may be indicated by the split shape mode information may be included. A certain split shape in which a square coding unit is split is described below in detail through an embodiment of the present disclosure.

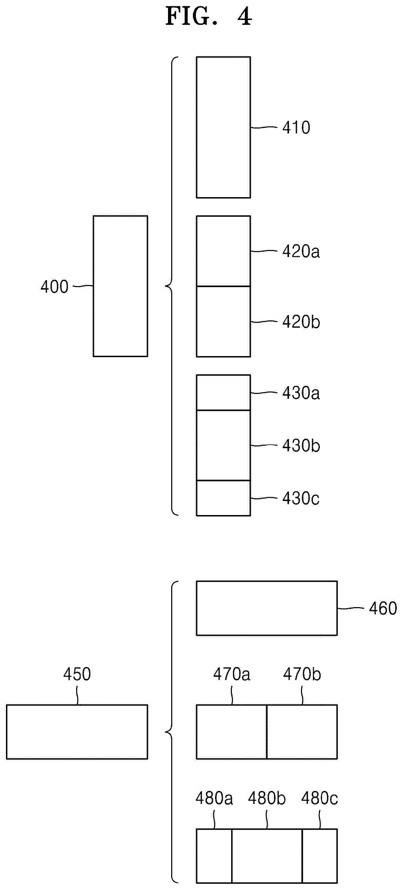

FIG. 4 illustrates a process, performed by the image decoding apparatus 100, of determining at least one coding unit by splitting a coding unit having a non-square shape, according to an embodiment of the present disclosure.

According to an embodiment of the present disclosure, the image decoding apparatus 100 may use block shape information indicating that a current coding unit is a non-square shape. The image decoding apparatus 100 may determine whether to not split a non-square current coding unit or to split the non-square current coding unit by a certain method, based on the split shape mode information. Referring to FIG. 4, when block shape information of a current coding unit 400 or 450 indicates a non-square shape, the image decoding apparatus 100 may determine a coding unit 410 or 460 having the same size as the current coding unit 400 or 450 based on split shape mode information indicating not splitting, or determine a coding unit 420a, 420b, 430a, 430b, 430c, 470a, 470b, 480a, 480b, or 480c split based on split shape mode information indicating a certain split method. The certain split method of splitting a non-square coding unit is described below in detail through an embodiment of the present disclosure.

According to an embodiment of the present disclosure, the image decoding apparatus 100 may determine the shape in which a coding unit is split, by using the split shape mode information, and in this case, the split shape mode information may indicate the number of at least one coding unit generated as the coding unit is split. Referring to FIG. 4, when the split shape mode information indicates that the current coding unit 400 or 450 is split into two coding units, the image decoding apparatus 100 may determine two coding units 420a and 420b, or 470a and 470b, included in the current coding unit 400 or 450 by splitting the current coding unit 400 or 450, based on the split shape mode information.

According to an embodiment of the present disclosure, when the image decoding apparatus 100 splits the current coding unit 400 or 450 having a non-square shape based on the split shape mode information, the image decoding apparatus 100 may split the current coding unit 400 or 450 considering the position of a long side of the current coding unit 400 or 450 that is a non-square. For example, considering the shape of the current coding unit 400 or 450, the image decoding apparatus 100 may determine a plurality of coding units by splitting the current coding unit 400 or 450 in a direction in which the long side of the current coding unit 400 or 450 is split.

According to an embodiment of the present disclosure, when the split shape mode information indicates that a coding unit is split (ternary split) into an odd number of blocks, the image decoding apparatus 100 may determine an odd number of coding units included in the current coding unit 400 or 450. For example, when the split shape mode information indicates that the current coding unit 400 or 450 is split into three coding units, the image decoding apparatus 100 may split the current coding unit 400 or 450 into three coding units 430a, 430b, and 430c, or 480a, 480b, and 480c.

According to an embodiment of the present disclosure, the width to height ratio of the current coding unit 400 or 450 may be 4:1 or 1:4. When the width to height ratio is 4:1, the length of the width is greater than the length of the height so that the block shape information may indicate the horizontal direction. When the width to height ratio is 1:4, the length of the width is less than the length of the height so that the block shape information may indicate the vertical direction. The image decoding apparatus 100 may determine to split a current coding unit into an odd number of blocks based on the split shape mode information. In addition, the image decoding apparatus 100 may determine the split direction of the current coding unit 400 or 450 based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. In addition, when the current coding unit 450 is in the horizontal direction, the image decoding apparatus 100 may determine the coding units 480a, 480b, and 480c by splitting the current coding unit 450 in the vertical direction.

According to an embodiment of the present disclosure, the image decoding apparatus 100 may determine an odd number of coding units included in the current coding unit 400 or 450, but the sizes of all the determined coding units may not be identical. For example, among the determined odd-numbered coding units 430a, 430b, 430c, 480a, 480b, and 480c, the size of a certain coding unit 430b or 480b may be different from the sizes of the other coding units 430a, 430c, 480a, and 480c. In other words, the coding units that may be determined by splitting the current coding unit 400 or 450 may have a plurality of types of sizes, and in some cases, the odd-numbered coding units 430a, 430b, and 430c, or 480a, 480b, and 480c, may have different sizes.

According to an embodiment of the present disclosure, when the split shape mode information indicates that a coding unit is split into an odd number of blocks, the image decoding apparatus 100 may determine an odd number of coding units included in the current coding unit 400 or 450, and furthermore, the image decoding apparatus 100 may place a certain limit on at least one coding unit among the odd-numbered coding units generated through split. Referring to FIG. 4, the image decoding apparatus 100 may differentiate a decoding process for the coding units 430b and 480b positioned in the middle from the process for the other coding units 430a, 430c, 480a, and 480c, among the three coding units 430a, 430b, and 430c, or 480a, 480b, and 480c, generated by splitting the current coding unit 400 or 450. For example, the image decoding apparatus 100 may restrict the coding units 430b and 480b positioned in the middle, unlike the other coding units 430a, 430c, 480a, and 480c, from being split any more or split only a certain number of times.

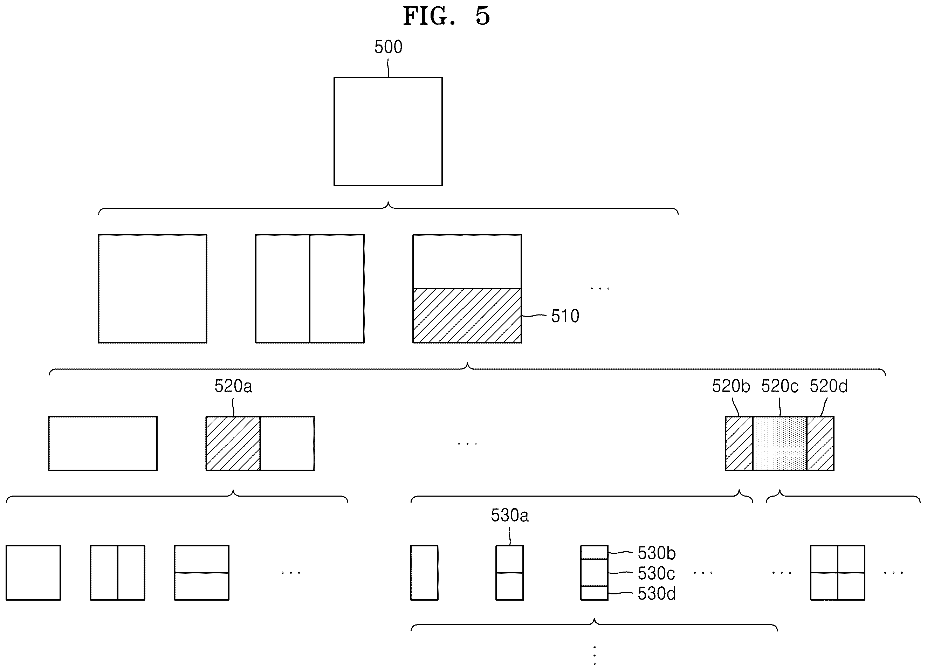

FIG. 5 illustrates a process, performed by the image decoding apparatus 100, of splitting a coding unit based on at least one of the block shape information and the split shape mode information, according to an embodiment of the present disclosure.

According to an embodiment of the present disclosure, the image decoding apparatus 100 may determine whether to split or not split a first coding unit 500 in a square shape into coding units, based on at least one of the block shape information or the split shape mode information. According to an embodiment of the present disclosure, when the split shape mode information indicates that the first coding unit 500 is split in the horizontal direction, the image decoding apparatus 100 may determine a second coding unit 510 by splitting the first coding unit 500 in the horizontal direction. According to an embodiment of the present disclosure, a first coding unit, a second coding unit, and a third coding unit used herein are terms used for understanding the relationship between coding units before and after splitting. For example, when the first coding unit is split, the second coding unit may be determined, and when the second coding unit is split, the third coding unit may be determined. The relationship among the first coding unit, the second coding unit, and the third coding unit in the following description may be understood as following the characteristics described above.

According to an embodiment of the present disclosure, the image decoding apparatus 100 may determine whether to split or not split the second coding unit 510 that is determined, into coding units, based on based on the split shape mode information. Referring to FIG. 5, the image decoding apparatus 100 may split the second coding unit 510 in a non-square shape determined by splitting the first coding unit 500 into at least one of third coding units 520a, 520b, 520c, 520d, etc., or may not split the second coding unit 510, based on the split shape mode information. The image decoding apparatus 100 may obtain split shape mode information and the image decoding apparatus 100 may split the first coding unit 500 into a plurality of second coding units (e.g., 510) in various shapes based on the obtained split shape mode information, and the second coding unit 510 may be split according to the method in which the first coding unit 500 is split, based on the split shape mode information. According to an embodiment of the present disclosure, when the first coding unit 500 is split into the second coding unit 510 based on the split shape mode information for the first coding unit 500, the second coding unit 510 may also be split into the third coding units (e.g., 520a, 520b, 520c, 520d, etc.) based on the split shape mode information for the second coding unit 510. In other words, the coding unit may be recursively split based on the split shape mode information related to each coding unit. Accordingly, a square coding unit may be determined from a coding unit in a non-square shape, and as the coding unit in a square shape is recursively split, a coding unit in a non-square shape may be determined.

Referring to FIG. 5, among the odd-numbered third coding units 520b, 520c, and 520d that are determined as the second coding unit 510 in a non-square shape is split, a certain coding unit (e.g., a coding unit positioned in the middle or a coding unit in a square shape) may be recursively split. According to an embodiment of the present disclosure, the third coding unit 520b in a non-square shape that is one of the odd-numbered third coding units 520b, 520c, and 520d may be split in the horizontal direction into a plurality of fourth coding units. Fourth coding unit 530b or 530d in a non-square shape that is one of the fourth coding units 530a, 530b, 530c, and 530d may be split again into a plurality of coding units. For example, the fourth coding unit 530b or 530d in a non-square shape may be split again into an odd number of coding units. A method used for recursive split of a coding unit is described below through an embodiment of the present disclosure.

According to an embodiment of the present disclosure, the image decoding apparatus 100 may split each of the third coding units 520a, 520b, 520c, 520d, etc. into a plurality of coding units based on the split shape mode information. In addition, the image decoding apparatus 100 may determine not splitting the second coding unit 510 based on the split shape mode information. According to an embodiment of the present disclosure, the image decoding apparatus 100 may split the second coding unit 510 in a non-square shape into the odd-numbered third coding units 520b, 520c, and 520d. The image decoding apparatus 100 may place a certain limit on a certain third coding unit among the odd-numbered third coding units 520b, 520c, and 520d. For example, the image decoding apparatus 100 may restrict the coding unit 520c positioned in the middle among the odd-numbered third coding units 520b, 520c, and 520d from being split any more or split a certain number of times.

Referring to FIG. 5, the image decoding apparatus 100 may restrict the coding unit 520c positioned in the middle among the odd-numbered third coding units 520b, 520c, and 520d included in the second coding unit 510 in a non-square shape from being split any more, split into a certain split shape (e.g., split into only four coding units or into a shape corresponding to the split shape of the second coding unit 510), or split only a certain number (e.g., split n times only, where n>0). However, it should be not interpreted that the present disclosure is limited to the embodiments described above because the restriction on the coding unit 520c positioned in the middle is a mere simple embodiment, and it should be interpreted that the present disclosure includes various restrictions by which the coding unit 520c positioned in the middle is decoded differently from the other coding units 520b and 520d.

According to an embodiment of the present disclosure, the image decoding apparatus 100 may obtain the split shape mode information used for splitting the current coding unit at a certain position within the current coding unit.

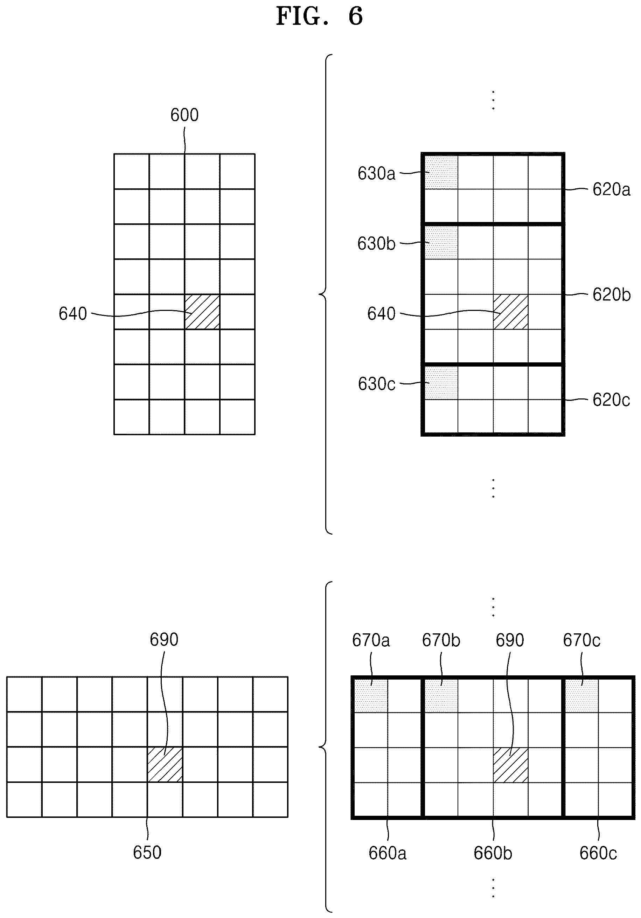

FIG. 6 illustrates a method, performed by the image decoding apparatus 100, of determining a certain coding unit among an odd number of coding units, according to an embodiment of the present disclosure.

Referring to FIG. 6, the split shape mode information of a current coding unit 600 or 650 may be obtained from a sample at a certain position (e.g., a sample 640 or 690 positioned in the middle) among a plurality of samples included in the current coding unit 600 or 650. However, it should not be interpreted that a certain position within the current coding unit 600 where at least one piece of the split shape mode information may be obtained is limited to the center position illustrated in in FIG. 6, and it should be interpreted that the certain position may include various positions (e.g., a top side, a bottom side, a left side, a right side, an upper left side, a lower left side, an upper right side, a lower right side, etc.) that may be included in the current coding unit 600. The image decoding apparatus 100 may obtain split shape mode information obtained from a certain position to determine whether to split or not split the current coding unit into coding units having various shapes and sizes.

According to an embodiment of the present disclosure, when the current coding unit is split into a certain number of coding units, the image decoding apparatus 100 may select one coding unit therefrom. There may be various methods for selecting one of a plurality of coding units, and these methods are described below through an embodiment of the present disclosure.

According to an embodiment of the present disclosure, the image decoding apparatus 100 may split the current coding unit into a plurality of coding units to determine a coding unit at a certain position.

According to an embodiment of the present disclosure, in order to determine a coding unit positioned in the middle among an odd number of coding units, the image decoding apparatus 100 may use information indicating the position of each of the odd number of coding units. Referring to FIG. 6, the image decoding apparatus 100 may split the current coding unit 600 or the current coding unit 650 to determine the odd-numbered coding units 620a, 620b, and 620c or the odd-numbered coding units 660a, 660b, and 660c. The image decoding apparatus 100 may determine the coding unit 620b in the middle or the coding unit 660b in the middle by using information about the positons of the odd-numbered coding units 620a, 620b, and 620c or the odd-numbered coding units 660a, 660b, and 660c. For example, the image decoding apparatus 100 may determine the coding unit 620b positioned in the middle by determining the positions of the coding units 620a, 620b, and 620c based on information indicating the position of a certain sample included in the coding units 620a, 620b, and 620c. In detail, the image decoding apparatus 100 may determine the coding unit 620b positioned in the middle by determining the positions of the coding units 620a, 620b, and 620c based on information indicating the positions of the samples 630a, 630b, and 630c on the upper left side of the coding units 620a, 620b, and 620c.

According to an embodiment of the present disclosure, information indicating the positions of the samples 630a, 630b, and 630c on the upper left side respectively included in the coding units 620a, 620b, and 620c may include information about the positions or coordinates of the coding units 620a, 620b, and 620c within a picture. According to an embodiment of the present disclosure, the information indicating the positions of the samples 630a, 630b, and 630c on the upper left side respectively included in the coding units 620a, 620b, and 620c may include information indicating the widths or heights of the coding units 620a, 620b, and 620c included in the current coding unit 600, and the widths or heights may correspond to information indicating the difference between the coordinates of the coding units 620a, 620b, and 620c within a picture. In other words, the image decoding apparatus 100 may determine the coding unit 620b positioned in the middle by using directly information about the positions or coordinates of the coding units 620a, 620b, and 620c within a picture or using information about the width or height of a coding unit corresponding to a difference value between the coordinates.

According to an embodiment of the present disclosure, information indicating the position of the sample 630a on the upper left side of the coding unit 620a on the top side may indicate a coordinate (xa, ya), information indicating the position of the sample 530b on the upper left side of the coding unit 620b in the middle may indicate a coordinate (xb, yb), and information indicating the position of the sample 630c on the upper left side of the coding unit 620c on the bottom side may indicate a coordinate (xc, yc). The image decoding apparatus 100 may determine the coding unit 620b in the middle by using the coordinates of the samples 630a, 630b, and 630c on the upper left side respectively included in the coding units 620a, 620b, and 620c. For example, when the coordinates of the samples 630a, 630b, and 630c on the upper left side are sorted in an ascending order or descending order, the coding unit 620b including (xb, yb) that is a coordinate of the sample 630b positioned in the middle may be determined as a coding unit positioned in the middle among the coding units 620a, 620b, and 620c determined by splitting the current coding unit 600. However, the coordinate indicating the positions of the samples 630a, 630b, and 630c on the upper left side may indicate a coordinate indicating the absolute position within a picture, and furthermore, based on the position of the sample 630a on the upper left side of the coding unit 620a on the top side, a coordinate (dxb, dyb) that is information indicating a relative position of the sample 630b on the upper left side of the coding unit 620b in the middle, and a coordinate (dxc, dyc) that is information indicating a relative position of the sample 630c on the upper left side of the coding unit 620c on the bottom side, may be used. In addition, it should not be interpreted that a method of determining the position of a coding unit at a certain position by using the coordinate of a sample as the information indicating the position of the corresponding sample included in a coding unit is limited to the method described above, and it should be interpreted that various arithmetic methods capable of using the coordinate of the sample are used.

According to an embodiment of the present disclosure, the image decoding apparatus 100 may split the current coding unit 600 into the coding units 620a, 620b, and 620c, and may select a coding unit among the coding units 620a, 620b, and 620c according to a certain reference. For example, the image decoding apparatus 100 may select the coding unit 620b having a difference size among the coding units 620a, 620b, and 620c.

According to an embodiment of the present disclosure, the image decoding apparatus 100 may determine the width or height of each of the coding units 620a, 620b, and 620c by using the coordinate (xa, ya) that is the information indicating the position of the sample 630a on the upper left side of the coding unit 620a on the top side, the coordinate (xb, yb) that is the information indicating the position of the sample 630b on the upper left side in the coding unit 620b in the middle, and the coordinate (xc, yc) that is the information indicating the position of the sample 630c on the upper left side in the coding unit 620c on the bottom side. The image decoding apparatus 100 may determine the size of each of the coding units 620a, 620b, and 620c by using the coordinates (xa, ya), (xb, yb), and (xc, yc) indicating the positions of the coding units 620a, 620b, and 620c. According to an embodiment of the present disclosure, the image decoding apparatus 100 may determine the width of the coding unit 620a on the top side as the width of the current coding unit 600. The image decoding apparatus 100 may determine the height of the coding unit 620a on the top side as yb-ya. According to an embodiment of the present disclosure, the image decoding apparatus 100 may determine the width of the coding unit 620b in the middle as the width of the current coding unit 600. The image decoding apparatus 100 may determine the height of the coding unit 620b in the middle as yc-yb. According to an embodiment of the present disclosure, the image decoding apparatus 100 may determine the width or height of the coding unit on the bottom side by using the width or height of the current coding unit and the widths and heights of the coding unit 620a on the top side and the coding unit 620b in the middle. The image decoding apparatus 100 may determine a coding unit having a different size from the other coding units based on the widths and heights of the coding units 620a, 620b, and 620c that are determined. Referring to FIG. 6, the image decoding apparatus 100 may determine the coding unit 620b in the middle having a different size from the coding unit 620a on the top side and the coding unit 620c on the bottom side as a coding unit at a certain position. However, the process of determining a coding unit having a different size from other coding units by the image decoding apparatus 100 described above is a mere embodiment of determining a coding unit at a certain position by using the size of a coding unit determined based on the sample coordinates, various processes of determining a coding unit at a certain position by comparing the sizes of coding units determined according to certain sample coordinates may be used.

The image decoding apparatus 100 may determine the width or height of each of the coding units 660a, 660b, and 660c by using a (xd, yd) coordinate that is information indicating the position of a sample 670a on the upper left side of the coding unit 660a on the left side, a (xe, ye) coordinate that is information indicating the position of a sample 670b on the upper left side of the coding unit 660b in the middle, and a (xf, yf) coordinate that is information indicating the position of a sample 670c on the upper left side of the coding unit 660c on the right side. The image decoding apparatus 100 may determine the size of each of the coding units 660a, 660b, and 660c by using the coordinates (xd, yd), (xe, ye), (xf, yf) indicating the positions of the coding units 660a, 660b, and 660c.

According to an embodiment of the present disclosure, the image decoding apparatus 100 may determine the width of the coding unit 660a on the left side as xe-xd. The image decoding apparatus 100 may determine the height of the coding unit 660a on the left side as the height of the current coding unit 650. According to an embodiment of the present disclosure, the image decoding apparatus 100 may determine the width of the coding unit 660b in the middle as xf-xe. The image decoding apparatus 100 may determine the height of the coding unit 660b in the middle as the height of the current coding unit 600. According to an embodiment of the present disclosure, the image decoding apparatus 100 may determine the width or height of the coding unit 660c on the right side by using the width or height of the current coding unit 650 and the widths and heights of the coding unit 660a on the left side and the coding unit 660b in the middle. The image decoding apparatus 100 may determine the coding unit having a different size from other coding units based on the determined widths and heights of the coding units 660a, 660b, and 660c. Referring to FIG. 6, the image decoding apparatus 100 may determine the coding unit 660b in the middle having a different size from the coding unit 660a on the left side and the coding unit 660c on the right side, as the coding unit at a certain position. However, the process of determining a coding unit having a different size from other coding units by the image decoding apparatus 100 described above is a mere embodiment of determining a coding unit at a certain position by using the size of a coding unit determined based on the sample coordinates, various processes of determining a coding unit at a certain position by comparing the sizes of coding units determined certain sample coordinates may be used.

However, it should not be interpreted that the position of a sample to be considered to determine the position of a coding unit is limited to the upper left side described above, and it may be interpreted that information about the position of a certain sample included in a coding unit may be used.

According to an embodiment of the present disclosure, considering the shape of the current coding unit, the image decoding apparatus 100 may select a coding unit at a certain position among the odd-numbered coding units that are determined by splitting the current coding unit. For example, when the current coding unit is in a non-square shape in which the width is longer than the height, the image decoding apparatus 100 may determine a coding unit at a certain position in the horizontal direction. In other words, the image decoding apparatus 100 may determine one of coding units having different positions in the horizontal direction to place a limit on the corresponding coding unit. When the current coding unit is in a non-square shape in which the height is longer than the width, the image decoding apparatus 100 may determine a coding unit at a certain position in the vertical direction. In other words, the image decoding apparatus 100 may determine one of coding units having different positions in the vertical direction to place a limit on the corresponding coding unit.

According to an embodiment of the present disclosure, the image decoding apparatus 100 may use information indicating the position of each of the even-numbered coding units to determine a coding unit at a certain position among an even-number of coding units. The image decoding apparatus 100 may determine the even-numbered coding units by splitting (binary splitting) the current coding unit or determine a coding unit at a certain position by using information about the positions of the even-numbered coding units. A description on the detailed process thereof is omitted as the process corresponds to the process of determining a coding unit at a certain position (e.g., the middle position) of the odd-numbered coding units described above with reference to FIG. 6.

According to an embodiment of the present disclosure, when a current coding unit in a non-square shape is split into a plurality of coding units, to determine a coding unit at a certain position among the plurality of coding units, certain information about a coding unit at a certain position may be used in the split process. For example, the image decoding apparatus 100 may use at least one of the block shape information or the split shape mode information stored in a sample included in the coding unit in the middle in the split process to determine a coding unit positioned in the middle.

Referring to FIG. 6, the image decoding apparatus 100 may split the current coding unit 600 into the coding units 620a, 620b, and 620c based on the split shape mode information, and may determine the coding unit 620b positioned in the middle among the coding units 620a, 620b, and 620c. Furthermore, considering the position where the split shape mode information is obtained, the image decoding apparatus 100 may determine the coding unit 620b positioned in the middle. In other words, the split shape mode information of the current coding unit 600 may be obtained from the sample 640 positioned in the middle of the current coding unit 600, and when the current coding unit 600 is split into the coding units 620a, 620b, and 620c based on the split shape mode information, the coding unit 620b including the sample 640 may be determined as a coding unit positioned in the middle. However, it should not be interpreted that the information used for determining a coding unit positioned in the middle is limited to the split shape mode information, and various types of information may be used in a process of determining a coding unit positioned in the middle.

According to an embodiment of the present disclosure, certain information for identifying a coding unit at a certain position may be obtained from a certain sample included in a coding unit to be determined. Referring to FIG. 6, to determine a coding unit at a certain position (e.g., a coding unit positioned in the middle among a plurality of coding units that are split) among the coding units 620a, 620b, and 620c determined by splitting the current coding unit 600, the image decoding apparatus 100 may use the split shape mode information obtained from a sample at a certain position within the current coding unit 600 (e.g., a sample positioned in the middle of the current coding unit 600). In other words, considering the block shape of the current coding unit 600, the image decoding apparatus 100 may determine the sample at a certain position, and the image decoding apparatus 100 may determine the coding unit 620b including a sample from which certain information (e.g., split shape mode information) may be obtained, among the coding units 620a, 620b, and 620c determined by splitting the current coding unit 600, and may place a certain limit thereon. Referring to FIG. 6, according to an embodiment of the present disclosure, the image decoding apparatus 100 may determine the sample 640 positioned in the middle of the current coding unit 600 as a sample from which certain information may be obtained, and the image decoding apparatus 100 may place a certain limit on the coding unit 620b including the sample 640 in the decoding process. However, it should not be interpreted that the position of a sample from which certain information may be obtained is limited to the position described above, and it may be interpreted that the sample is at a certain position included in the coding unit 620b to be determined to place a limit on.

According to an embodiment of the present disclosure, the position of a sample from which certain information may be obtained may be determined according to the shape of the current coding unit 600. According to an embodiment of the present disclosure, the block shape information may determine whether the shape of the current coding unit is a square or a non-square, and the position of a sample from which certain information may be obtained may be determined according to the shape. For example, the image decoding apparatus 100 may determine a sample positioned on a boundary at which at least one of the width or height of a current coding unit is split half, as a sample from which certain information may be obtained, by using at least one of information about the width of a current coding unit and information about the height thereof. In another example, when the block shape information related to the current coding unit indicates a non-square shape, the image decoding apparatus 100 may determine one of samples adjacent to the boundary that splits the long side of the current coding unit in half, as a sample from which certain information may be obtained.

According to an embodiment of the present disclosure, when the current coding unit is split into a plurality of coding units, to determine a coding unit at a certain position among the plurality of coding units, the image decoding apparatus 100 may use the split shape mode information. According to an embodiment of the present disclosure, the image decoding apparatus 100 may obtain the split shape mode information from a sample at a certain position included in a coding unit, and the image decoding apparatus 100 may split a plurality of coding units generated by splitting the current coding unit by using the split shape mode information obtained from a sample at a certain position included in each of the coding units. In other words, the coding unit may be recursively split by using the split shape mode information obtained from a sample at a certain position included in each of the coding units. As the coding unit recursive split process is described above with reference to FIG. 5, a detailed description thereof is omitted.

According to an embodiment of the present disclosure, the image decoding apparatus 100 may determine at least one coding unit by splitting the current coding unit, and determine an order in which at least one coding unit is decoded, according to a certain block (e.g., a current coding unit).

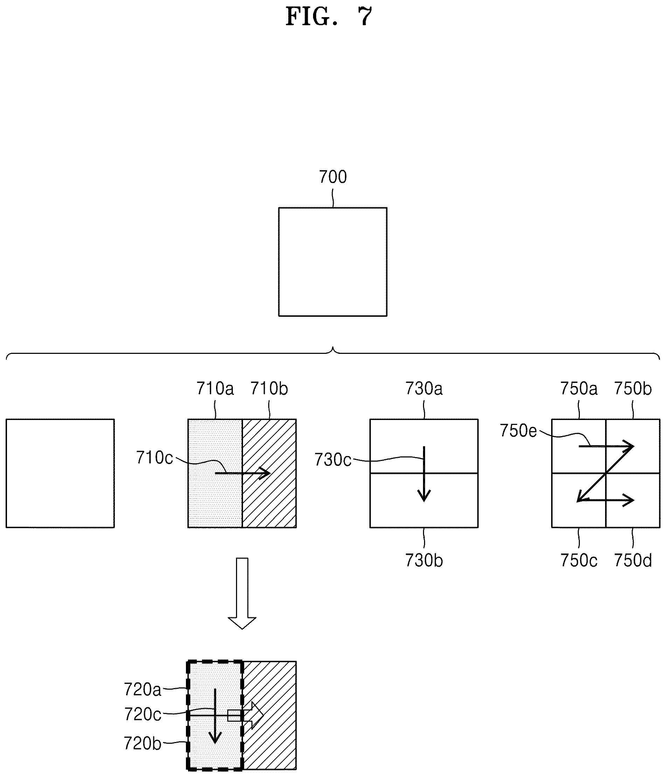

FIG. 7 illustrates an order in which a plurality of coding units are processed when a plurality of coding units are determined as the image decoding apparatus 100 splits a current coding unit, according to an embodiment of the present disclosure

According to an embodiment of the present disclosure, the image decoding apparatus 100 may determine second coding units 710a and 710b by splitting a first coding unit 700 in the vertical direction, second coding units 730a and 730b by splitting the first coding unit 700 in the horizontal direction, or second coding units 750a, 750b, 750c, and 750d by splitting the first coding unit 700 in the vertical direction and the horizontal direction split, according to the split shape mode information.

Referring to FIG. 7, the image decoding apparatus 100 may determine an order in which the second coding units 710a and 710b determined by splitting the first coding unit 700 in the vertical direction are processed in a horizontal direction 710c. The image decoding apparatus 100 may determine a processing order of the second coding units 730a and 730b determined by splitting the first coding unit 700 in the horizontal direction, in a vertical direction 730c. The image decoding apparatus 100 may determine the second coding units 750a, 750b, 750c, and 750d determined by splitting the first coding unit 700 in the vertical direction and the horizontal direction according to a certain order of processing coding units positioned in one row and then coding units positioned in the next row (e.g., a raster scan order or z scan order (750e) etc.).

According to an embodiment of the present disclosure, the image decoding apparatus 100 may recursively split coding units. Referring to FIG. 7, the image decoding apparatus 100 may determine the coding units 710a, 710b, 730a, 730b, 750a, 750b, 750c, and 750d by splitting the first coding unit 700, and may recursively split each of the coding units 710a, 710b, 730a, 730b, 750a, 750b, 750c, and 750d that are determined. A method of splitting the coding units 710a, 710b, 730a, 730b, 750a, 750b, 750c, and 750d may be a method corresponding to the method of splitting the first coding unit 700. Accordingly, each of the coding units 710a, 710b, 730a, 730b, 750a, 750b, 750c, and 750d may be independently split into a plurality of coding units. Referring to FIG. 7, the image decoding apparatus 100 may determine the second coding units 710a and 710b by splitting the first coding unit 700 in the vertical direction, and furthermore, determine whether to independently split each of the second coding units 710a and 710b or not.

According to an embodiment of the present disclosure, the image decoding apparatus 100 may split the second coding unit 710a on the left in the horizontal direction split into third coding units 720a and 720b, and may not split the second coding unit 710b on the right.

According to an embodiment of the present disclosure, the processing order of coding units may be determined based on a coding unit split process. In other words, the processing order of the split coding units may be determined based on the processing order of the coding units before splitting. The image decoding apparatus 100 may determine the order of processing the third coding units 720a and 720b determined by splitting the second coding unit 710a on the left, independently of the second coding unit 710b on the right. As the third coding units 720a and 720b is determined by splitting the second coding unit 710a on the left in the horizontal direction, the third coding units 720a and 720b may be processed in a vertical direction 720c. In addition, as the order of processing the second coding unit 710a on the left and the second coding unit 710b on the right corresponds to the horizontal direction 710c, the second coding unit 710b on the right may be processed after the third coding units 720a and 720b included in the second coding unit 710a on the left are processed in the vertical direction 720c. As the content described above is to describe a process of determining the processing order of each of the coding units according to the coding unit before splitting, the interpretation should not be limited to the embodiment described above, but it should be interpreted that coding units that are determined by splitting into various shapes may be processed independently in a certain order using various methods.

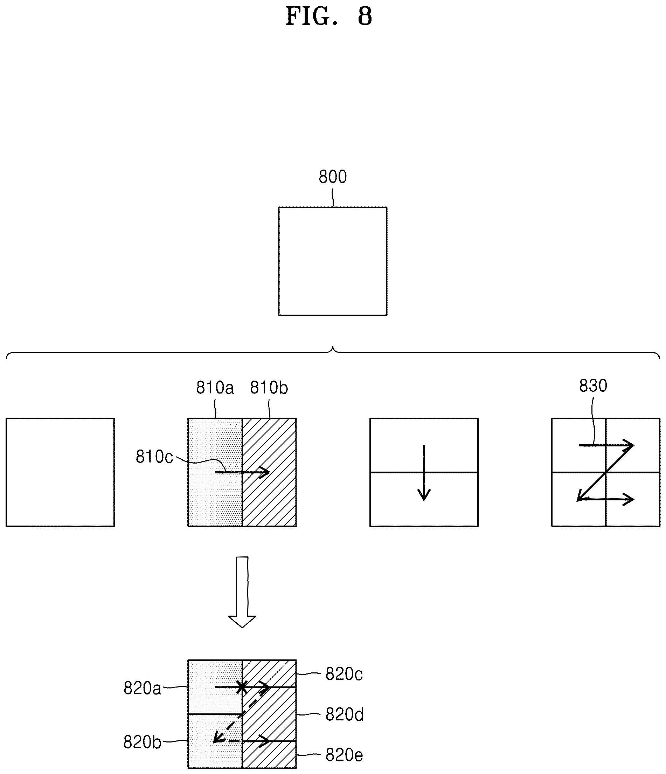

FIG. 8 illustrates a process of determining that the current coding unit is split into an odd number of coding units when the coding unit is not processed by the image decoding apparatus 100 in a certain order, according to an embodiment of the present disclosure.

According to an embodiment of the present disclosure, the image decoding apparatus 100 may determine that a current coding unit is split into an odd number of coding units, based on the obtained split shape mode information. Referring to FIG. 8, a first coding unit 800 in a square shape may be split into second coding units 810a and 810b in a non-square shape, and each of the second coding units 810a and 810b may be independently split into third coding units 820a, 820b, 820c, 820d, and 820e. According to an embodiment of the present disclosure, the image decoding apparatus 100 may determine the third coding units 820a and 820b by splitting the coding unit 810a on the left among the second coding units in the horizontal direction, and split the coding unit 810b on the right into an odd number of third coding units 820c, 820d, and 820e.

According to an embodiment of the present disclosure, the image decoding apparatus 100 may determine whether the third coding units 820a, 820b, 820c, 820d, and 820e may be processed in a certain order so as to determine whether a coding unit that is split into an odd number exits. Referring to FIG. 8, the image decoding apparatus 100 may determine the third coding units 820a, 820b, 820c, 820d, and 820e by recursively splitting the first coding unit 800. The image decoding apparatus 100 may determine whether any of the first coding unit 800, the second coding units 810a and 810b or the third coding units 820a, 820b, 820c, 820d, and 820e is split into an odd number of coding units among the split shapes, based on at least one of the block shape information or the split shape mode information. For example, a coding unit positioned on the right among the second coding units 810a and 810b may be split into an odd number of the third coding units 820c, 820d, and 820e. An order in which a plurality of coding units included in the first coding unit 800 are processed may be a certain order (e.g., a z-scan order 830), and the image decoding apparatus 100 may determine whether the third coding units 820c, 820d, and 820e determined by splitting the second coding unit 810b on the right into an odd number satisfy a condition of processing in the certain order.

According to an embodiment of the present disclosure, the image decoding apparatus 100 may determine whether the third coding units 820a, 820b, 820c, 820d, and 820e included in the first coding unit 800 satisfy a condition of processing in a certain order, and the condition is related to whether at least one of the widths or heights of the second coding units 810a and 810b is split in half according to the boundaries of the third coding units 820a, 820b, 820c, 820d, and 820e. For example, the third coding units 820a and 820b determined by splitting the height of the second coding unit 810a on the left in a non-square shape in half may satisfy the condition. As the boundaries of the third coding units 820c, 820d, and 820e determined by splitting the second coding unit 810b on the right into three coding units do not split the width or height of the second coding unit 810b on the right in half, the third coding units 820c, 820d, and 820e may be determined as not satisfying the condition. The image decoding apparatus 100 may determine this condition dissatisfaction as disconnection of a scan order, and determine that the second coding unit 810b on the right is split into an odd number of coding units, based on the determination result. According to an embodiment of the present disclosure, the image decoding apparatus 100 may place a certain limit on a coding unit at a certain position among the coding units that are split into an odd number of coding units, and as the limit or the certain position are described above through the embodiment of the present disclosure, a detailed description thereof is omitted.

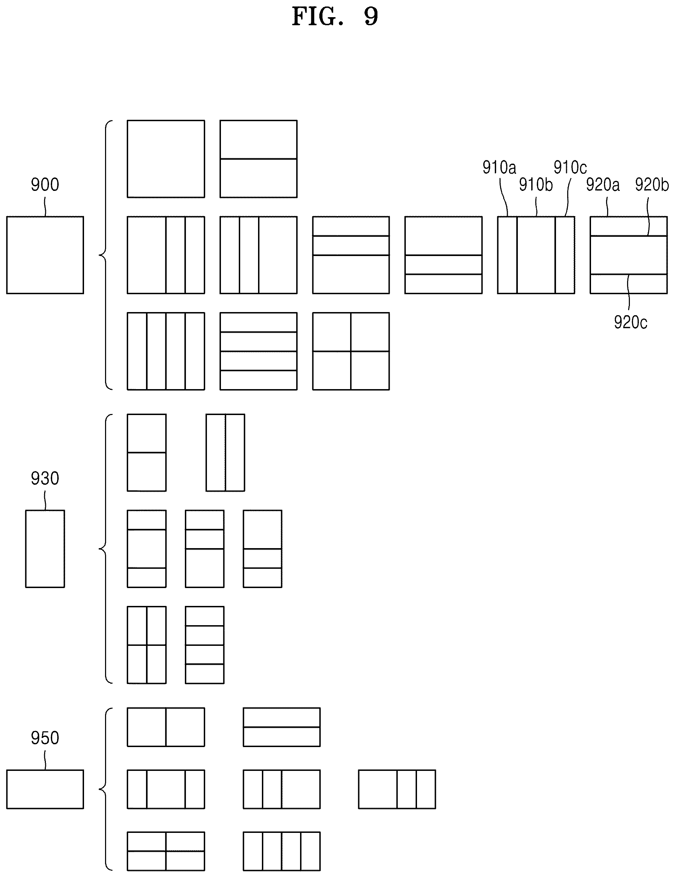

FIG. 9 illustrates a process of determining at least one coding unit as the image decoding apparatus 100 splits a first coding unit 900, according to an embodiment of the present disclosure.

According to an embodiment of the present disclosure, the image decoding apparatus 100 may split the first coding unit 900, based on the split shape mode information obtained through the bitstream obtaining unit 110. The first coding unit 900 in a square shape may be split into four coding units in a square shape or a plurality of coding units in a non-square shape. For example, referring to FIG. 9, when the first coding unit 900 is a square and the split shape mode information indicates splitting into non-square coding units, the image decoding apparatus 100 may split the first coding unit 900 into a plurality of non-square coding units. In detail, when the split shape mode information indicates that an odd number of coding units are determined by splitting the first coding unit 900 in thein the horizontal direction or the vertical direction, the image decoding apparatus 100 may split the first coding unit 900 in a square shape into second coding units 910a, 910b, and 910c determined splitting the same in the vertical direction or the second coding units 920a, 920b, and 920c determined by splitting the same in the horizontal direction, as an odd number of coding units.

According to an embodiment of the present disclosure, the image decoding apparatus 100 may determine whether the second coding units 910a, 910b, 910c, 920a, 920b, and 920c included in the first coding unit 900 satisfy a condition of processing in a certain order, and the condition is related to whether at least one of the widths or heights of the first coding unit 900 is split in half according to the boundaries of the second coding units 910a, 910b, 910c, 920a, 920b, and 920c. Referring to FIG. 9, as the boundaries of the second coding units 910a, 910b, and 910c determined by splitting the first coding unit 900 in a square shape in the vertical direction do not split the width of the first coding unit 900 in half, the first coding unit 900 may determine that the condition of processing in a certain order is not satisfied. In addition, as the boundaries of the second coding units 920a, 920b, and 920c determined by splitting the first coding unit 900 in a square shape in the horizontal direction do not split the height of the first coding unit 900 in half, the first coding unit 900 may determine that the condition of processing in a certain order is not satisfied. The image decoding apparatus 100 may determine this condition dissatisfaction as disconnection of a scan order, and determine that the first coding unit 900 is split into an odd number of coding units, based on the determination result. According to an embodiment of the present disclosure, the image decoding apparatus 100 may place a certain limit on a coding unit at a certain position among the coding units that are split into an odd number of coding units, and as the limit or the certain position are described above through the embodiment of the present disclosure, a detailed description thereof is omitted.

According to an embodiment of the present disclosure, the image decoding apparatus 100 may determine coding units in various shapes by splitting the first coding unit.

Referring to FIG. 9, the image decoding apparatus 100 may split the first coding unit 900 in a square shape and a first coding unit 930 or 950 in a non-square shape into coding units in various shapes.

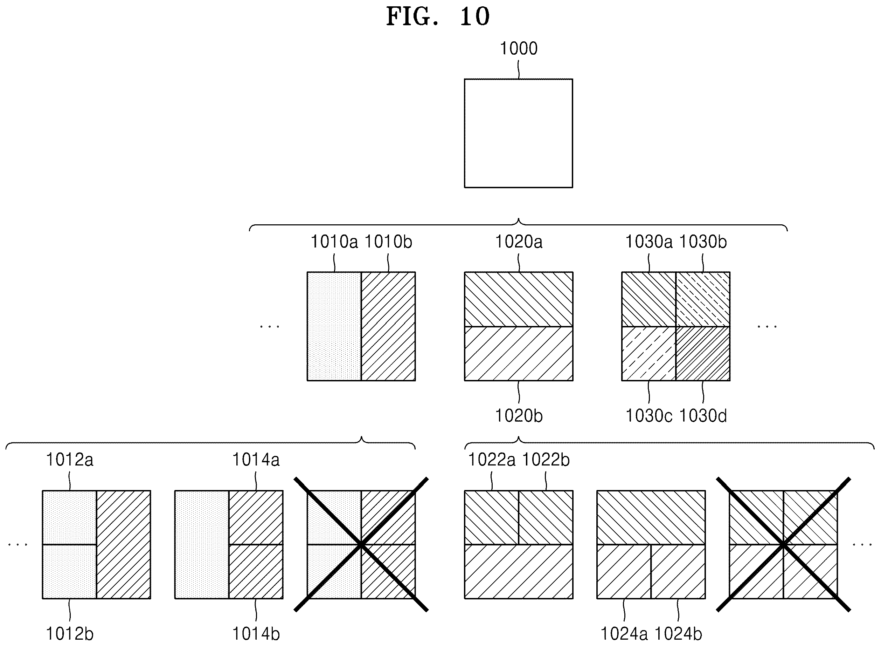

FIG. 10 illustrates that the image decoding apparatus 100 limits the shape in which a second coding unit is split when the second coding unit in a non-square shape determined as a first coding unit 1000 is split satisfies a predetermined condition, according to an embodiment of the present disclosure.

According to an embodiment of the present disclosure, the image decoding apparatus 100 may determine that the first coding unit 1000 in a square shape is split into second coding units 1010a, 1010b, 1020a, and 1020b in a non-square shape, based on the split shape mode information obtained through the bitstream obtaining unit 110. The second coding units 1010a, 1010b, 1020a, and 1020b may be independently split. Accordingly, the image decoding apparatus 100 may determine whether to split the second coding units 1010a, 1010b, 1020a, and 1020b into a plurality of coding units or not, based on the split shape mode information related to each of the second coding units 1010a, 1010b, 1020a, and 1020b. According to an embodiment of the present disclosure, the image decoding apparatus 100 may determine third coding units 1012a and 1012b by splitting, in the horizontal direction, the second coding unit 1010a on the left in a non-square shape determined by splitting the first coding unit 1000 in the vertical direction. However, when the second coding unit 1010a on the left is split in the horizontal direction, the image decoding apparatus 100 may place a limit on the second coding unit 1010b on the right not to be split in the horizontal direction that is the same as the direction in which the second coding unit 1010a on the left is split. When third coding units 1014a and 1014b are determined by splitting the second coding unit 1010b on the right in the same direction, as the second coding unit 1010a on the left and the second coding unit 1010b on the right are each independently split in the horizontal direction, third coding units 1012a, 1012b, 1014a, and 1014b may be determined. However, this is the same result as the image decoding apparatus 100 splitting the first coding unit 1000 into four second coding units 1030a, 1030b, 1030c, and 1030d in a square shape, based on the split shape mode information, which may be inefficient in terms of image decoding.

According to an embodiment of the present disclosure, the image decoding apparatus 100 may determine third coding units 1022a, 1022b, 1024a, and 1024b by splitting, in the vertical direction, the second coding unit 1020a or 1020b in non-square shape determined by splitting the first coding unit 1000 in the horizontal direction. However, when one of the second coding units (e.g., the second coding unit 1020a on the top side) is split in the vertical direction split, the image decoding apparatus 100 may place a limit on the other second coding unit (e.g., the coding unit 1020b on the bottom side) not to be split in the vertical direction in the same direction in which the second coding unit 1020a on the top side is split, based on the reason described above.

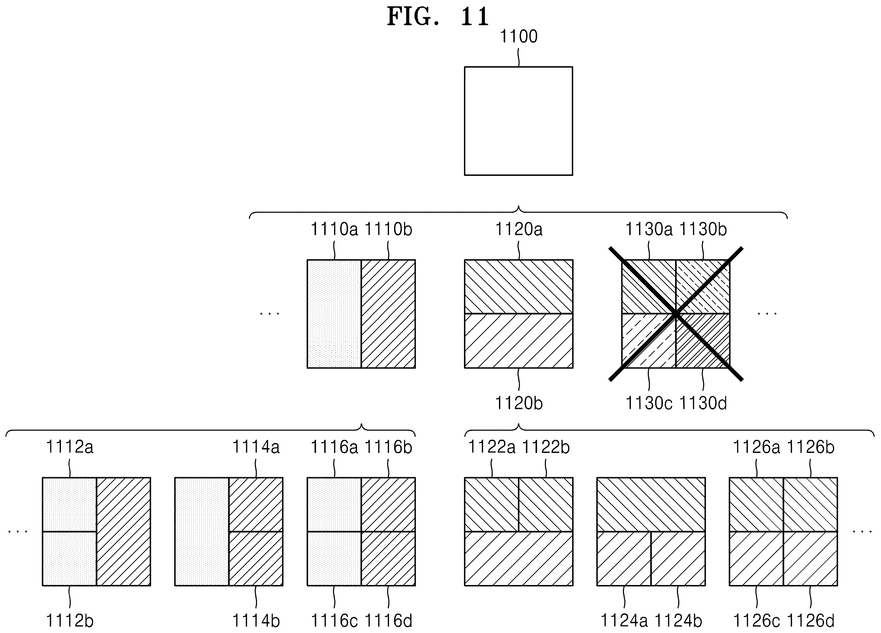

FIG. 11 illustrates a process, performed by the image decoding apparatus 100, of splitting a coding unit in a square shape when split shape mode information does not able to indicate split into a coding unit in a four-square shape, according to an embodiment of the present disclosure.

According to an embodiment of the present disclosure, the image decoding apparatus 100 may determine second coding units 1110a, 1110b, 1120a, 1120b, etc. by splitting a first coding unit 1100 based on the split shape mode information. Although the split shape mode information may include information about various shapes into which a coding unit is split, there is a case in which information about splitting into four coding units in a square shape may not be included in the information about various shapes. According to this split shape mode information, the image decoding apparatus 100 may not split the first coding unit 1100 in a square shape into four second coding units 1130a, 1130b, 1130c, and 1130d in a square shape. The image decoding apparatus 100 may determine the second coding units 1110a, 1110b, 1120a, 1120b, etc. in a non-square shape based on the split shape mode information.

According to an embodiment of the present disclosure, the image decoding apparatus 100 may independently split each of the second coding units 1110a, 1110b, 1120a, 1120b, etc. in a non-square shape. The second coding units 1110a, 1110b, 1120a, 1120b, etc. may be split in a certain order through a recursive method, which may be a split method corresponding to the method of splitting the first coding unit 1100 based on the split shape mode information.

For example, the image decoding apparatus 100 may determine third coding units 1112a and 1112b in a square shape by splitting the second coding unit 1110a on the left in the horizontal direction, and determine third coding units 1114a and 1114b in a square shape by splitting the second coding unit 1110b on the right in the horizontal direction. Furthermore, the image decoding apparatus 100 may determine third coding units 1116a, 1116b, 1116c, and 1116d in a square shape by splitting both the second coding unit 1110a on the left and the second coding unit 1110b on the right in the horizontal direction. In this case, the coding units may be determined in the same shape as the first coding unit 1100 split into four second coding units 1130a, 1130b, 1130c, and 1130d in a square shape.

In another example, the image decoding apparatus 100 may determine third coding units 1122a and 1122b in a square shape by splitting the second coding unit 1120a on the top side in the vertical direction, and determine third coding units 1124a and 1124b in a square shape by splitting the second coding unit 1120b on the bottom side in the vertical direction. Furthermore, the image decoding apparatus 100 may determine third coding units 1126a, 1126b, 1126a, and 1126b in a square shape by splitting both the second coding unit 1120a on the top side and the second coding unit 1120b on the bottom side in the vertical direction. In this case, the coding units may be determines in the same shape as the first coding unit 1100 split into four second coding units 1130a, 1130b, 1130c, and 1130d in a square shape.

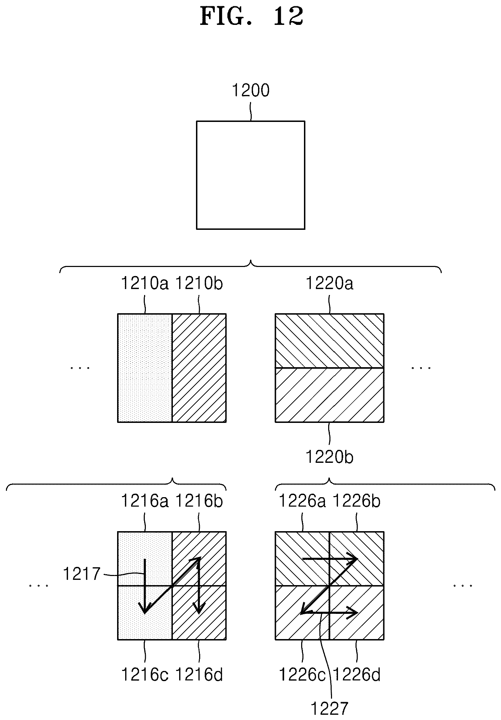

FIG. 12 illustrates that a processing order in a plurality of coding units varies depending on a coding unit split process, according to an embodiment of the present disclosure.

According to an embodiment of the present disclosure, the image decoding apparatus 100 may split a first coding unit 1200 based on the split shape mode information. When the block shape is a square and the split shape mode information indicates that the first coding unit 1200 is split in at least one of the horizontal direction or the vertical direction, the image decoding apparatus 100 may determine second coding units (e.g., 1210a, 1210b, 1220a, 1220b, etc.) by splitting the first coding unit 1200. Referring to FIG. 12, the second coding units 1210a, 1210b, 1220a, and 1220b in a non-square shape determined by splitting the first coding unit 1200 in the horizontal direction or the vertical direction only may be independently split based on the split shape mode information for each coding unit. For example, the image decoding apparatus 100 may determine third coding units 1216a, 1216b, 1216c, and 1216d by splitting, in the horizontal direction, each of the second coding units 1210a and 1210b generated by splitting the first coding unit 1200 in the vertical direction, and determine third coding units 1226a, 1226b, 1226c, and 1226d by splitting, in the vertical direction, each of the second coding units 1220a and 1220b generated by splitting the first coding unit 1200 in the horizontal direction. As the process of splitting the second coding units 1210a, 1210b, 1220a, and 1220b is described above with reference to FIG. 11, a detailed description thereof is omitted.

According to an embodiment of the present disclosure, the image decoding apparatus 100 may process a coding unit according to a certain order. The characteristics about the processing of a coding unit according to a certain order is described above with reference to FIG. 7, a detailed description thereof is omitted. Referring to FIG. 12, the image decoding apparatus 100 may determine four third coding units 1216a, 1216b, 1216c, and 1216d, and 1226a, 1226b, 1226c, and 1226d in a square shape by splitting the first coding unit 1200 in a square shape. According to an embodiment of the present disclosure, the image decoding apparatus 100 may determine a processing order of the third coding units 1216a, 1216b, 1216c, 1216d, 1226a, 1226b, 1226c, and 1226d according to the shape in which the first coding unit 1200 is split.

According to an embodiment of the present disclosure, the image decoding apparatus 100 may determine the third coding units 1216a, 1216b, 1216c, and 1216d by splitting, in the horizontal direction, each of the second coding units 1210a and 1210b generated by being split in the vertical direction, and the image decoding apparatus 100 may process the third coding units 1216a, 1216b, 1216c, and 1216d according to an order 1217 in which, after the third coding units 1216a and 1216c included in the second coding unit 1210a on the left are processed in the vertical direction, the third coding units 1216b and 1216d included in the second coding unit 1210b on the right are processed in the vertical direction.

According to an embodiment of the present disclosure, the image decoding apparatus 100 may determine the third coding units 1226a, 1226b, 1226c, and 1226d by splitting, in the vertical direction, each of the second coding units 1220a and 1220b generated by being split in the horizontal direction, and the image decoding apparatus 100 may process the third coding units 1226a, 1226b, 1226c, and 1226d according to an order 1227 in which, after the third coding units 1226a and 1226b included in the second coding unit 1220a on the top side are processed in the horizontal direction, the third coding units 1226c and 1226d included in the second coding unit 1220b on the bottom side are processed in the horizontal direction.

Referring to FIG. 12, as each of the second coding units 1210a, 1210b, 1220a, and 1220b is split, the third coding units 1216a, 1216b, 1216c, 1216d, 1226a, 1226b, 1226c, and 1226d in a square shape may be determined. Although the second coding units 1210a and 1210b determined by being split in the vertical direction split and the second coding units 1220a and 1220b determined by being split in the horizontal direction are those split in different shapes, according to the third coding units 1216a, 1216b, 1216c, 1216d, 1226a, 1226b, 1226c, and 1226d that are subsequently determined, as a result, the first coding unit 1200 is split into coding units in the same shape. Accordingly, even when coding units in the same shape are determined as a result by recursively splitting coding units through different processed based on the split shape mode information, the image decoding apparatus 100 may process a plurality of coding units determined in the same shape in different orders.

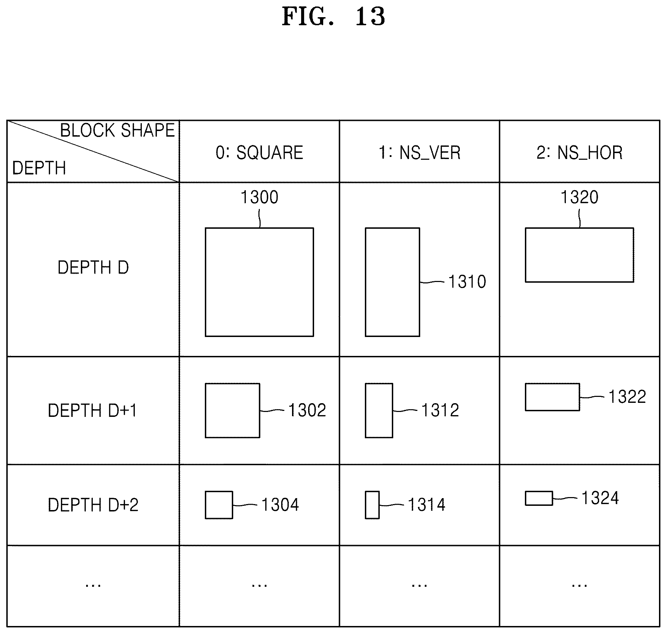

FIG. 13 illustrates a process of determining the depth of a coding unit as the shape and size of the coding unit vary when a plurality of coding units are determined by recursively splitting the coding unit, according to an embodiment of the present disclosure.

According to an embodiment of the present disclosure, the image decoding apparatus 100 may determine the depth of a coding unit according to a certain reference. For example, the certain reference may be the length of the long side of a coding unit. When the length of the long side of a current coding unit is split into 2n (n>0) times the length of the long side of the coding unit before splitting, the image decoding apparatus 100 may determine that the depth of the current coding unit is increased by n compared with the depth of the coding unit before splitting. In the following description, a coding unit with an increased depth is expressed as a coding unit of a lower depth.

Referring to FIG. 13, according to an embodiment of the present disclosure, based on block shape information indicating a square shape (e.g., block shape information may indicate '0: SQUARE'), the image decoding apparatus 100 may determine a second coding unit 1302, a third coding unit 1304, etc. of a lower depth by splitting a first coding unit 1300 in a square shape. Assuming that the size of the first coding unit 1300 in a square shape is 2Nx2N, the second coding unit 1302 determined by splitting the width and height of the first coding unit 1300 1/2 times may have a size of NxN. Furthermore, the third coding unit 1304 determined by splitting the width and height of the second coding unit 1302 into a 1/2 size may have a size of N/2xN/2. In this case, the width and height of the third coding unit 1304 correspond to 1/4 times the first coding unit 1300. When the depth of the first coding unit 1300 is D, the depth of the second coding unit 1302 that is 1/2 times the width and height of the first coding unit 1300 may be D+1, and the depth of the third coding unit 1304 that is 1/4 times the width and height of the first coding unit 1300 may be D+2.

According to an embodiment of the present disclosure, based on block shape information indicating a non-square shape (e.g., block shape information may indicate '1: NS_VER' indicating a non-square in which the height is greater than the width or '2: NS_HOR' indicating a non-square in which the width is greater than the height), the image decoding apparatus 100 may determine a second coding unit 1312 or 1322, a third coding unit 1314 or 1324, etc. of a lower depth by splitting a first coding unit 1310 or 1320 in a non-square shape.

The image decoding apparatus 100 may determine the second coding units (e.g., 1302, 1312, 1322, etc.) by splitting at least one of the width or height of the first coding unit 1310 of an Nx2N size. In other words, the image decoding apparatus 100 may determine the second coding unit 1302 of an NxN size or the second coding unit 1322 of an NxN/2 size by splitting the first coding unit 1310 in the horizontal direction, and determine the second coding unit 1312 of an N/2xN size by splitting the first coding unit 1310 in the horizontal direction and the vertical direction.

According to an embodiment of the present disclosure, the image decoding apparatus 100 may determine the second coding units (e.g., 1302, 1312, 1322, etc.) by splitting at least one of the width or height of the first coding unit 1320 of a 2NxN size. In other words, the image decoding apparatus 100 may determine the second coding unit 1302 of an NxN size or the second coding unit 1312 of an N/2xN size by splitting the first coding unit 1320 in the vertical direction, and determine the second coding unit 1322 of an NxN/2 size by splitting the first coding unit 1320 in the horizontal direction and the vertical direction.

According to an embodiment of the present disclosure, the image decoding apparatus 100 may determine the third coding units (e.g., 1304, 1314, 1324, etc.) by splitting at least one of the width or height of the second coding unit 1302 of an NxN size. In other words, the image decoding apparatus 100 may determine the third coding unit 1304 of an N/2xN/2 size, the third coding unit 1314 of an N/4xN/2 size, or the third coding unit 1324 of an N/2xN/4 size by splitting the second coding unit 1302 in the vertical direction and the horizontal direction.

According to an embodiment of the present disclosure, the image decoding apparatus 100 may determine the third coding units (e.g., 1304, 1314, 1324, etc.) by splitting at least one of the width or height of the second coding unit 1312 of an N/2xN size. In other words, the image decoding apparatus 100 may determine the third coding unit 1304 of an N/2xN/2 size or the third coding unit 1324 of an N/2xN/4 size by splitting the second coding unit 1312 in the horizontal direction, or determine the third coding unit 1314 of an N/4xN/2 size by splitting the second coding unit 1312 in the vertical direction and the horizontal direction split.

According to an embodiment of the present disclosure, the image decoding apparatus 100 may determine the third coding units (e.g., 1304, 1314, 1324, etc.) by splitting at least one of the width or height of the second coding unit 1322 of an NxN/2 size. In other words, the image decoding apparatus 100 may determine the third coding unit 1304 of an N/2xN/2 size or the third coding unit 1314 of an N/4xN/2 size by splitting the second coding unit 1322 in the vertical direction, or the third coding unit 1324 of an N/2xN/4 size by splitting the second coding unit 1322(in the vertical direction and the horizontal direction.

According to an embodiment of the present disclosure, the image decoding apparatus 100 may split the coding unit in a square shape (e.g., 1300, 1302, and 1304) in the horizontal direction or the vertical direction. For example, the first coding unit 1310 of an Nx2N size may be determined by splitting the first coding unit 1300 of a 2Nx2N in the vertical direction, or the first coding unit 1320 of a 2NxN size may be determined by splitting the first coding unit 1300 in the horizontal direction. According to an embodiment of the present disclosure, when the depth is determined based on the length of the longest side of a coding unit, the depth of a coding unit determined by splitting the first coding unit 1300 of a 2Nx2N size in the horizontal direction or the vertical direction may be the same as the depth of the first coding unit 1300.

According to an embodiment of the present disclosure, the width and height of the third coding unit 1314 or 1324 may correspond to 1/4 times the first coding unit 1310 or 1320. When the depth of the first coding unit 1310 or 1320 is D, the depth of the second coding unit 1312 or 1322 that is 1/2 times the width and height of the first coding unit 1310 or 1320 may be D+1, and the depth of the third coding unit 1314 or 1324 that is 1/4 times the width and height of the first coding unit 1310 or 1320 may be D+2.

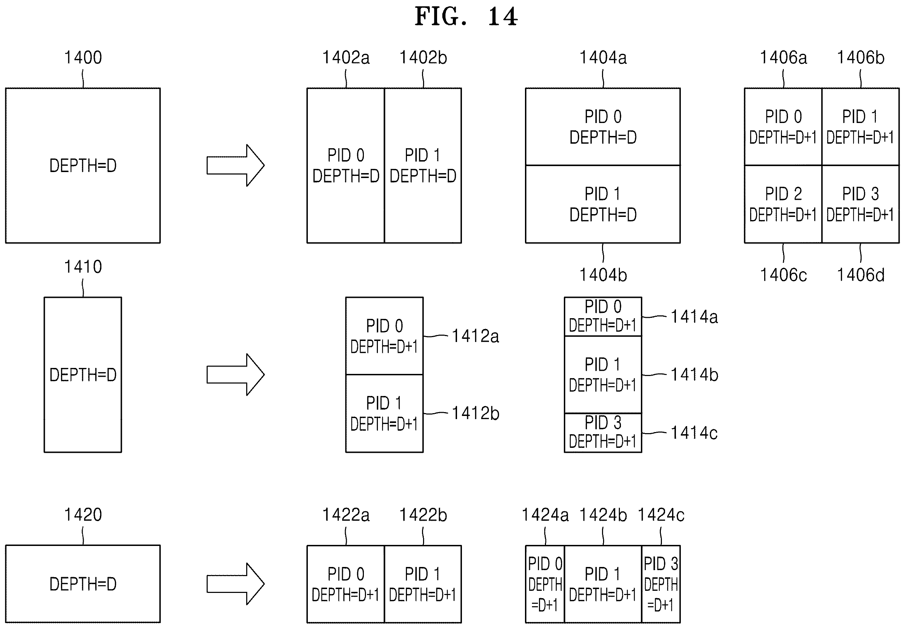

FIG. 14 illustrates an index (a part index, hereinafter PID) for classifying coding units and depths that may be determined depending on the shapes and sizes of coding units, according to an embodiment of the present disclosure.

According to an embodiment of the present disclosure, the image decoding apparatus 100 may determine second coding units in various shapes by splitting a first coding unit 1400 in a square shape. Referring to FIG. 14, the image decoding apparatus 100 may determine second coding units 1402a, 1402b, 1404a, 1404b, 1406a, 1406b, 1406c, and 1406d by splitting the first coding unit 1400 in at least one direction of the vertical direction and the horizontal direction based on split shape mode information. In other words, the image decoding apparatus 100 may determine the second coding units 1402a, 1402b, 1404a, 1404b, 1406a, 1406b, 1406c, and 1406d based on the split shape mode information about the first coding unit 1400.

According to an embodiment of the present disclosure, the depth of the second coding units 1402a, 1402b, 1404a, 1404b, 1406a, 1406b, 1406c, and 1406d determined according to the split shape mode information about the first coding unit 1400 in a square shape may be determined based on the length of a long side. For example, as the length of one side of the first coding unit 1400 in a square shape is the same as the length of a long side of the second coding units 1402a, 1402b, 1404a, and 1404b in a non-square shape, the first coding unit 1400 and the second coding units 1402a, 1402b, 1404a, and 1404b in a non-square shape have the same depth of D. In contrast, when the image decoding apparatus 100 splits the first coding unit 1400 into four second coding units 1406a, 1406b, 1406c, and 1406d in a square shape based on the split shape mode information, the length of one side of each of the second coding units 1406a, 1406b, 1406c, and 1406d in a square shape is 1/2 times the length of one side of the first coding unit 1400, and thus, the depth of each of the second coding units 1406a, 1406b, 1406c, and 1406d may be a depth of D+1 that is one depth lower than the depth D of the first coding unit 1400.

According to an embodiment of the present disclosure, the image decoding apparatus 100 may split a first coding unit 1410 in a shape with the height greater than the width in the horizontal direction according to the shape mode information into a plurality of second coding units 1412a, 1412b, 1414a, 1414b, and 1414c. According to an embodiment of the present disclosure, the image decoding apparatus 100 may split a first coding unit 1420 in a shape with the width greater than the height in the vertical direction according to the shape mode information into a plurality of second coding units 1422a, 1422b, 1424a, 1424b, and 1424c.

According to an embodiment of the present disclosure, the depth of the second coding units 1412a, 1412b, 1414a, 1414b, 1414c, 1422a, 1422b, 1424a, 1424b, and 1424c that are determined according to the split shape mode information about the first coding unit 1410 or 1420 in a non-square shape may be determined based on the length of a long side. For example, as the length of one side of the second coding units 1412a and 1412b in a square shape is 1/2 times the length of one side of the first coding unit 1410 in a non-square shape in which the height is longer than the width, the depth of the second coding units 1412a and 1412b in a square shape is D+1 that is one depth lower than the depth D of the first coding unit 1410 in a non-square shape.

Furthermore, the image decoding apparatus 100 may split the first coding unit 1410 in a non-square shape into an odd number of second coding units 1414a, 1414b, and 1414c based on the split shape mode information. The odd-numbered second coding units 1414a, 1414b, and 1414c may include the second coding units 1414a and 1414c in a non-square shape and the second coding unit 1414b in a square shape. In this case, as the length of s long side of the second coding units 1414a and 1414c in a non-square shape and the length of one side of the second coding unit 1414b in a square shape is 1/2 times the length of one side of the first coding unit 1410, the depth of the second coding units 1414a, 1414b, and 1414c may be D+1 that is one depth lower than the depth D of the first coding unit 1410. The image decoding apparatus 100 may determine the depth of coding units related to the first coding unit 1420 in a non-square shape in which the width is longer than the height, in a method corresponding to the method of determining the depth of coding units related to the first coding unit 1410,.

According to an embodiment of the present disclosure, in determining an index PID for classifying split coding units, when the coding units split into an odd number are not in the same size, the image decoding apparatus 100 may determine an index based on a size ratio between the coding units. Referring to FIG. 14, among the coding units 1414a, 1414b, and 1414c split into an odd number, the coding unit 1414b positioned in the middle may have the same width as the other coding units 1414a and 1414c, but have the height double the heights of the other coding units 1414a and 1414c. In other words, in this case, the coding unit 1414b positioned in the middle may include two coding units of the other coding units 1414a and 1414c. Accordingly, when the index PID of the coding unit 1414b positioned in the middle is 1 according to the result of scan order, the coding unit 1414c positioned at the next order may have the index of 3 increased by 2. In other words, the index values may have discontinuity. According to an embodiment of the present disclosure, the image decoding apparatus 100 may determine whether the coding units split into an odd number have the same size or not based on the existence of the discontinuity of index for classifying the split coding units.

According to an embodiment of the present disclosure, the image decoding apparatus 100 may determine whether a plurality of coding units determined by splitting the current coding unit are split into a specific split shape, based on the index value for classifying the split coding units. Referring to FIG. 14, the image decoding apparatus 100 may determine the even-numbered coding units 1412a and 1412b or the odd-numbered coding units 1414a, 1414b, and 1414c, by splitting the first coding unit 1410 in a rectangular shape with the height greater than the width. The image decoding apparatus 100 may use the index PID indicating each coding unit to classify each of a plurality of coding units. According to an embodiment of the present disclosure, the PID may be obtained from a sample at a certain position (e.g., on the upper-left side sample) of each coding unit.

According to an embodiment of the present disclosure, the image decoding apparatus 100 may determine a coding unit at a certain position of the coding units determined by being split by using the index for classifying the coding units. According to an embodiment of the present disclosure, when split shape mode information about the first coding unit 1410 in a rectangular shape with the height greater than the width indicates that the first coding unit 1410 is split into three coding unit, the image decoding apparatus 100 may split the first coding unit 1410 into three coding units 1414a, 1414b, and 1414c. The image decoding apparatus 100 may assign an index for each of three coding units 1414a, 1414b, and 1414c. The image decoding apparatus 100 may compare indexes for respective coding units to determine the middle coding unit among into the coding units split into an odd number. The image decoding apparatus 100 may determine the coding unit 1414b having an index corresponding to the middle value among the indexes, as the coding unit at the middle position among the coding units determined by splitting the first coding unit 1410, based on the indexes of coding units. According to an embodiment of the present disclosure, in determining the index for classifying split coding units, when the coding units do not have the same size, the image decoding apparatus 100 may determine an index based on the size ratio between the coding units. Referring to FIG. 14, the coding unit 1414b generated by splitting the first coding unit 1410 may have the same width as the widths of the other coding units 1414a and 1414c, but have the height double the heights of the other coding units 1414a and 1414c. In this case, when the index PID of the coding unit 1414b positioned in the middle is 1, the coding unit 1414c positioned at the next order may have the part index of 3 increased by 2. When the index that has uniformly increased has a different increase rate as in this case, the image decoding apparatus 100 may determine that the coding unit is split into a plurality of coding unit including a coding unit having a different size from other coding units. According to an embodiment of the present disclosure, when the split shape mode information indicates split into an odd number of coding units, the image decoding apparatus 100 may split a current coding unit into a shape in which a coding unit at a certain position (e.g., the middle coding unit) of the odd-numbered coding units has a different size from the other coding units. In this case, the image decoding apparatus 100 may determine a middle coding unit having a different size by using the index PID of a coding unit. However, as the index described above and the size or position of a coding unit at a certain position to be determined are specified to explain an embodiment, the present disclosure is not limited thereto, and it should be interpreted that the positions and sizes of various indexes and coding units may be used.

According to an embodiment of the present disclosure, the image decoding apparatus 100 may use a certain data unit where recursive split of coding units starts.

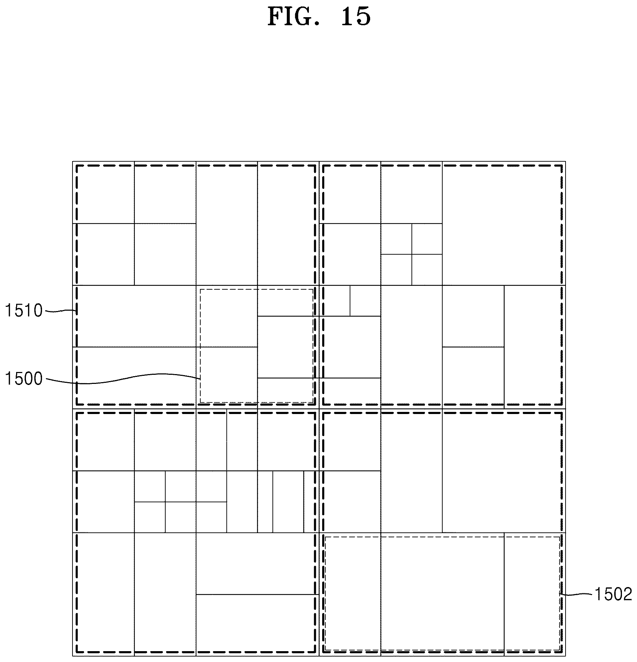

FIG. 15 illustrates that a plurality of coding units are determined according to a plurality of certain data units included in a picture, according to an embodiment of the present disclosure.

According to an embodiment of the present disclosure, the certain data unit may be defined as a data unit where the recursive split of a coding unit starts by using the split shape mode information. In other words, the certain data unit may correspond to a coding unit having a top depth used in a process of determining a plurality of coding units by splitting a current picture. In the following description, for convenience of explanation, the certain data unit may be referred to as a reference data unit.

According to an embodiment of the present disclosure, the reference data unit may indicate predetermined size and shape. According to an embodiment of the present disclosure, the reference data unit may include MxN samples. Here, M and N may be identical to each other or an integer expressed as a power of 2. In other words, the reference data unit may indicate a square or non-square shape and then may be split into an integer number of coding units.

According to an embodiment of the present disclosure, the image decoding apparatus 100 may split the current picture into a plurality of reference data units. According to an embodiment of the present disclosure, the image decoding apparatus 100 may split a plurality of reference data units that split the current picture, by using the split shape mode information about each reference data unit. The process of splitting the reference data unit may correspond to the split process using the quad-tree structure.

According to an embodiment of the present disclosure, the image decoding apparatus 100 may previously determine the minimum size that the reference data unit included in the current picture may have. Accordingly, the image decoding apparatus 100 may determine reference data units of various sizes having the minimum or more size, and determine at least one coding unit by using the split shape mode information based on the determined reference data unit.

Referring to FIG. 15, the image decoding apparatus 100 may use a reference coding unit 1500 in a square shape or a reference coding unit 1502 in a non-square shape. According to an embodiment of the present disclosure, the shape and size of a reference coding unit may be determined according to various data units (e.g., a sequence, a picture, a slice, a slice segment, a tile, a tile group, a coding tree unit, etc.) that may include at least one reference coding unit.

According to an embodiment of the present disclosure, the bitstream obtaining unit 110 of the image decoding apparatus 100 may obtain at least one of information about the shape of a reference coding unit or information about the size of a reference coding unit from a bitstream for each of the various data units. As a process of determining at least one coding unit included in the reference coding unit 1500 in a square shape is described above through the process of splitting the current coding unit 300 with reference to FIG. 3, and a process of determining at least one coding unit included in the reference coding unit 1502 in a non-square shape is described above through the process of splitting the current coding unit 400 or 450 with reference to FIG. 4, detailed descriptions thereof are omitted.

According to an embodiment of the present disclosure, the image decoding apparatus 100 may use an index for identifying the size and shape of a reference coding unit in order to determine the size and shape of a reference coding unit according to some data units previously determined based on a predetermined condition. In other words, the bitstream obtaining unit 110 may obtain only an index for identifying the size and shape of a reference coding unit, from a bitstream, for each slice, slice segment, tile, tile group, maximum coding unit, etc., as a data unit satisfying a predetermined condition (e.g., a data unit having a slice size or less), among the various data units (e.g., a sequence, a picture, a slice, a slice segment, a tile, a tile group, a maximum coding unit, etc.). The image decoding apparatus 100 may determine the size and shape of a reference data unit by using an index for each data unit satisfying the predetermined condition. When the information about the shape of a reference coding unit and the information about the size of a reference coding unit is obtained and used from a bitstream for each data unit having a relatively small size, usage efficiency of a bitstream may not be good, and thus instead of directly obtaining the information about the shape of a reference coding unit and the information about the size of a reference coding unit, the index only may be obtained and used. In this case, at least one of the size or shape of a reference coding unit corresponding to an index indicating the size and shape of a reference coding unit may be previously determined. In other words, by selecting at least one of the predetermined size or shape of a reference coding unit according to the index, the image decoding apparatus 100 may determine at least one of the size or shape of a reference coding unit included in the data unit that is the reference for obtaining an index.

According to an embodiment of the present disclosure, the image decoding apparatus 100 may use at least one reference coding unit included in one maximum coding unit 1510. In other words, the maximum coding unit 1510 that splits an image may include at least one reference coding unit, and the coding unit may be determined through a recursive split process of each reference coding unit. According to an embodiment of the present disclosure, at least one of the width or height of the maximum coding unit 1510 may correspond to an integer multiple of at least one of the width or height of the reference coding unit. According to an embodiment of the present disclosure, the size of a reference coding unit may be a size obtained by splitting the maximum coding unit 1510 n times according to the quad-tree structure. In other words, the image decoding apparatus 100 may determine a reference coding unit by splitting the maximum coding unit 1510 n times according to the quad-tree structure, and split the reference coding unit based on at least one of the block shape information or the split shape mode information according to an embodiment of the present disclosure.

According to an embodiment of the present disclosure, the image decoding apparatus 100 may obtain and use the block shape information indicating the shape of the current coding unit or the split shape mode information indicating the method of splitting a current coding unit, from a bitstream. The split shape mode information may include a bitstream related to various data units. For example, the image decoding apparatus 100 may use split shape mode information included in a sequence parameter set, a picture parameter set, a video parameter set, a slice header, a slice segment header, a tile header, or a tile group header. Furthermore, the image decoding apparatus 100 may obtain and use a syntax element corresponding to the block shape information or the split shape mode information from a bitstream for each maximum coding unit and reference coding unit.

A method of determining split rules according to an embodiment of the present disclosure is described below in detail.

The image decoding apparatus 100 may determine the split rules of an image. The split rules may be predetermined between the image decoding apparatus 100 and the image encoding apparatus 200. The image decoding apparatus 100 may determine the split rules of an image based on information obtained from the bitstream. The image decoding apparatus 100 may determine split rules based on the information obtained from at least one of a sequence parameter set, a picture parameter set, a video parameter set, a slice header, a slice segment header, a tile header, or a tile group header. The image decoding apparatus 100 may determine the split rules differently according to a frame, a slice, a tile, a temporal layer, a maximum coding unit, or a coding unit.

The image decoding apparatus 100 may determine the split rules based on the block shape of a coding unit. The block shape may include the size, shape, a width to height ratio, and direction of a coding unit. The image encoding apparatus 200 and the image decoding apparatus 100 may predetermine the split rules based on the block shape of a coding unit. However, the present disclosure is not limited thereto. The image decoding apparatus 100 may determine the split rules based on the information obtained from the bitstream received from the image encoding apparatus 200.

The shape of a coding unit may include a square and a non-square. When the lengths of the width and height of a coding unit are the same, the image decoding apparatus 100 may determine the shape of a coding unit as a square. Furthermore, when the lengths of the width and height of a coding unit are not the same, the image decoding apparatus 100 may determine the shape of a coding unit as a non-square.

The size of a coding unit may include various sizes of 4x4, 8x4, 4x8, 8x8, 16x4, 16x8, ... , and 256x256. The size of a coding unit may classify by the length of the long side, the length of the short side, or the area of a coding unit. The image decoding apparatus 100 may apply the same split rules to coding units classified into the same group. For example, the image decoding apparatus 100 may classify coding units having the same length of the long side as the same size. In addition, the image decoding apparatus 100 may apply the same split rules to coding units having the same length of the long side.

The ratio of the width and height of a coding unit may include 1:2, 2:1, 1:4, 4:1, 1:8, 8:1, 1:16, 16:1, 32:1, or 1:32. Furthermore, the direction of a coding unit may include a horizontal direction and a vertical direction. The horizontal direction may indicate a case in which the length of the width of a coding unit is greater than the length of the height thereof. The vertical direction may indicate a case in which the length of the width of a coding unit is less than the length of the height.

The image decoding apparatus 100 may adaptively determine the split rules based on the size of a coding unit. The image decoding apparatus 100 may determine an allowable split shape mode differently based on the size of a coding unit. For example, the image decoding apparatus 100 may determine whether the split is allowed based on the size of a coding unit. The image decoding apparatus 100 may determine the split direction based on the size of a coding unit. The image decoding apparatus 100 may determine an allowable split type based on the size of a coding unit.

The determining of the split rules based on the size of a coding unit may be predetermined split rules between the image encoding apparatus 200 and the image decoding apparatus 100. Furthermore, the image decoding apparatus 100 may determine the split rules based on the information obtained from the bitstream.

The image decoding apparatus 100 may adaptively determine the split rules based on the position of a coding unit. The image decoding apparatus 100 may adaptively determine the split rules based on the position of a coding unit in an image.

Furthermore, the image decoding apparatus 100 may determine the split rules to prevent the coding units generated through different split paths from having the same block shape. However, the present disclosure is not limited thereto, and the coding units generated through different split paths may have the same block shape. The coding units generated through different split paths may have different decoding processing orders. As the decoding processing order is described above with reference to FIG. 12, a detailed description thereto is omitted.

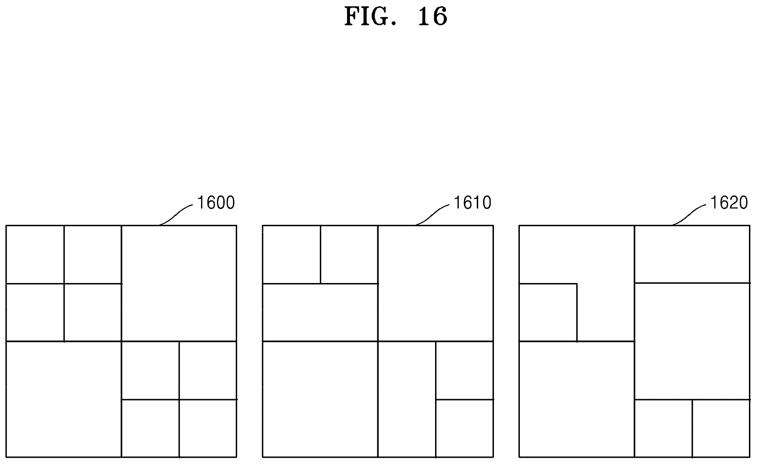

FIG. 16 illustrates coding units that may be determined for each picture when a combination of shapes into which a coding unit may be split differs for each picture, according to an embodiment of the present disclosure.

Referring to FIG. 16, the image decoding apparatus 100 may determine a combination of split shapes into which a coding unit may be split differently for each picture. For example, the image decoding apparatus 100 may decode image by using a picture 1600 that may be split into four coding units, a picture 1610 that may be split into two or four coding units, and a picture 1620 that may be split into two, three, or four coding units, among at least one of pictures included in an image. The image decoding apparatus 100 may use only split shape information indicating splitting into four square coding units in order to split the picture 1600 into a plurality of coding units. The image decoding apparatus 100 may use only split shape information indicating splitting into two or four coding units in order to split the picture 1610. The image decoding apparatus 100 may use only split shape information indicating splitting into two, three, or four coding units in order to split the picture 1620. As the combination of split shapes described above is a mere embodiment to explain the operation of the image decoding apparatus 100, it should not be interpreted that the combination of split shapes described above is limited to the embodiment, and it should be interpreted that a combination of split shapes of various forms may be used for each a certain data unit.

According to an embodiment of the present disclosure, the bitstream obtaining unit 110 of the image decoding apparatus 100 may obtain a bitstream including an index indicating a combination of split shape information for each certain data unit (e.g., a sequence, a picture, a slice, a slice segment, a tile, a tile group, etc.). For example, the bitstream obtaining unit 110 may obtain an index indicating a combination of split shape information from a sequence parameter set, a picture parameter set, a slice header, a tile header, or a tile group header. The image decoding apparatus 100 may determine a combination of split shapes into which a coding unit may be split for each certain data unit by using the obtained index, and thus, a combination of different split shapes may be used for each certain data unit.

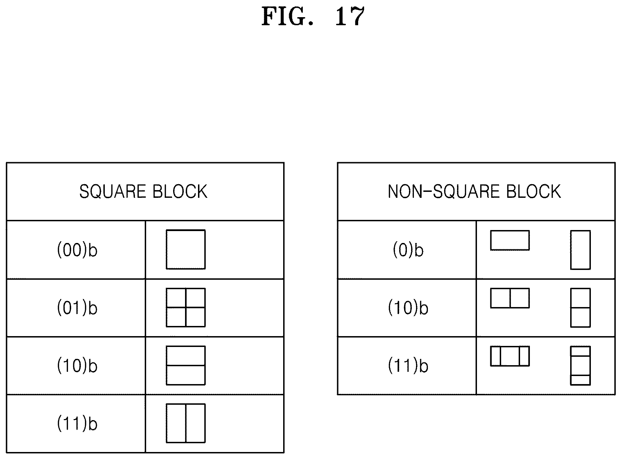

FIG. 17 illustrates various shapes of coding units that may be determined based on the split shape mode information expressed by binary code, according to an embodiment of the present disclosure

According to an embodiment of the present disclosure, the image decoding apparatus 100 may split a coding unit into various shapes by using the block shape information and the split shape mode information obtained through the bitstream obtaining unit 110. The shapes of a coding unit that may be split may correspond to various shapes including the shapes described through the embodiments described above.

Referring to FIG. 17, the image decoding apparatus 100 may split a coding unit in a square shape in at least one of the horizontal direction or the vertical direction based on the split shape mode information, and split a coding unit in a non-square shape in the horizontal direction or the vertical direction.

According to an embodiment of the present disclosure, when the image decoding apparatus 100 splits a coding unit in a square shape in the horizontal direction and the vertical direction into four square coding units, there are four split shapes that the split shape mode information about the coding unit in a square may indicate. According to an embodiment of the present disclosure, the split shape mode information may be expressed by 2-digit binary code, and a binary code may be assigned for each split shape. For example, when the coding unit is not split, the split shape mode information may be expressed by (00)b, when the coding unit is split in the horizontal direction and the vertical direction, the split shape mode information may be expressed by (01)b, when the coding unit is split in the horizontal direction, the split shape mode information may be expressed by (10)b, and when the coding unit is split in the vertical direction split, the split shape mode information may be expressed by (11)b.

According to an embodiment of the present disclosure, when the image decoding apparatus 100 splits a coding unit in a non-square shape in the horizontal direction or the vertical direction, the type of split shapes indicated by the split shape mode information may be determined based on the number of split coding units. Referring to FIG. 17, the image decoding apparatus 100 may split a coding unit in a non-square shape into three according to an embodiment of the present disclosure. The image decoding apparatus 100 may split a coding unit into two coding units, and in this case, the split shape mode information may be expressed by (10)b. The image decoding apparatus 100 may split a coding unit into three coding units, and in this case, the split shape mode information may be expressed by (11)b. The image decoding apparatus 100 may determine not to split a coding unit, and in this case, the split shape mode information may be expressed by (0)b. In other words, the image decoding apparatus 100 may use a variable length coding (VLC), not a fixed length coding (FLC), to use the binary code indicating the split shape mode information.

According to an embodiment of the present disclosure, referring to FIG. 17, the binary code of split shape mode information indicating that a coding unit is not split may be expressed by (0)b. When the binary code of the split shape mode information indicating not splitting a coding unit is set to (00)b, despite the absence of the split shape mode information set to (01)b, all the 2-bit binary codes of the split shape mode information need to be used. However, as illustrated in FIG. 17, in a case in which three split shapes are used for a coding unit in a non-square shape, even when the 1-bit binary code (0)b is used as the split shape mode information, the image decoding apparatus 100 may determine not to split a coding unit, thereby efficiently using the bitstream. However, it should not be interpreted that the split shape of a coding unit in a non-square shape indicated by the split shape mode information is limited to only the three shapes illustrated in FIG. 17, and it should be interpreted that the split shape includes various shapes including the embodiments described above.

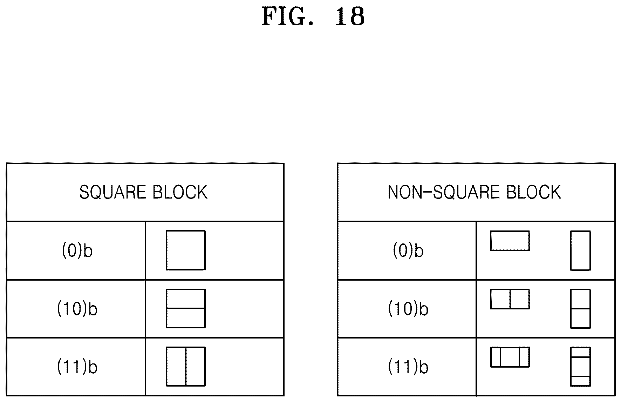

FIG. 18 illustrates other shapes of a coding unit that may be determined based on the split shape mode information expressed by binary code, according to an embodiment of the present disclosure.

Referring to FIG. 18 the image decoding apparatus 100 may split a coding unit in a square shape in the horizontal direction or the vertical direction and split a coding unit in a non-square shape in the horizontal direction or the vertical direction, based on the split shape mode information. In other words, the split shape mode information may indicate splitting a coding unit in a square shape in one side direction. In this case, the binary code of the split shape mode information indicating that a coding unit in a square shape is not split may be expressed by (0)b. When the binary code of the split shape mode information indicating not splitting a coding unit is set to (00)b, despite the absence of the split shape mode information set to (01)b, all the 2-bit binary codes of the split shape mode information need to be used However, as illustrated in FIG. 18, in a case in which three split shapes are used for a coding unit in a square shape, even when the 1-bit binary code (0)b is used as the split shape mode information, the image decoding apparatus 100 may determine not to split a coding unit, thereby efficiently using the bitstream. However, it should not be interpreted that the split shape of a coding unit in a square shape indicated by the split shape mode information is limited to only the three shapes illustrated in FIG. 18, and it should be interpreted that the split shape includes various shapes including the embodiments described above.

According to an embodiment of the present disclosure, the block shape information or the split shape mode information may be expressed by using binary code, and the information may be generated directly as a bitstream. In addition, the block shape information or the split shape mode information that may be expressed by binary code is not generated directly as a bitstream and may be used as binary code input in context adaptive binary arithmetic coding (CABAC).

A process, performed by the image decoding apparatus 100, of obtaining syntax about the block shape information or the split shape mode information through CABAC according to an embodiment of the present disclosure is described. A bitstream including binary code for the syntax may be obtained through the bitstream obtaining unit 110. The image decoding apparatus 100 may a syntax element indicating the detect block shape information or the split shape mode information by performing inverse binarization on a bin string included in the obtained bitstream. According to an embodiment of the present disclosure, the image decoding apparatus 100 may obtain a set of binary bin strings corresponding to a syntax element to be decoded, decode each bin by using probability information, and the image decoding apparatus 100 may repeat the above steps until the bin string including the decoded bin matches one of the bin strings previously obtained. The image decoding apparatus 100 may determine the syntax element by performing inverse binarization on the bin string.

According to an embodiment of the present disclosure, the image decoding apparatus 100 may determine syntax for the bin string by performing a decoding process of adaptive binary arithmetic coding, and the image decoding apparatus 100 may update a probability model for bins obtained through the bitstream obtaining unit 110. Referring to FIG. 17, the bitstream obtaining unit 110 of the image decoding apparatus 100 may obtain a bitstream indicating binary code indicating the split shape mode information according to an embodiment of the present disclosure. The image decoding apparatus 100 may determine syntax about the split shape mode information by using the obtained binary code having a size of 1 bit or 2 bits. The image decoding apparatus 100 may update probability of each bit of the 2-bit binary code in order to determine the syntax about the split shape mode information. In other words, the image decoding apparatus 100 may update a probability to have a value of 0 or 1 when decoding the next bin, depending on whether the value of the first bin of the 2-bit binary code is 0 or 1.

According to an embodiment of the present disclosure, the image decoding apparatus 100 may update probability for bins used in a process of decoding bins of a bin string for syntax, in a process of determining syntax, and the image decoding apparatus 100 may not update the probability at a specific bit of the bin string and may determine that the probabilities are the same.

Referring to FIG. 17, in a process of determining syntax by using a bin string indicating the split shape mode information about a coding unit in a non-square shape, the image decoding apparatus 100 may determine syntax about the split shape mode information by using a bin having a value of 0 when the coding unit in a non-square shape is not split. In other words, when the block shape information indicates that the current coding unit has a non-square shape, a first bin of a bin string for the split shape mode information may be 0 when the coding unit in a non-square shape is not split, and 1 when the coding unit in a non-square shape is split into two or three coding units. Accordingly, the probability that the first bin of the bin string for the split shape mode information about the coding unit in a non-square is 0 may be 1/3, and the probability for 1 may be 2/3. As described above, as the split shape mode information indicating that a coding unit in a non-square shape is not split may be expressed by only a 1-bit bin string having a value of 0, the image decoding apparatus 100 may determine syntax about the split shape mode information by determining whether the second bin of the split shape mode information is 0 or 1 only when the first bin of the split shape mode information is 1. According to an embodiment of the present disclosure, the image decoding apparatus 100 may decode bins assuming that, when the first bin of the split shape mode information is 1, the probability that the second bin is 0 or 1 is the same.

According to an embodiment of the present disclosure, the image decoding apparatus 100 may use various probabilities for each bin in the process of determining a bin of the bin string for the split shape mode information. According to an embodiment of the present disclosure, the image decoding apparatus 100 may determine the probability of a bin for the split shape mode information differently depending on the direction of a non-square block. According to an embodiment of the present disclosure, the image decoding apparatus 100 may determine the probability of a bin for the split shape mode information differently depending on the area or the length of the long side of the current coding unit. According to an embodiment of the present disclosure, the image decoding apparatus 100 may determine the probability of a bin for the split shape mode information differently depending on at least one of the shape or length of the long side of the current coding unit.

According to an embodiment of the present disclosure, the image decoding apparatus 100 may determine the probability of a bin for the split shape mode information to be the same for coding units of a predetermined size or more. For example, the probability of a bin for the split shape mode information may be determined to be the same for coding units having a size of 64 samples or more based on the length of the long side of the coding unit.

According to an embodiment of the present disclosure, the image decoding apparatus 100 may determine the initial probability for the bins forming a bin string of the split shape mode information based on the slice type (e.g., I slice, P slice, or B slice).

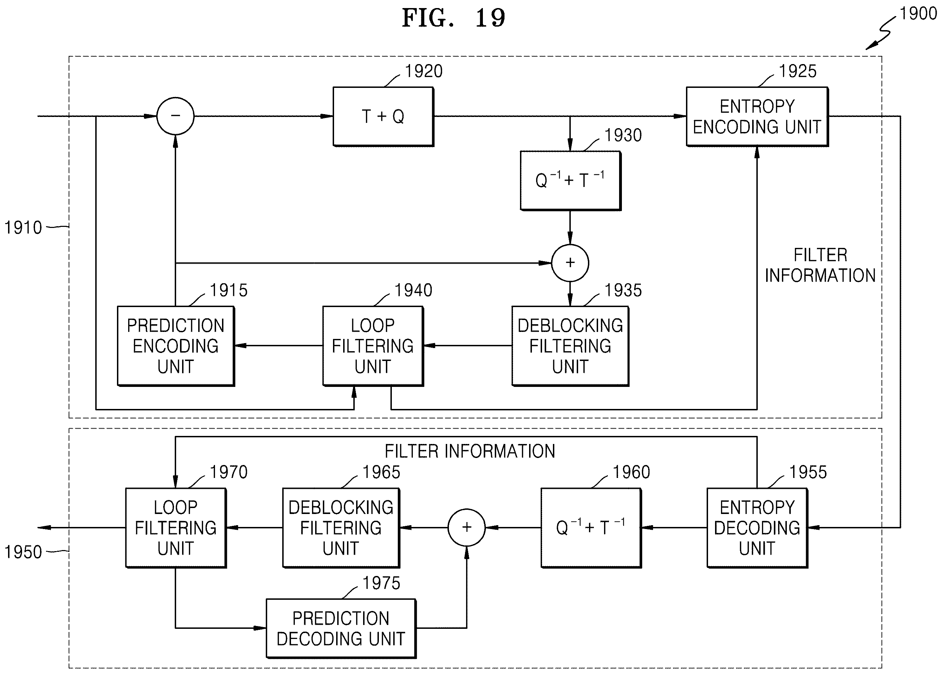

FIG. 19 is a block diagram of an image encoding and decoding system that performs loop filtering.

An encoding stage 1910 of an image encoding and decoding system 1900 may transmit an encoded bitstream of an image, and a decoding stage 1950 thereof receives and decodes a bitstream so as to output a reconstructed image. Here, the encoding stage 1910 may have a similar configuration to the image encoding apparatus 200 to be described below, and the decoding stage 1950 may have a similar configuration to the image decoding apparatus 100.

In the encoding stage 1910, a prediction encoding unit 1915 outputs prediction data through inter prediction and intra prediction, a transform and quantization unit 1920 outputs a quantized transform coefficient of residual data between prediction data and the current input image. An entropy encoding unit 1925 encodes and converts the quantized transform coefficient and outputs as a bitstream. The quantized transform coefficient passes through an inverse quantization and inverse transform unit 1930 to be reconstructed as data of a spatial area, and data of the reconstructed spatial area passes through a deblocking filtering unit 1935 and a loop filtering unit 1940 to be output as a reconstructed image. The reconstructed image passes through the prediction encoding unit 1915 and then is used as a reference image of the next input image.

The encoded image data of the bitstream received by the decoding stage 1950 passes through an entropy decoding unit 1955 and an inverse quantization and inverse transform unit 1960 and is reconstructed as residual data of spatial area. As prediction data output from a prediction decoding unit 1975 and the residual data are combined thus forming the image data of spatial area, and a deblocking filtering unit 1965 and a loop filtering unit 1970 perform filtering on the image data of spatial area and may output a reconstructed image of the current original image. The reconstructed image may be used by the prediction decoding unit 1975 as a reference image for the next original image.

The loop filtering unit 1940 of the encoding stage 1910 performs loop filtering by using filter information input by a user or according to system settings. The filter information used by the loop filtering unit 1940 is output to the entropy encoding unit 1925 and transmitted with the encoded image data to the decoding stage 1950. The loop filtering unit 1970 of the decoding stage 1950 may perform loop filtering based on the filter information input from the decoding stage 1950.

The embodiment described above describes an operation related to the image decoding method performed by the image decoding apparatus 100. In the following description, the operation of the image encoding apparatus 200 to perform an image encoding method corresponding to a process in the reverse order to the image decoding method is described through an embodiment of the present disclosure.

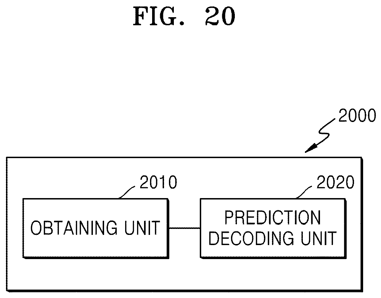

FIG. 20 is a block diagram illustrating a configuration of an image decoding apparatus according to an embodiment of the present disclosure.

Referring to FIG. 20, an image decoding apparatus 2000 may include an obtaining unit 2010 and a prediction decoding unit 2020.

The obtaining unit 2010 and the prediction decoding unit 2020 according to an embodiment of the present disclosure may be implemented as at least one processor. In an embodiment, the obtaining unit 2010 and the prediction decoding unit 2020 may operate according to instructions stored in memory.

The image decoding apparatus 2000 may include memory that stores input/output data of the obtaining unit 2010 and the prediction decoding unit 2020. Furthermore, the image decoding apparatus 2000 may include a memory controller that controls the data input/output of the memory.

In an embodiment, the obtaining unit 2010 may correspond to the entropy decoding unit 1955 illustrated in FIG. 19. In an embodiment, the prediction decoding unit 2020 may correspond to the prediction decoding unit 1975 illustrated in FIG. 19.

The obtaining unit 2010 may obtain a bitstream generated as a result of encoding a picture. The bitstream may include a result of encoding a current block. In an embodiment, the obtaining unit 2010 may receive the bitstream from the image encoding apparatus through a network. In an embodiment, the obtaining unit 2010 may obtain the bitstream from a data storage medium including a magnetic medium, such as a hard disk, a floppy disk, and a magnetic tape, an optical recording medium, such as CD-ROM and DVD, a magneto-optical medium such as a floptical disk, etc.

The obtaining unit 2010 may obtain syntax elements for decoding a picture from the bitstream. Values corresponding to the syntax elements may be included in the bitstream according to the hierarchical structure of a picture. In an embodiment, the obtaining unit 2010 may obtain syntax elements by entropy decoding the bins included in the bitstream.

In an embodiment, the bitstream may include information about the prediction mode of a current block within a current picture. The current block may be a maximum coding unit, a coding unit, a transform unit, or a prediction unit, which are split from the current picture to be decoded. In an embodiment, the prediction mode of a current block may be an intra mode or an inter mode.

The prediction decoding unit 2020 may reconstruct the current block by performing intra prediction or inter prediction on the current block according to the prediction mode of the current block.

In an embodiment, when the prediction mode of a current block is an intra mode, the obtaining unit 2010 may obtain information about the intra prediction mode of the current block from the bitstream.

In an embodiment, when the prediction mode of a current block is an intra mode, the obtaining unit 2010 may obtain, from the bitstream, information indicating whether refinement is performed on the intra prediction mode of a current block. In an embodiment, 'the refinement on an intra prediction mode' may include an operation of determining a second intra prediction mode indicating finer directions, based on the first intra prediction mode determined by using the bitstream. For example, it may mean that the image decoding apparatus 2000 determines one intra prediction mode from among 129 directional modes (e.g., 65 general directional modes and 64 finer directional modes) based on the first intra prediction mode (e.g., the 64th intra prediction mode) determined among 65 general directional modes (e.g., the second intra prediction mode to the 66th intra prediction mode).

In an embodiment, the obtaining unit 2010 may obtain information about a method of determining an intra prediction mode. The intra prediction mode determining method may include at least one of a first determination method in which an intra prediction mode is determined by using only the information obtained from the bitstream, a second determination method in which an intra prediction mode is determined without using the information obtained from the bitstream, or a third determination method in which an intra prediction mode is determined by performing the refinement on an intra prediction mode determined based on the information obtained from the bitstream. In an embodiment, the information about the intra prediction mode determining method may be included in at least one of block unit syntax, coding tree syntax, tile syntax, slice syntax, picture syntax, or sequence syntax of a bitstream.

In an embodiment, the prediction decoding unit 2020 may determine an intra prediction mode indicated by the information about an intra prediction mode obtained from a bitstream by using the first determination method. The first determination method according to an embodiment may be one of intra prediction mode determination methods of the H.266 versatile video coding (VVC) standard or the H.265 high efficiency video coding (HEVC) standard.

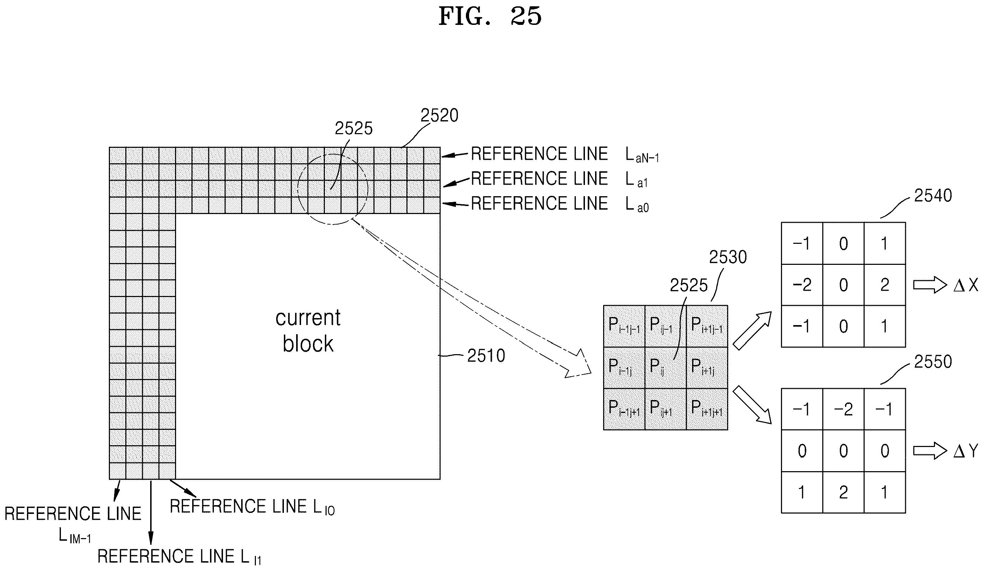

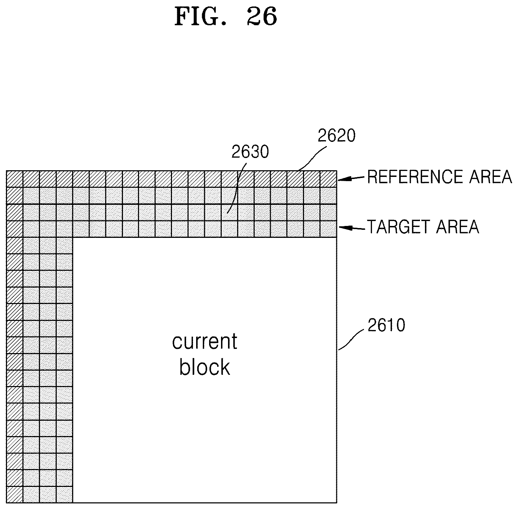

In an embodiment, the prediction decoding unit 2020 may determine an intra prediction mode from among all intra prediction modes by using the second determination method. In an embodiment, the prediction decoding unit 2020 may determine an intra prediction mode based on the gradients of reference samples of a current block. The process, performed by the prediction decoding unit 2020 according to an embodiment, of determining an intra prediction mode based on the gradient is described with reference to FIG. 25. In an embodiment, the prediction decoding unit 2020 may determine an intra prediction mode based on a result of performing prediction by using the reconstructed samples of a current block. The process, performed by the prediction decoding unit 2020 according to an embodiment, of determining an intra prediction mode based on the result of performing prediction is described with reference to FIG. 26.

In an embodiment, the prediction decoding unit 2020 may determine the first intra prediction mode based on the intra prediction mode obtained from a bitstream by using the third determination method, and may determine the second intra prediction mode based on the first intra prediction mode.

The obtaining unit 2010 may obtain information about the intra prediction mode of a current block. The prediction decoding unit 2020 may determine the first intra prediction mode of a current block based on the obtained information.

In an embodiment, the prediction decoding unit 2020 may determine the first intra prediction mode based on the intra prediction mode of a surrounding block (e.g., at least one of the left side, the upper side, the upper left side, the upper right side, or the lower left side of a current block).

In an embodiment, the prediction decoding unit 2020 may generate a most propable mode (MPM) list including a plurality of intra prediction modes, based on the prediction mode of the surrounding block. The prediction decoding unit 2020 may obtain information about whether a current block determines an intra prediction mode by using the MPM list. In an embodiment, when a finer intra prediction mode (e.g., a refined intra prediction mode) exists in the prediction mode of a surrounding block, the prediction decoding unit 2020 may generate an MPM list including intra prediction modes close to a finer intra prediction mode. In an embodiment, the prediction decoding unit 2020 may store an intra prediction mode close to the finer intra prediction mode in order to generate the MPM list of a surrounding block. For example, even when the second intra prediction mode of a current block indicates a finer direction compared with the first intra prediction mode, the prediction decoding unit 2020 may store the first intra prediction mode as the intra prediction mode of a current block.

In an embodiment, when the obtained information indicates determining the intra prediction mode by using the MPM list, the obtaining unit 2010 may obtain information indicating one of one of the intra prediction modes included in the MPM list. The prediction decoding unit 2020 may determine the first intra prediction mode based on the obtained information.

In an embodiment, when the obtained information indicates determining an intra prediction mode without using the MPM list, the obtaining unit 2010 may obtain information indicating one of the other intra prediction modes except for the intra prediction modes included in the MPM list. The prediction decoding unit 2020 may determine the first intra prediction mode based on the obtained information.

In an embodiment, the obtaining unit 2010 may obtain information about the first intra prediction mode. The information about the first intra prediction mode may include an index about the intra prediction mode. The prediction decoding unit 2020 may determine the first intra prediction mode of a current block by using the information about the first intra prediction mode.

In an embodiment, the prediction decoding unit 2020 may perform refinement on the intra prediction mode of a current block. The prediction decoding unit 2020 may determine a second intra prediction mode based on the first intra prediction mode. The prediction decoding unit 2020 may perform intra prediction on a current block by using the second intra prediction mode. In an embodiment, the second intra prediction mode may mean a refined first intra prediction mode.

In an embodiment, the prediction decoding unit 2020 may determine the search range of the second intra prediction mode based on the first intra prediction mode. The search range may include a plurality of intra prediction modes including the first intra prediction mode. The prediction decoding unit 2020 may determine the second intra prediction mode in the search range. The prediction decoding unit 2020 may perform intra prediction on a current block by using the second intra prediction mode.

In an embodiment, when the refinement is not performed on the intra prediction mode of a current block, the prediction decoding unit 2020 may perform intra prediction on a current block by using the first intra prediction mode.

The prediction decoding unit 2020 may generate a prediction block corresponding to a current block through the intra prediction. The prediction decoding unit 2020 may generate a reconstructed current block by using a prediction block. In an embodiment, the prediction decoding unit 2020 may determine the prediction block as a reconstructed current block. In an embodiment, the prediction decoding unit 2020 may generate a reconstructed current block by combining residual data obtained by the obtaining unit 2010 from a bitstream with prediction block. The reconstructed current block may be used as a reference block for the next block.

In the intra mode, in an assumption that continuity exists between the surrounding samples of a current block and samples within the current block, a prediction block of the current block may be generated based on the surrounding samples of the current block according to the intra prediction mode.

The prediction decoding unit 2020 according to an embodiment may use not only the surrounding samples of a current block included in a current picture, but also a spatial reference sample included in the current picture, for the intra prediction. When using the reconstructed sample earlier than the current block, as the samples of a current block are predicted by using not only samples directly adjacent to the current block, but also samples far from the current block, the size of the residual data may be reduced. The image decoding apparatus 2000 according to an embodiment of the present disclosure may improve compression efficiency by increasing the efficiency of intra prediction.

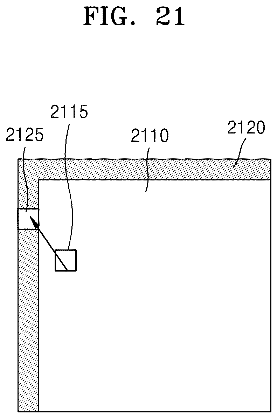

FIG. 21 is a diagram illustrating a process of predicting a current image by using a reference sample, according to an embodiment of the present disclosure.

The image decoding apparatus 2000 according to an embodiment of the present disclosure may perform prediction on a current block 2110 based on the data reconstructed before the current block. The image decoding apparatus 2000 may determine a reference area 2120 with respect to the current block 2110 from among the data reconstructed before the current block 2110. The image decoding apparatus 2000 may perform prediction on a current sample 2015 of the current block 2010 based on a reference sample 2125 included in a reference area.

Referring to FIG. 21, the image decoding apparatus 2000 may determine the reference sample 2125 corresponding to the current sample 2115. The reference sample 2125 may be determined based on the intra prediction mode of the current sample 2115. In an embodiment, the reference sample 2125 may include at least one of the upper sample or left sample of the current sample 2115 or samples indicated by the intra prediction mode.

In an embodiment, the image decoding apparatus 2000 may determine the reference sample 2125 indicated by the intra prediction mode as a predicted sample with respect to the current sample 2115. In an embodiment, when the intra prediction mode of the current sample 2115 indicates an integer pixel, the image decoding apparatus 2000 may determine a sample indicated by the intra prediction mode of the current sample 2115 as the reference sample 2125.

In an embodiment, when the intra prediction mode of the current sample 2115 indicates a sub-pixel, the image decoding apparatus 2000 may determine a predicted sample with respect to the current sample 2115 by the weighted sum of a plurality of integer pixel reference samples 2125. For example, when the reference sample 2125 by the intra prediction mode indicates (6.2, -1), the image decoding apparatus 2000 may determine a predicted sample by using the weighted sum of a (6, -1) reference sample and a (7, -1) reference sample. The weight may be a value determined corresponding to the distance between a sub-pixel and integer pixels.

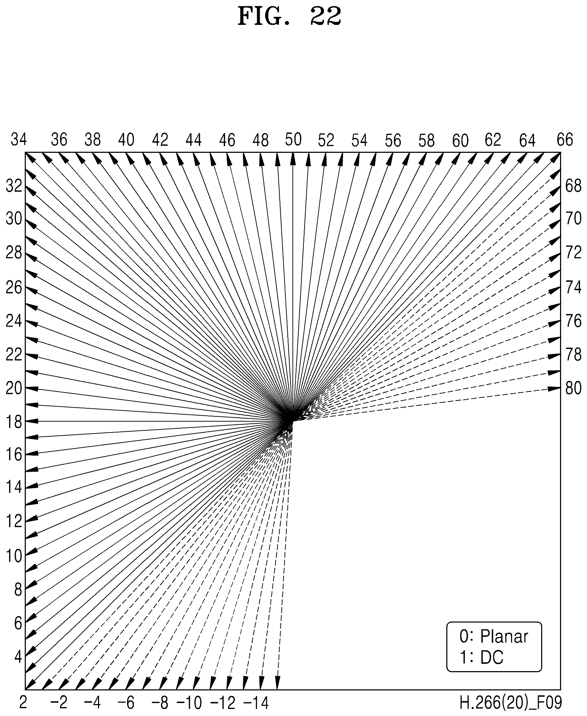

FIG. 22 is a diagram illustrating intra prediction directions according to an embodiment of the present disclosure.

Referring to FIG. 22, in an embodiment, a plurality of intra prediction modes may include a non-directional 0th Intra_Planar mode, a non-directional 1st Intra_DC mode, directional 2nd to 66th Intra_Angular modes, and -14th to -1st and 67th to 80th Intra_ Wide_Angular modes.

The Intra_Planar mode may mean a mode in which a predicted sample is determined based on the weighted average value according to the distances from a left reference sample, an upper reference sample, a lower left sample, and an upper right sample of a current block.

The Intra_DC mode may mean a mode in which the average value of reference samples is determined as a predicted sample.

In the Intra_Angular modes, considering the directions indicated by the Intra_Angular modes, the positions of reference samples to generate predicted samples of samples within a current block may be identified. For example, in the 34th mode, reference samples positioned in a direction at 45 degrees to the upper left side based on samples within a current block may be identified.

The Intra_Wide_Angular modes may be used to identify reference samples of samples within a current block that is non-square. In an embodiment, the image decoding apparatus 2000 may determine one of the Intra_Wide_Angular modes as the intra prediction mode of a current block that is non-square. In an embodiment, the image decoding apparatus 2000 may determine one of the Intra_Wide_Angular modes as a refined intra prediction mode of a current block that is square. For example, the image decoding apparatus 2000 may determine one of the intra_Wide_Angular modes as a second intra prediction mode, based on the first intra prediction mode that is one of the Intra_Angular modes.

The image decoding apparatus 2000 according to an embodiment of the present disclosure may determine the intra prediction mode of a current block to perform intra prediction on a current block.

In an embodiment, when the prediction mode of a current block is an intra mode, the image decoding apparatus 2000 may obtain information about the intra prediction mode of a current block from the bitstream. The information about an intra prediction mode may include one of information indicating an intra prediction mode or information indicating a range that may be determined as an intra prediction mode. For example, the information about an intra prediction mode may include index information (e.g., predModelntra == 64) indicating the 64th intra prediction mode. For example, the information about an intra prediction mode may include information (e.g., 2 to 34) indicating a predetermined range.

The intra prediction mode of a current block may be any one of a plurality of intra prediction modes. In an embodiment, a plurality of intra prediction modes may include directional prediction modes and non-directional prediction modes.

The intra prediction mode illustrated in FIG. 22 is an example, and the number and type of intra prediction modes that are usable in the intra mode by the image decoding apparatus 2000 according to an embodiment may be variously set.

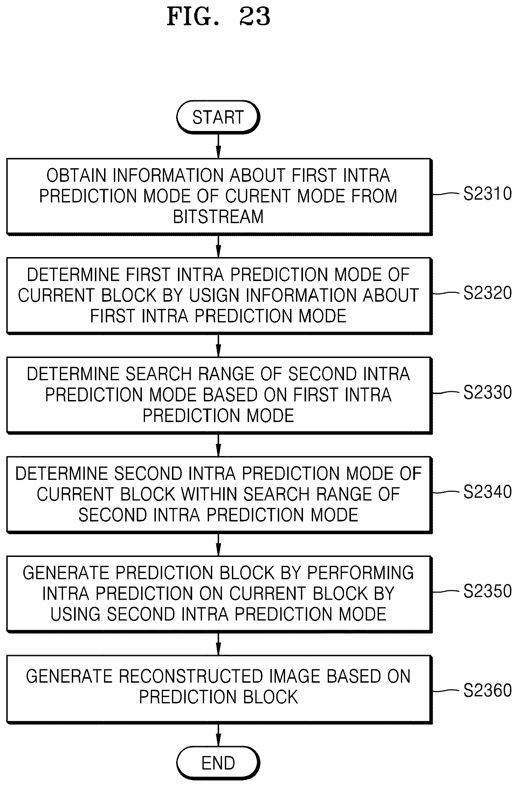

FIG. 23 is a flowchart illustrating an image decoding method that performs intra prediction on a current block by using an intra prediction mode, according to an embodiment of the present disclosure.

Referring to FIG. 23, in operation S2310, the image decoding apparatus 2000 may obtain information about the first intra prediction mode of a current block from a bitstream. The information about the first intra prediction mode may include information that the prediction mode of a current block is an intra prediction mode. In an embodiment, the information about the first intra prediction mode may include information about an index indicating the first intra prediction mode or information about the range of the first intra prediction mode. In an embodiment, the first intra prediction mode may be included in coding unit syntax of a bitstream.

In operation S2320, the image decoding apparatus 2000 may determine the first intra prediction mode of a current block by using the information about the first intra prediction mode. In an embodiment, the first intra prediction mode may include at least one of a non-directional intra mode (e.g., Intra_Planar_Mode or Intra_DC_Mode) or a directional intra mode (e.g., Intra_Angular_Mode or Intra_Wide_Angular_Mode). According to an embodiment, the index value of the first intra prediction mode may be an integer. For example, the index value of the Intra_Planar_Mode may indicate 0. The index value of the Intra_DC_Mode may indicate 1. The index value of the Intra_Angular_Mode may indicate at least one of 2 to 66. The index value of the Intra_Wide_Angular_Mode may indicate at least one of -14 to -1 or 67 to 80.

In operation S2330, the image decoding apparatus 2000 may determine the search range of the second intra prediction mode based on the first intra prediction mode. The search range may include a plurality of intra prediction modes including the first intra prediction mode. For example, the search range may include the first intra prediction mode (e.g., an index of 64) and a plurality of finer intra prediction modes (e.g., an index of 63.5, the 64.5th) adjacent to the first intra prediction mode. According to an embodiment, an index value of the intra prediction mode included in the search range may be a rational number. For example, the index value of the intra mode included in the search range may indicate an integer value and a rational number between integer values. The plurality of finer intra prediction modes may indicate a rational value other than an integer.

In operation S2340, the image decoding apparatus 2000 may determine a second intra prediction mode for the current block within the search range of the second intra prediction mode. In an embodiment, the image decoding apparatus 2000 may determine the second intra prediction mode based on a plurality of reference samples of a reference area of a current block.

In operation S2350, the image decoding apparatus 2000 may generate a prediction block by performing intra prediction on the current block by using the second intra prediction mode. The image decoding apparatus 2000 may determine a reference sample corresponding to the sample of the current block by using the second intra prediction mode. The image decoding apparatus 2000 may generate a prediction block including a predicted sample by using a reference sample.

In operation S2360, the image decoding apparatus 2000 may generate a reconstructed image based on the prediction block. In an embodiment, the image decoding apparatus 2000 may generate a reconstructed image based on the prediction block. In an embodiment, the image decoding apparatus 2000 may generate a reconstructed current block by combining the residual data obtained from a bitstream and the prediction block.

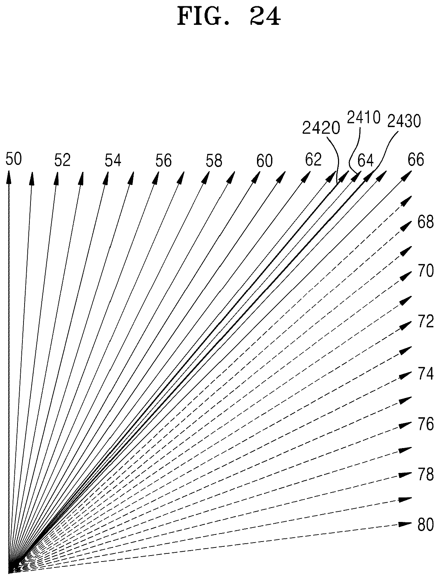

FIG. 24 is a diagram illustrating a process of determining an intra prediction mode, according to an embodiment of the present disclosure.

Referring to FIG. 24, according to an embodiment of the present disclosure, a first intra prediction mode 2410 of a current block may be the 64th intra prediction mode. The image decoding apparatus 2000 may determine the first intra prediction mode from an intra prediction mode set. In an embodiment, the image decoding apparatus 2000 may determine the first intra prediction mode 2410 based on the information obtained from the bitstream.

In an embodiment, the intra prediction mode set may include a plurality of directional modes. For example, the intra prediction mode set may include 65 directional modes (second to 66th) of the VVC standard. Alternatively, for example, the intra prediction mode set may include 33 directional modes (second to 34th) of the HEVC standard.

In an embodiment, the search range of the second intra prediction mode may include a prediction mode indicating a direction between the intra prediction modes included in the intra prediction mode set. Referring to FIG. 24, the intra prediction mode set may include an intra prediction mode having an integer value of 2 to 66, and the search range of the second intra prediction mode may include an intra prediction mode indicating an integer value of 2 to 66 or an intra prediction mode indicating a value of "integer + 0.5". For example, the intra prediction mode set may include the first intra prediction mode 2410 indicating 64, and the search range of the second intra prediction mode may include an intra prediction mode 2420 indicating 63.5, the first intra prediction mode 2410 indicating 64, and an intra prediction mode 2430 indicating the 64.5th. In an embodiment, the intra prediction modes included in the search range of the second intra prediction mode may be expressed as candidate intra prediction modes.

In an embodiment, the search range of the second intra prediction mode may include a plurality of candidate intra prediction modes indicating indexes included in a predetermined range based on the index of the value of the first intra prediction mode. For example, when the index of the first intra prediction mode indicates K (K is an integer), a candidate intra prediction mode included the in search range may indicate an index value greater than (or greater than or equal to) K-S or less than (or less than or equal to) K+T (S and T are integers). Here, the index value may indicate one of an integer or a rational number other than an integer. In an embodiment, the image decoding apparatus 2000 may obtain information about a predetermined range (e.g., an S or T value) from a bitstream. In an embodiment, a predetermined range may be a predetermined value.

In an embodiment, the candidate intra prediction mode may be determined based on the number. For example, when the number of candidate intra prediction modes is determined as N, the candidate intra prediction mode may be N prediction modes adjacent to the first intra prediction mode. Here, the index value of the N prediction modes may indicate one of an integer or a rational number other than an integer. In an embodiment, the candidate intra prediction mode may be determined based on the data obtained from a bitstream. In an embodiment, the candidate intra prediction mode may be a predetermined value.

In an embodiment, the image decoding apparatus 2000 may determine the second intra prediction mode based on the first intra prediction mode 2410. The image decoding apparatus 2000 may determine the search range of the second intra prediction mode based on a prediction mode adjacent to the first intra prediction mode 2410. For example, the image decoding apparatus 2000 may determine the search range of the second intra prediction mode including at least some of the first intra prediction mode 2410, a first candidate intra prediction mode 2420, and a second candidate intra prediction mode 2430. The image decoding apparatus 2000 may determine the second intra prediction mode from the search range of the second intra prediction mode.

In an embodiment, the image decoding apparatus 2000 may determine a third intra prediction mode based on the first intra prediction mode 2410 and the second intra prediction mode. For example, the third intra prediction mode may be determined by an average of the first intra prediction mode 2410 and the second intra prediction mode.

As the number of directional prediction modes increases, accuracy of a prediction value for a current block may increase. However, when information to be transmitted increases as the number of prediction modes increases, there is a limitation in improving performance with respect to rate-distortion. When the amount of information transmission for a prediction mode becomes greater than a gain obtained by reducing an error of a prediction value, image compression efficiency may be reduced. The image decoding apparatus 2000 according to an embodiment of the present disclosure may increase efficiency of prediction while reducing overhead of data transmission regarding an intra prediction mode.

FIG. 25 is a diagram illustrating a process of determining an intra prediction mode, according to an embodiment of the present disclosure.

Referring to FIG. 25, a reference area 2520 of a current block 2510 may include a plurality of reference lines. The reference area 2520 may include one or more reference line on the upper side of the current block 2510 and one or more reference line on the left side thereof. For example, the reference area 2520 may include N reference lines La0, ..., LaN-1 on the upper side and M reference lines La0, ..., LaM-1 on the left side.

In an embodiment, the image decoding apparatus 2000 may determine an intra prediction mode of the current block 2510 based on the reference area 2520. The image decoding apparatus 2000 may determine an intra prediction mode of the current block 2510 based on the gradient of a reference sample 2525 of the reference area 2520. The intra prediction mode determined by the image decoding apparatus 2000 according to an embodiment may be a second intra prediction mode or a refined intra prediction mode.

In an embodiment, the image decoding apparatus 2000 may determine the gradient of the reference sample 2525. The image decoding apparatus 2000 may determine an intra prediction mode based on the gradients of reference samples included in the reference area. The image decoding apparatus 2000 may determine the gradient by using the values of surrounding samples 2530 of the reference sample 2525. For example, the image decoding apparatus 2000 may determine the gradient of the reference sample 2525 by using the values of at least two samples of the reference sample 2525 and the surrounding samples 2530. In an embodiment, the surrounding samples 2530 may be included in the same reference line as the reference sample 2525 or a reference line adjacent to the reference sample.

In an embodiment, the image decoding apparatus 2000 may determine a horizontal directional change amount and a vertical directional change amount of the reference sample 2525. The image decoding apparatus 2000 may determine at least one of the horizontal directional change amount or the vertical directional change amount of the reference sample 2525 by using the reference sample 2525 and the surrounding samples 2530. The image decoding apparatus 2000 may determine at least one of the horizontal directional change amount or the vertical directional change amount by multiplying the values of the reference sample 2525 and the surrounding samples 2530 by a weight. For example, a Sobel operator may be used as the weight. The image decoding apparatus 2000 may determine a horizontal directional change amount (△X) and a vertical directional change amount (△Y) of a reference sample by using the Sobel operator.

In an embodiment, the image decoding apparatus 2000 may determine the horizontal directional change amount (△X) by applying a horizontal directional weight 2540 to the reference sample 2525 and the surrounding samples 2530. For example, a gradient of pij may be determined by -1 * pi-1j-1 -2 * pi-1j -1 * pi-1j+1 +1 * pi+1j-1 + 2 * pi+1j + 1 * pi+1j+1. The image decoding apparatus 2000 may determine the horizontal directional change amount (△Y) by applying a vertical directional weight 2550 to reference sample 2525 and the surrounding samples 2530. FIG. 25 describes the horizontal directional weight 2540 and the vertical directional weight 2550 according to an embodiment as a 3 x 3 matrix, but the present disclosure is not limited thereto, and the horizontal directional weight 2540 and the vertical directional weight 2550 may be a matrix or vector of various sizes, and the value of weight may be variously changed. The image decoding apparatus 2000 may determine the horizontal directional change amount and the vertical directional change amount for all or some of the reference samples of the reference area 2520.

In an embodiment, the image decoding apparatus 2000 may determine an intra prediction mode based on the horizontal directional change amount and the vertical directional change amount. In an embodiment, the image decoding apparatus 2000 may determine the gradient of the reference sample 2525 based on a ratio of the horizontal directional change amount and the vertical directional change amount. The image decoding apparatus 2000 may determine the gradient based on the frequency of the gradients of the reference area 2520. For example, the image decoding apparatus 2000 may determine an intra prediction mode corresponding to a gradient having the greatest frequency. In an embodiment, the image decoding apparatus 2000 may determine an intra prediction mode of the current block 2510 based on a ratio of the total of the horizontal directional change amount and the total of the vertical directional change amount of the reference area 2520.

In an embodiment, the image decoding apparatus 2000 may determine an intra prediction mode without obtaining information from a bitstream. In other words, the image decoding apparatus 2000 may determine one intra prediction mode from among all intra prediction modes, not refining the intra prediction mode determined based on the information obtained from the bitstream. The image decoding apparatus 2000 may determine the reference area of the current block 2510. The image decoding apparatus 2000 may determine the gradients of the reference samples of the reference area 2520 of the current block 2510. The image decoding apparatus 2000 may determine an intra prediction mode based on the gradient. The image decoding apparatus 2000 may determine an intra prediction mode based on at least one of an intra prediction mode corresponding to an gradient having the greatest frequency, an intra prediction mode corresponding to the average of gradients, or an intra prediction mode corresponding to a ratio of the total of the horizontal directional change amount and the total of the vertical directional change amount.

In an embodiment, the image decoding apparatus 2000 may determine an intra prediction mode based on the information obtained from the bitstream. The image decoding apparatus 2000 may determine the first intra prediction mode based on the information obtained from the bitstream. The image decoding apparatus 2000 may determine the search range of the second intra prediction mode based on the first intra prediction mode. As the process of determining the search range of the second intra prediction mode according to an embodiment of the present disclosure is described with reference to FIG. 24, the description thereof is omitted. The image decoding apparatus 2000 may determine the gradient by using the reference samples of the current block. The image decoding apparatus 2000 may determine the second intra prediction mode from among a plurality of intra prediction modes included in a search range by using the gradient. For example, the image decoding apparatus 2000 may select an intra prediction mode having the greatest frequency of the gradient or an intra prediction mode closest to the determined gradient from among the plurality of intra prediction modes included in the search range.

FIG. 26 is a diagram illustrating a process of determining an intra prediction mode, according to an embodiment of the present disclosure.

Referring to FIG. 26, a reference area 2620 and a target area 2630 of a current block 2610 may include reconstructed samples.

In an embodiment, the image decoding apparatus 2000 may determine the reference area 2620 and the target area 2630 of the current block 2610. The image decoding apparatus 2000 may determine the target area 2630 including one or more reference lines adjacent to the current block 2610. The image decoding apparatus 2000 may determine the reference area 2620 adjacent to the target area 2630. For example, the image decoding apparatus 2000 may determine the target area 2630 including three reference lines adjacent to the current block 2610, and determine the reference area 2620 including one reference line adjacent to the target area 2630.

In an embodiment, the image decoding apparatus 2000 may determine the sum of the number of reference lines of the reference area 2620 and the number of reference lines of the target area 2630 as a multiple of 2. In an embodiment, the image decoding apparatus 2000 may determine at least one of the number of reference lines of the reference area 2620 or the number of reference lines of the target area 2630, based on the size of a current block. For example, when the size of a current block is less than or equal to a predetermined size, the image decoding apparatus 2000 may determine at least one of the number of reference lines of the reference area 2620 or the number of reference lines of the target area 2630, as a first value. When the size of a current block is greater than a predetermined size, the image decoding apparatus 2000 may determine at least one of the number of reference lines of the reference area 2620 or the number of reference lines of the target area 2630, as a second value.

The image decoding apparatus 2000 may perform prediction on samples of the target area 2630 based on the reference area 2620. The image decoding apparatus 2000 may perform prediction on the samples of the target area 2630 by using the samples of the reference area 2620 and intra prediction mode. In an embodiment, the image decoding apparatus 2000 may perform prediction on the samples of the target area 2630 by using the plurality of intra prediction modes included in the search range of the second intra prediction mode illustrated in FIG. 24. For example, the image decoding apparatus 2000 may perform prediction on the target area 2630 by using each of the 64th intra prediction mode, the 63.5th intra prediction mode, and the 64.5th intra prediction mode. In an embodiment, the image decoding apparatus 2000 may perform prediction on the samples of the target area 2630 by using all or some of the intra prediction modes.

The image decoding apparatus 2000 may determine an error by using the reconstructed sample of the target area 2630 and a predicted sample of the target area 2630. The image decoding apparatus 2000 may determine an error by using at least one of cost function of sum of absolute difference (SAD), sum of squared error (SSE), or mean removed sad (MR-SAD). In an embodiment, the image decoding apparatus 2000 may determine an error with respect to the whole or part of the target area 2630.

The image decoding apparatus 2000 may determine an intra prediction mode with less error. For example, assuming that an error using the 64th intra prediction mode is Cost1, an error using the 63.5th intra prediction mode is Cost2, and an error using the 64.5th intra prediction mode is Cost3, the image decoding apparatus 2000 may determine an intra prediction mode having the smallest value from among Cost1, Cost2, and Cost3, as the second intra prediction mode.

In an embodiment, the image decoding apparatus 2000 may determine an error with respect to all intra prediction modes. The image decoding apparatus 2000 may perform prediction on the samples of the target area 2630 by using the samples of the reference area 2620 and each of all intra prediction modes. The image decoding apparatus 2000 may determine an error with respect to each of all intra prediction modes. The image decoding apparatus 2000 may determine an intra prediction mode based on the error.

In an embodiment, the image decoding apparatus 2000 may determine the second intra prediction mode based on the error with respect to the intra prediction mode included in the search range. The intra prediction mode may be determined based on the information obtained from the bitstream. The image decoding apparatus 2000 may determine the first intra prediction mode based on the information obtained from the bitstream. The image decoding apparatus 2000 may determine the search range of the second intra prediction mode based on the first intra prediction mode. As the process of determining the search range of the second intra prediction mode according to an embodiment of the present disclosure is described with reference to FIG. 24, a description thereof is omitted. The image decoding apparatus 2000 may perform prediction on the samples of the target area 2630 by using the samples of the reference area 2620 and the plurality of intra prediction modes included in the search range. The image decoding apparatus 2000 may determine an error with respect to the plurality of intra prediction modes included in the search range. The image decoding apparatus 2000 may determine the second intra prediction mode based on the error.

The image decoding apparatus 2000 according to an embodiment may determine an intra prediction mode by using the gradient and the error. The image decoding apparatus 2000 may determine the gradient of the current block 2610. As the process of determining the gradient, which is performed by the image decoding apparatus 2000 according to an embodiment, is described with reference to FIG. 25, a description thereof is omitted. The image decoding apparatus 2000 may determine an intra prediction mode corresponding to the gradient. The image decoding apparatus 2000 may perform prediction on the samples of the target area 2630 by using the samples of the reference area 2620 and the determined intra prediction mode. The image decoding apparatus 2000 may determine an error with respect to the determined intra prediction mode. The image decoding apparatus 2000 may determine an intra prediction mode based on the error.

In an embodiment, the image decoding apparatus 2000 may determine the second intra prediction mode by using the search range, the gradient, and the error. The intra prediction mode may be determined based on the information obtained from the bitstream. The image decoding apparatus 2000 may determine the first intra prediction mode based on the information obtained from the bitstream. The image decoding apparatus 2000 may determine the search range of the second intra prediction mode based on the first intra prediction mode. As the process of determining the search range of the second intra prediction mode according to an embodiment of the present disclosure is described with reference to FIG. 24, a description thereof is omitted. The image decoding apparatus 2000 may perform prediction on the samples of the target area 2630 by using the samples of the reference area 2620 and the plurality of intra prediction modes included in the search range. The image decoding apparatus 2000 may determine an error with respect to the plurality of intra prediction modes included in the search range. The image decoding apparatus 2000 may determine the gradient of the current block 2610. The image decoding apparatus 2000 may determine the second intra prediction mode based on the error and the second gradient.

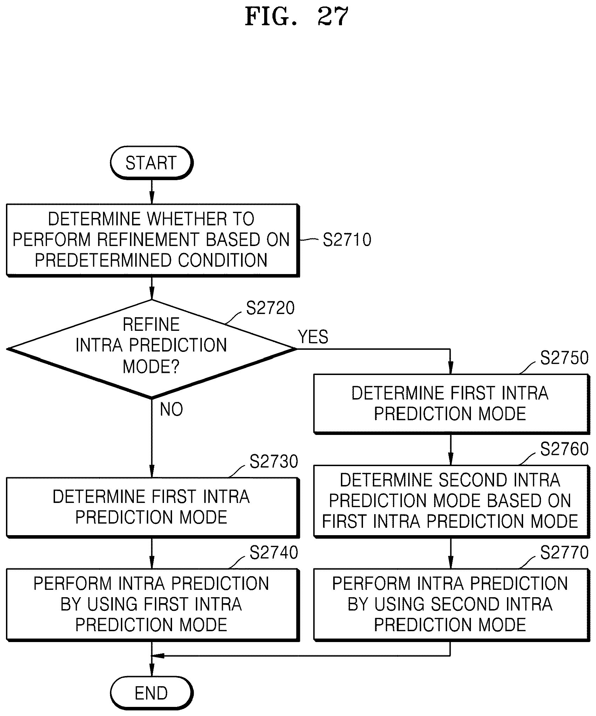

FIG. 27 is a flowchart illustrating a process of determining an intra prediction mode based on a predetermined condition, according to an embodiment of the present disclosure.

Referring to FIG. 23, in operation S2710, the image decoding apparatus 2000 may determine whether to perform refinement, based on a predetermined condition. The image decoding apparatus 2000 may identify whether the predetermined condition is satisfied. When the predetermined condition is satisfied, the image decoding apparatus 2000 may determine to perform refinement on the first intra prediction mode (determining the second intra prediction mode).

In an embodiment, the image decoding apparatus 2000 may identify whether the first intra prediction mode determined based on the bitstream is included in a predetermined range based on a certain mode. For example, the image decoding apparatus 2000 may identify whether a difference between the first intra prediction mode and a horizontal mode (the 50th in the case of WC) in the absolute value is less than or equal to k. When the intra prediction mode is included in a predetermined range based on the predetermined mode, the image decoding apparatus 2000 may determine to perform the refinement on the first intra prediction mode.

In an embodiment, the image decoding apparatus 2000 may identify whether the first intra prediction mode determined based on the bitstream is the predetermined mode. For example, the image decoding apparatus 2000 may identify whether the first intra prediction mode is the Wide_Angular mode, the DC mode, or the Planar mode. When the first intra prediction mode is not the predetermined mode, the image decoding apparatus 2000 may determine to perform refinement on the first intra prediction mode. In an embodiment, when the first intra prediction mode is the predetermined mode, the image decoding apparatus 2000 may determine to perform refinement on the first intra prediction mode based on the search range that determines a predetermined angular mode.

In an embodiment, the image decoding apparatus 2000 may identify whether it is an MPM mode. When it is the MPM mode, the image decoding apparatus 2000 may determine to perform refinement on the first intra prediction mode.

In an embodiment, the image decoding apparatus 2000 may identify whether the size of a current block is greater than a predetermined size. For example, the image decoding apparatus 2000 may determine whether at least one of the width and height of a current block is greater than a predetermined size or whether the area of a current block is greater than a predetermined size. When the size of a current block is greater than a predetermined size, the image decoding apparatus 2000 may determine to perform refinement on the first intra prediction mode.

In an embodiment, the image decoding apparatus 2000 may identify the availability of a neighboring area of a current block. The image decoding apparatus 2000 may identify the availability of the upper area and the left area of a current block. For example, the image decoding apparatus 2000 may identify whether the upper area or the left area of a current block is not referred to (e.g., a case of being out of a picture boundary or a tile boundary). The image decoding apparatus 2000 may determine whether to perform refinement on the first intra prediction mode, based on the availability. When only one of the upper area and the left area of a current block is not available, the image decoding apparatus 2000 may determine to perform refinement by using an available area. When both of the upper area and the left area of a current block are not available, the image decoding apparatus 2000 may determine not to perform refinement on the first intra prediction mode.

In an embodiment, the image decoding apparatus 2000 may identify refinement activation information included in the bitstream. The refinement activation information may be included in at least one of a slice header, a picture header, a tile header, a CTU header, a sequence header, a sequence parameter set (SPS), or a picture parameter set (PPS) of the bitstream. The image decoding apparatus 2000 may determine whether to perform refinement on the first intra prediction mode, based on the refinement activation information.

In an embodiment, when the prediction mode is an intra prediction mode, the image decoding apparatus 2000 may determine to perform refinement on the first intra prediction mode.

In an embodiment, the image decoding apparatus 2000 may determine whether to perform refinement on the first intra prediction mode for each color component. In an embodiment, the image decoding apparatus 2000 may perform refinement on the first intra prediction mode, only for a specific color component (e.g., luma component). In an embodiment, the image decoding apparatus 2000 may determine a result of performing refinement for a specific color component as an intra prediction mode of the other color components. In an embodiment, the image decoding apparatus 2000 may perform refinement on an intra prediction mode for the other color components, based on the result of performing refinement for a specific color component.

In operation S2720, the image decoding apparatus 2000 may identify whether to refine the first intra prediction mode. When the first intra prediction mode is not refined, the process proceeds to operation S2730, and when first intra prediction mode is refined, the process proceeds to operation S2750.

In operation S2730, the image decoding apparatus 2000 may determine the first intra prediction mode. As the operation of determining the first intra prediction mode, which is performed by the image decoding apparatus 2000 according to an embodiment of the present disclosure is described with reference to FIGS. 20 to 24, a description thereof is omitted. In operation S2740, the image decoding apparatus 2000 may perform intra prediction by using the first intra prediction mode.

In operation S2750, the image decoding apparatus 2000 may determine the first intra prediction mode. As the operation of determining the first intra prediction mode, which is performed by the image decoding apparatus 2000 according to an embodiment of the present disclosure, is described with reference to FIGS. 20 to 24, a description thereof is omitted.

In operation S2760, the image decoding apparatus 2000 may determine the second intra prediction mode based on the first intra prediction mode. As the operation of determining the second intra prediction mode based on the first intra prediction mode, which is performed by the image decoding apparatus 2000 according to an embodiment of the present disclosure, is described with reference to FIGS. 20 to 26, a description thereof is omitted. In operation S2770, the image decoding apparatus 2000 may perform intra prediction by using the second intra prediction mode.

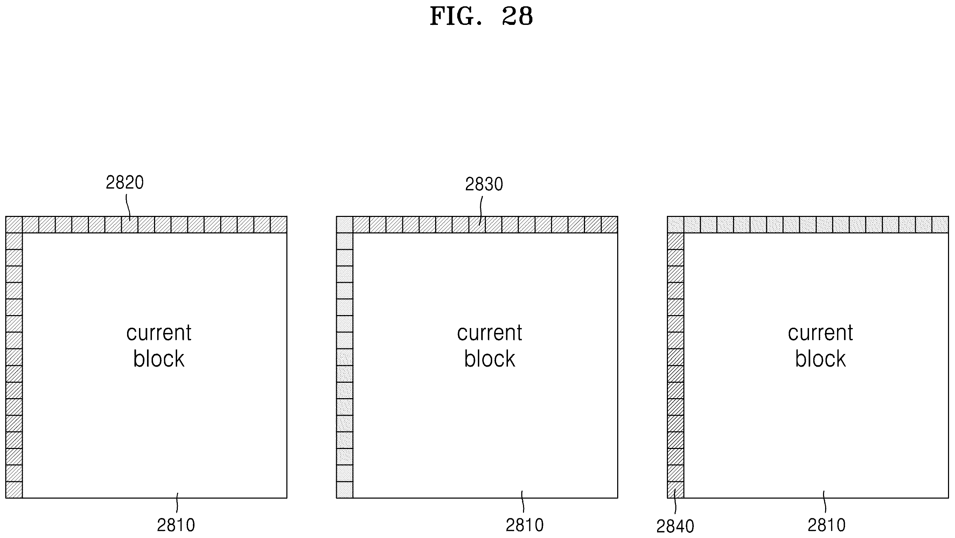

FIG. 28 is a diagram illustrating a reference area of a current block according to an embodiment of the present disclosure.

When the first intra prediction mode of a current block 2810 is a DC mode, the image decoding apparatus 2000 according to an embodiment of the present disclosure may determine a DC mode using one reference area of a plurality of reference areas 2820, 2830, and 2840, as a second intra prediction mode. The image decoding apparatus 2000 may determine a reference area with respect to the DC mode.

In an embodiment, when a multiple reference line prediction (MRLP) technique is used, the plurality of reference areas 2820, 2830, and 2840 may be reference areas including not a reference line adjacent to a current block, but another reference line.

In an embodiment, the image decoding apparatus 2000 may determine one reference area from among the plurality of reference areas 2820, 2830, and 2840 based on a representative value of the plurality of reference areas 2820, 2830, and 2840. In an embodiment, the representative value may include at least one of a mean value, a median value, or a mode value of reference samples of a reference area.

In an embodiment, the image decoding apparatus 2000 may determine a first representative value based on the left reference samples and the upper reference samples of the current block 2810 corresponding to the first reference area 2820. In an embodiment, the image decoding apparatus 2000 may determine a second representative value based on the upper reference samples of the current block 2810 corresponding to the second reference area 2830. In an embodiment, the image decoding apparatus 2000 may determine a third representative value based on the left reference samples of the current block 2810 corresponding to the third reference area 2840.

In an embodiment, the image decoding apparatus 2000 may determine errors of the first reference area 2820, the second reference area 2830, and the third reference area 2840 based on the first representative value, the second representative value, and the third representative value. The image decoding apparatus 2000 may perform prediction on each reference area based on each representative value. The image decoding apparatus 2000 may determine an error based on a result of performing prediction on each reference area. The image decoding apparatus 2000 may determine a reference area with less error.

In an embodiment, the image decoding apparatus 2000 may determine a plurality of representative values for each of the plurality of reference areas 2820, 2830, and 2840. The image decoding apparatus 2000 may determine a representative value with the least error from among the plurality of representative values, as a prediction value.

FIG. 25 illustrates that, according to an embodiment of the present disclosure, the first reference area 2820 includes both of the adjacent upper and left areas, the second reference area 2830 includes an adjacent upper area, and the third reference area 2840 includes an adjacent left area, but the present disclosure is not limited thereto, and the reference area may be determined by using all or some of the reference samples of the reference line.

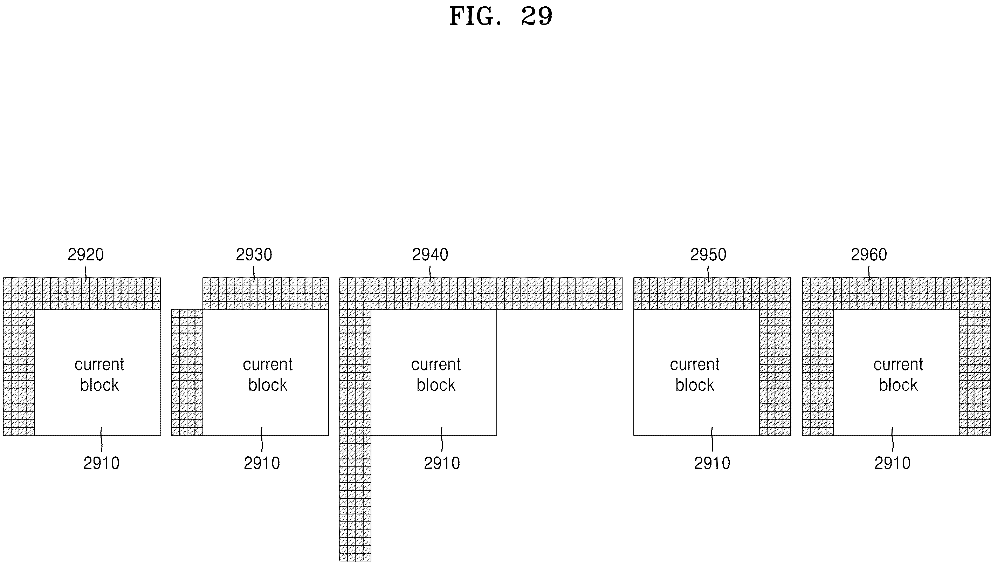

FIG. 29 is a diagram illustrating a reference area of a current block according to an embodiment of the present disclosure.

Referring to FIG. 29, a reference area of a current block 2910 may have various shapes. Referring to FIGS. 21, 25, 26, and 28, the image decoding apparatus 2000 according to an embodiment of the present disclosure is described as one determining the intra prediction mode of the current block 2910 or performing prediction by using a first reference area 2920 including the left reference samples, the upper reference samples, and the upper left reference samples, but the present disclosure is not limited thereto, and may determine the intra prediction mode of the current block 2910, or perform prediction, by using a reference area including various reference samples.

In an embodiment, the image decoding apparatus 2000 may determine the intra prediction mode of the current block 2910, or perform prediction, by using a second reference area 2930 including the left reference samples and the upper reference samples.

In an embodiment, the image decoding apparatus 2000 may determine the intra prediction mode of the current block 2910, or perform prediction, by using a third reference area 2940 including the left reference samples, the upper reference samples, the upper left reference samples, the lower left reference samples, and the upper right reference samples.

In an embodiment, the image decoding apparatus 2000 may determine the intra prediction mode of the current block 2910, or perform prediction, by using a fourth reference area 2950 including at least some of the right reference samples, the upper reference samples, and the upper right reference sample. The image decoding apparatus 2000 may determine a reference area based on a coding order (or a coding direction) of a block. In an embodiment, when coding of a block is performed from right to left, the image decoding apparatus 2000 may determine the intra prediction mode of the current block 2910, or perform prediction, by using the fourth reference area 2950.

In an embodiment, the image decoding apparatus 2000 may determine the intra prediction mode of the current block 2910, or perform prediction, by using at least some of a fifth reference area 2960 including the right reference samples, the upper reference samples, the left reference samples, the upper left reference samples, and the upper right reference samples. In an embodiment, when the coding order (or coding direction) of a block is changed, the image decoding apparatus 2000 may determine the intra prediction mode of the current block 2910, or perform prediction, by using the fifth reference area 2960 including samples that may be referred to.

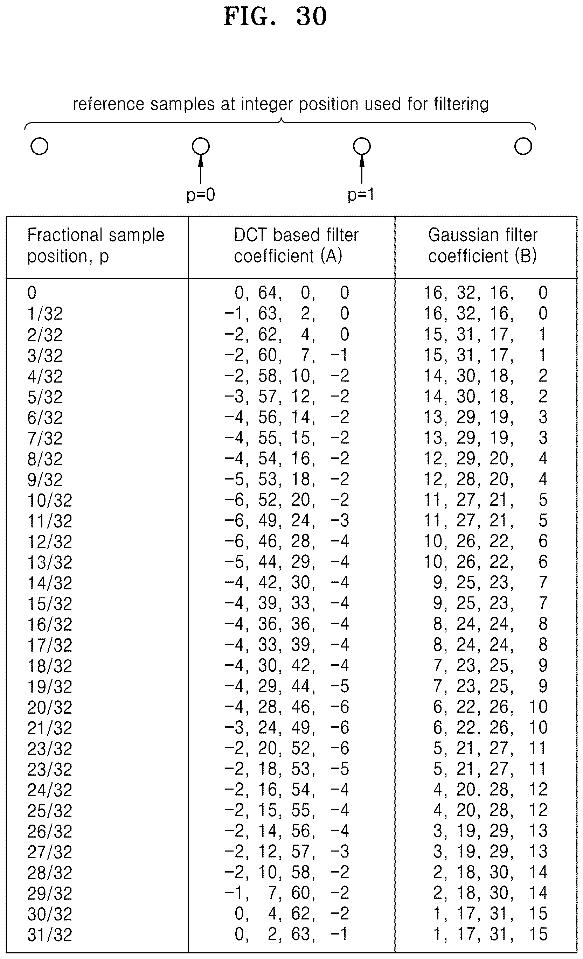

FIG. 30 is a diagram illustrating interpolation filtering for a current block according to an embodiment of the present disclosure.

Referring to FIG. 30, illustrated are coefficients of interpolation filtering according to the position of a reference sample according to an embodiment of the present disclosure.

In an embodiment, the image decoding apparatus 2000 may selectively perform low pass filtering (LPF) to increase efficiency of prediction. For example, the image decoding apparatus 2000 may perform filtering by using a Gaussian filter of [1 2 1].

In an embodiment, the image decoding apparatus 2000 may predict a current sample of a current block based on a sub-pixel position (fractional position) of a reference sample. For example, the image decoding apparatus 2000 may determine a sub-pixel position in sample units of 1/32. The image decoding apparatus 2000 may determine a filter coefficient according to the sub-pixel position. For example, referring to FIG. 30, illustrated are DCT based filter coefficients or Gaussian filter coefficients corresponding to a case in which a sub-pixel position p is from 0 to 31/32. In an embodiment, the image decoding apparatus 2000 may obtain the type of a filter from the bitstream.

In an embodiment, the image decoding apparatus 2000 may determine a current sample by using a filter coefficient. For example, the image decoding apparatus 2000 may predict a current sample by using the DCT based filter coefficients when the sub-pixel position is 1/32, based on a value obtained by multiplying a reference sample at a position of p=-1 by -1, a reference sample at a position of p=0 by 63, and a reference sample at a position of p=1 by 2.

In an embodiment, the second intra prediction mode may indicate a minute direction compared with the first intra prediction mode. In an embodiment, when performing prediction by using the second intra prediction mode, the image decoding apparatus 2000 may determine interpolation filter coefficients included at intervals of finer sub-pixel positions rather than the first intra prediction mode. For example, when the second intra prediction mode is finer than the first intra prediction mode, the image decoding apparatus 2000 may determine the filter coefficients with a sub-pixel position in sample units of 1/64, not with a sub-pixel position in sample units of 1/32.

In an embodiment, when performing prediction by using the second intra prediction mode, the image decoding apparatus 2000 may determine interpolation filter coefficients at the same intervals of sub-pixel positions as the first intra prediction mode. For example, when the second intra prediction mode is finer than the first intra prediction mode, the image decoding apparatus 2000 may determine filter coefficients at the same sub-pixel position in sample units of 1/32 as the first intra prediction mode.

In an embodiment, the image decoding apparatus 2000 may obtain, from the bitstream, information about whether to determine the sub-pixel filter coefficient in finer units.

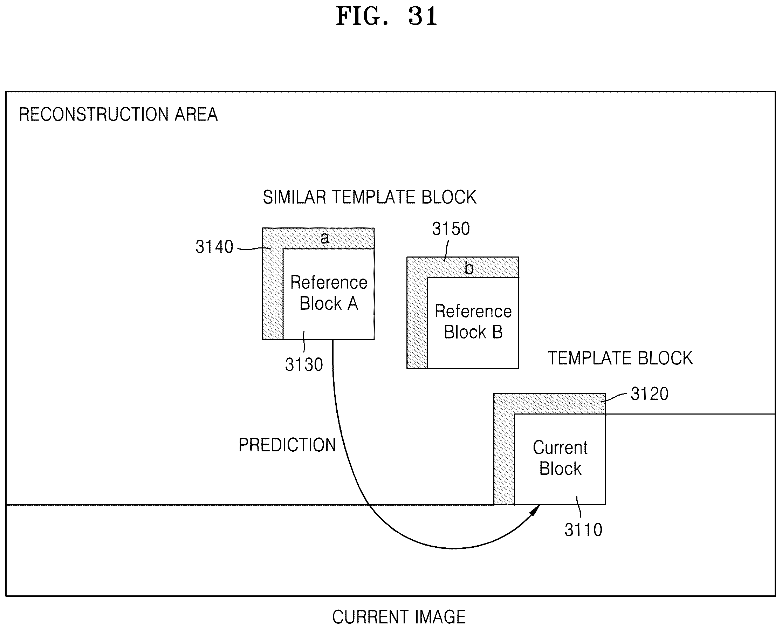

FIG. 31 is a diagram illustrating a process of determining a reference block by using template matching, according to an embodiment of the present disclosure.

In an embodiment, the image decoding apparatus 2000 may determine a reference block based on a template area 3120 of a current block 3110. The image decoding apparatus 2000 may determine the template area 3120 of the current block 3110 in an already reconstructed reconstruction area. The image decoding apparatus 2000 may determine a template area similar to the template area 3120 within the reconstruction area. In an embodiment, a process of determining a template area, which is performed by the image decoding apparatus 2000, may be referred to as template matching.

In an embodiment, the image decoding apparatus 2000 may determine a similar area by using a cost function. For example, the image decoding apparatus 2000 may determine an area similar to the template area 3120 of the current block 3110 within the reconstruction area by using at least one cost function of SAD, SSE, or MR-SAD. For example, the image decoding apparatus 2000 may determine the template area A 3140 with small error, as a similar template area, by comparing a template area A 3140 and a template area B 3150 with the template area 3120 of the current block 3110. The image decoding apparatus 2000 may determine a reference block corresponding to the similar template area, as a reference block of the current block 3110. For example, the image decoding apparatus 2000 may determine a reference block A 3130 as the reference block of the current block 3110. The image decoding apparatus 2000 may perform prediction on the current block 3110 based on the value of a reference block. In an embodiment, the image decoding apparatus 2000 may determine the current block 3110 to be the same as a reference block.

In an embodiment, the image decoding apparatus 2000 may determine a similar template area to the template area 3120 of the current block 3110 according to the block unit of the reconstruction area. For example, the image decoding apparatus 2000 may determine a similar template area by comparing template areas corresponding to the blocks in the reconstruction area with the template area 3120 of the current block 3110.

In an embodiment, the image decoding apparatus 2000 may determine a similar template area from among all template areas available in the reconstruction area. For example, the image decoding apparatus 2000 may determine a similar template area by comparing all or some of template areas including the reconstructed samples included in the reconstruction area with the template area 3120 of the current block 3110.

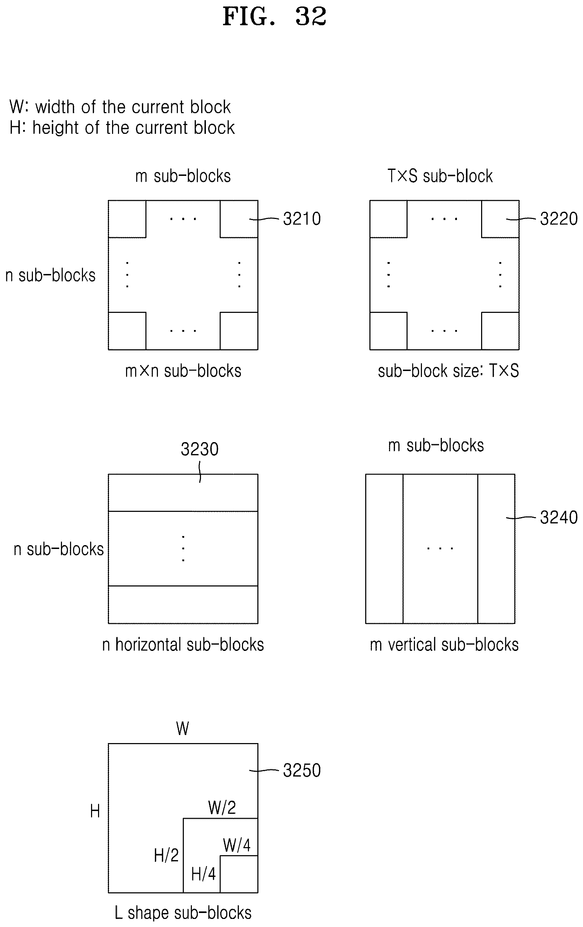

FIG. 32 is a diagram illustrating a process of determining a sub-block of a current block, according to an embodiment of the present disclosure.

Referring to FIG. 32, the image decoding apparatus 2000 according to an embodiment of the present disclosure may split a current block into a plurality of sub-blocks.

In an embodiment, the image decoding apparatus 2000 may split a current block into a plurality of sub-blocks 3210 based on the information about the number of sub-blocks. For example, when the information about the number of sub-blocks indicates splitting a current block by m in a horizontal direction and n in a vertical direction, the image decoding apparatus 2000 may determine the plurality of sub-blocks 3210 by splitting the current block in the same size by m in the horizontal direction and n in the vertical direction. The image decoding apparatus 2000 may obtain the information about the number of sub-blocks from the bitstream, or determine the number of sub-blocks as a predetermined value.

In an embodiment, the image decoding apparatus 2000 may split the current block into a plurality of sub-blocks 3220 based on information about the size of a sub-block. For example, when the information about the size of a sub-block indicates T x S, the image decoding apparatus 2000 may determine the plurality of sub-blocks 3220 by splitting the current block in the same size of T x S. The image decoding apparatus 2000 may obtain the information about the size of a sub-block from the bitstream, or determine the size of a sub-block as a predetermined value.

In an embodiment, the image decoding apparatus 2000 may split the current block into a plurality of sub-blocks 3230 or 3240 based on the information about the number of sub-blocks and direction information. For example, when the information about the number of sub-blocks indicates n and the direction information indicates the horizontal direction, the image decoding apparatus 2000 may determine the plurality of sub-blocks 3230 by splitting the current block in the horizontal direction by n of the same size. For example, when the information about the number of sub-blocks indicates m and the direction information indicates the vertical direction, the image decoding apparatus 2000 may determine the plurality of sub-blocks 3230 by splitting the current block in the vertical direction by m of the same size. The image decoding apparatus 2000 may obtain the information about the size of a sub-block and the direction information from the bitstream, or determine the size and direction of a sub-block as predetermined values.

In an embodiment, the image decoding apparatus 2000 may split the current block into the plurality of sub-blocks 3250 based on the information about the number of sub-blocks and shape information. For example, when the information about the number of sub-blocks indicates m and the shape information indicates splitting in an L shape block, the image decoding apparatus 2000 may determine the plurality of sub-blocks 3250 by splitting the current block by m of the same size in an L shape block. The image decoding apparatus 2000 may obtain the information about the number of sub-blocks from the bitstream or determine the number of sub-blocks as a predetermined value.

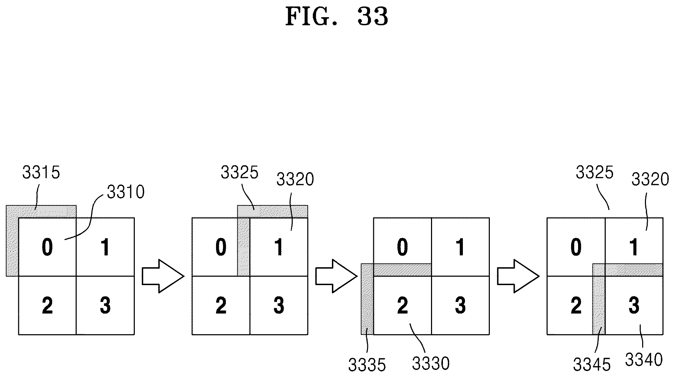

FIG. 33 is a diagram illustrating a process of determining an intra prediction mode of a current block including a plurality of sub-blocks, according to an embodiment of the present disclosure.

Referring to FIG. 33, according to an embodiment, a current block may be split into a plurality of sub-blocks 3310, 3320, 3330, and 3340. In an embodiment, the first sub-block 3310, the second sub-block 3320, the third sub-block 3330, and the fourth sub-block 3340 may be referred to as the 0th sub-block, the 1st sub-block, the 2nd sub-block, and the 3rd sub-block, respectively, but the order of referred numbers may be changed.

In an embodiment, the image decoding apparatus 2000 may determine an intra prediction mode for each sub-block. The image decoding apparatus 2000 may determine an intra prediction mode based on a first reference area 3315 of the first sub-block 3310. The image decoding apparatus 2000 may refine the first intra prediction mode to the second intra prediction mode based on the first reference area 3315. The image decoding apparatus 2000 may perform prediction on the first sub-block 3310 based on the determined intra prediction mode (or refined second intra prediction mode). The image decoding apparatus 2000 may reconstruct the first sub-block 3310.

In an embodiment, the image decoding apparatus 2000 may determine an intra prediction mode based on a second reference area 3325 of the second sub-block 3320. The image decoding apparatus 2000 may refine the first intra prediction mode to the second intra prediction mode based on the second reference area 3325. The image decoding apparatus 2000 may determine an intra prediction mode of the second sub-block 3320 based on the intra prediction mode of the first sub-block 3310. For example, the image decoding apparatus 2000 may determine an intra prediction mode of the second sub-block 3320 based on the second intra prediction mode of the first sub-block 3310. The image decoding apparatus 2000 may perform prediction on the second sub-block 3320. The image decoding apparatus 2000 may reconstruct the second sub-block 3320.

In an embodiment, the image decoding apparatus 2000 may determine an intra prediction mode, perform prediction, or perform reconstruction on each of the third sub-block 3330 and the fourth sub-block 3340, like the first sub-block 3310 and the second sub-block 3330.

In an embodiment, the image decoding apparatus 2000 may determine a template area for each sub-block. The image decoding apparatus 2000 may determine a reference block of the first sub-block 3310 based on the first template area 3315 of the first sub-block 3310. The image decoding apparatus 2000 may determine a similar template area to the first template area 3315. The image decoding apparatus 2000 may determine a reference block corresponding to the similar template area. The image decoding apparatus 2000 may perform prediction on the first sub-block 3310 based on the determined reference block. For example, the image decoding apparatus 2000 may determine the value of the first sub-block to be the same as the value of the reference block. The image decoding apparatus 2000 may reconstruct the first sub-block 3310.

In an embodiment, the image decoding apparatus 2000 may determine a reference block based on the second template area 3325 of the second sub-block 3320. In an embodiment, the image decoding apparatus 2000 may determine a reference block based on the second template area 3325 of the second sub-block 3320. In an embodiment, the image decoding apparatus 2000 may determine a reference block of a second sub-block as the reference block of the first sub-block 3310. The image decoding apparatus 2000 may perform prediction on the second sub-block 3320. The image decoding apparatus 2000 may reconstruct the second sub-block 3320.

In an embodiment, the image decoding apparatus 2000 may determine a reference block, perform prediction, or perform reconstruction on each of the third sub-block 3330 and the fourth sub-block 3340, like the first sub-block 3310 and the second sub-block 3330.

In an embodiment, the image decoding apparatus 2000 may perform at least one of prediction or reconstruction on a sub-block based on the sub-block on which prediction or reconstruction has been previously. For example, the image decoding apparatus 2000 may perform prediction on the second sub-block 3320 by using the first sub-block 3310 on which reconstruction has been performed or the first sub-block 3310 on which prediction has been performed. In an embodiment, the image decoding apparatus 2000 may perform prediction on the next sub-block after the reconstruction has been performed on the sub-block. In an embodiment, the image decoding apparatus 2000 may perform prediction on the sub-blocks and reconstruction on the current block.

In an embodiment, the image decoding apparatus 2000 may determine whether to perform prediction by using the sub-block only when the size of the sub-block or the current block is greater than or equal to a predetermined size. In an embodiment, the image decoding apparatus 2000 may determine whether to perform prediction by using the sub-block based on the shape of the sub-block or the current block.

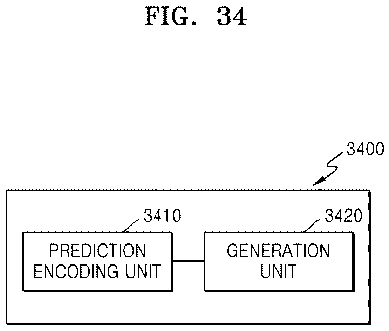

FIG. 34 is a block diagram illustrating a configuration of an image encoding apparatus according to an embodiment of the present disclosure.

Referring to FIG. 34, an image encoding apparatus 3400 may include a prediction encoding unit 3410 and a generation unit 3420.

According to an embodiment, the prediction encoding unit 3410 and the generation unit 3420 may be implemented as at least one processor. In an embodiment, the prediction encoding unit 3410 and the generation unit 3420 may operate according to instructions stored in memory.

The image encoding apparatus 3400 may include memory storing input/output data of the prediction encoding unit 3410 and the generation unit 3420. Furthermore, the image encoding apparatus 3400 may include a memory controller for controlling the data input/output of the memory.

In an embodiment, the prediction encoding unit 3410 may correspond to the prediction encoding unit 1915 illustrated in FIG. 19, and the generation unit 3420 may correspond to the entropy encoding unit 1925 illustrated in FIG. 19.

The prediction encoding unit 3410 may determine the prediction mode of a current block. The current block may be a maximum coding unit, a coding unit, a transform unit, or a prediction unit, which are split from a current picture 2200 to be encoded.

In an embodiment, the prediction mode of a current block may be determined to be an intra mode or an inter mode.

In an embodiment, when the prediction mode of a current block is an intra mode, the prediction encoding unit 3410 may determine the intra prediction mode of a current block.

The intra prediction mode of a current block may be any one of a plurality of intra prediction modes. As described with reference to FIG. 21, a plurality of intra prediction modes may include a non-directional intra mode and a directional intra mode.

In an embodiment, the prediction encoding unit 3410 may perform intra prediction or inter prediction on the current block according to the prediction mode of the current block, and encode the current block by using a prediction block generated as a result of performing the intra prediction or the inter prediction.

In an embodiment, the encoding of the current block may mean a process of generating information about the reconstruction of a current block by the image decoding apparatus 2000. The information generated through the encoding may be included in the bitstream.

In an embodiment, the prediction encoding unit 3410 may generate residual data corresponding to the difference between the prediction block and the current block. When the prediction block is determined as the current block, the residual data may not be generated.

In an embodiment, when the prediction mode of a current block is an intra mode, the prediction encoding unit 3410 may determine information indicating whether the refinement is performed on the intra prediction mode of a current block. The generation unit 3420 may generate a bitstream including the determined information. In an embodiment, 'the refinement on an intra prediction mode' may include an operation of determining a second intra prediction mode indicating a finer direction, based on the first intra prediction mode determined by using a bitstream,. For example, it may mean that the image encoding apparatus 3400 determines one intra prediction mode from among 129 directional modes (e.g., 65 general directional modes and 64 finer directional modes) based on the first intra prediction mode (e.g., the 64th intra prediction mode) determined from among 65 general directional modes (e.g., the second intra prediction mode to the 66th intra prediction mode).

In an embodiment, the prediction encoding unit 3410 may determine an intra prediction mode determining method. The generation unit 3420 may generate a bitstream including information about the intra prediction mode determining method. The intra prediction mode determining method may include at least one of a first determination method, a second determination method, or a third determination method.

In an embodiment, according to the first determination method of the intra prediction mode, the prediction encoding unit 3410 may determine an intra prediction mode, and the generation unit 3420 may generate a bitstream including the information about the intra prediction mode. The first determination method according to an embodiment may be one of the intra prediction mode determination methods of the H.266 VVC standard or the H.265 HEVC standard.

In an embodiment, according to the second determination method of the intra prediction mode, the prediction encoding unit 3410 may determine an intra prediction mode, and the generation unit 3420 may not generate a bitstream. In an embodiment, the prediction encoding unit 3410 may determine an intra prediction mode based on the gradients of reference samples of a current block. As the process of determining an intra prediction mode based on the gradient, which is performed by the prediction encoding unit 3410 according to an embodiment, is described with reference to FIG. 25, a detailed description thereof is omitted. In an embodiment, the prediction encoding unit 3410 may determine an intra prediction mode based on a result of performing prediction by using the reconstructed samples of a current block. As the process of determining an intra prediction mode based on the result of performing prediction, which is performed by the prediction encoding unit 3410 according to an embodiment is described with reference to FIG. 26, a detailed description thereof is omitted.

In an embodiment, according to the third determination method of the intra prediction mode, the prediction encoding unit 3410 may determine the second intra prediction mode by performing refinement on the first intra prediction mode, and the generation unit 3420 may generate a bitstream including the information about the first intra prediction mode. In an embodiment, the intra prediction mode determining method may be included in at least one of block unit syntax, coding tree syntax, tile syntax, slice syntax, picture syntax, or sequence syntax of the bitstream.

In an embodiment, the prediction encoding unit 3410 may determine the first intra prediction mode based on the intra prediction mode of a surrounding block (e.g., at least one of the left side, the upper side, the upper left side, the upper right side, or the lower left side of a current block).

In an embodiment, the prediction encoding unit 3410 may generate an MPM list including a plurality of intra prediction modes based on prediction mode of surrounding block. The prediction encoding unit 3410 may determine whether a current block determines an intra prediction mode by using an MPM list. The generation unit 3420 may generate a bitstream including the information about whether to determine an intra prediction mode by using an MPM list. In an embodiment, when a finer intra prediction mode (e.g., a refined intra prediction mode) exists among the prediction modes of surrounding blocks, the prediction encoding unit 3420 may generate an MPM list including an intra prediction mode adjacent to the finer intra prediction mode. In an embodiment, the prediction encoding unit 3420 may store the intra prediction mode adjacent to the finer intra prediction mode to generate an MPM list of the surrounding blocks. For example, even when the second intra prediction mode of a current block indicates a finer direction compared with the first intra prediction mode, the prediction encoding unit 3420 may store the first intra prediction mode as the intra prediction mode of the current block.

In an embodiment, when the prediction encoding unit 3410 determines an intra prediction mode by using an MPM list, the prediction encoding unit 3410 may determine one of the intra prediction modes included in the MPM list in order to determine the first intra prediction mode. The generation unit 3420 may generate a bitstream including information indicating one of the intra prediction modes included in the MPM list.

In an embodiment, when the prediction encoding unit 3410 determines an intra prediction mode without using an MPM list, the prediction encoding unit 3410 may determine one of the remaining intra prediction modes except for the intra prediction modes included in the MPM list. The generation unit 3420 may generate a bitstream including information indicating the determined one intra prediction mode.

The prediction encoding unit 3410 may determine the first intra prediction mode of a current block. In an embodiment, the first intra prediction mode may be selected from among the plurality of intra prediction modes included in the intra prediction mode set.

The prediction encoding unit 3410 may determine the search range of the second intra prediction mode based on the first intra prediction mode. The search range may include a plurality of intra prediction modes including the first intra prediction mode. In an embodiment, the plurality of intra prediction modes included in the search range may indicate a finer direction compared with the plurality of intra prediction modes included in the intra prediction mode set. In an embodiment, the plurality of intra prediction modes included in the search range may indicate indexes included in a predetermined range based on the index of the first intra prediction mode. In an embodiment, the plurality of intra prediction modes included in the search range may indicate index values between an index value less than the index value indicating the first intra prediction mode by a first value and an index value greater than the index value indicating the first intra prediction mode by a second value.

The prediction encoding unit 3410 may determine the second intra prediction mode for the current block within the search range of the second intra prediction mode. In an embodiment, the prediction encoding unit 3410 may determine a plurality of gradients respectively for a plurality of reference samples of a reference area of the current block. The prediction encoding unit 3420 may determine the second intra prediction mode based on the plurality of gradients. In an embodiment, the prediction encoding unit 3410 may split a current block into a plurality of sub-blocks. In an embodiment, the second intra prediction mode may be determined for each of the plurality of sub-blocks. In an embodiment, the prediction encoding unit 3410 may determine a reference template area similar to a template area of a current block in a current image. The prediction encoding unit 3410 may determine the second intra prediction mode based on the intra prediction mode of a reference block corresponding to the reference template area. In an embodiment, reference template area may be determined for each sub-block.

The prediction encoding unit 3410 may generate a prediction block by performing intra prediction on the current block by using the second intra prediction mode. In an embodiment, the prediction block may be generated by using the second intra prediction mode for each sub-block. In an embodiment, the prediction encoding unit 3410 may determine a sub-pixel reference sample for a current sample of a current block by using the second intra prediction mode. The prediction encoding unit 3410 may perform interpolation filtering based on the position of the sub-pixel reference sample.

The prediction encoding unit 3410 may generate a bitstream including information about the first intra prediction mode of a current block. In an embodiment, the information about the first intra prediction mode may be included in at least one of information about an index indicating the first intra prediction mode or information indicating a plurality of intra prediction modes that are determinable as the first intra prediction mode.

The generation unit 3420 may generate a bitstream including a result of encoding a picture. The bitstream may include a result of encoding a current block.

In an embodiment, the generation unit 3420 may transmit the bitstream to the image decoding apparatus 2000 through a network.

In an embodiment, the generation unit 3420 may store the bitstream in a data storage medium including a magnetic medium, such as a hard disk, a floppy disk, and a magnetic tape, an optical recording medium, such as CD-ROM and DVD, a magneto-optical medium such as a floptical disk, etc.

The generation unit 3420 may generate a bitstream including syntax elements generated through the encoding of a picture. Values corresponding to the syntax elements may be included in the bitstream according to the hierarchical structure of a picture.

The generation unit 3420 may obtain bins included in the bitstream by entropy encoding the syntax elements.

In an embodiment, the bitstream may include information about the prediction mode of a current block in the current picture 2200.

In an embodiment, when the prediction mode of a current block is an intra mode, the bitstream may include information indicating the intra prediction mode of the current block.

In the intra mode, in an assumption that continuity exists between the surrounding samples of a current block and samples within the current block, a prediction block of the current block may be generated based on the surrounding samples of the current block according to the intra prediction mode.

The prediction encoding unit 3410 according to an embodiment may use not only the surrounding samples of a current block included in a current picture, but also a spatial reference sample included in the current picture, for the intra prediction. As the prediction encoding unit 3410 predicts the samples of a current block by using not only samples directly adjacent to the current block, but also samples far from the current block, the size of the residual data may be reduced. The image encoding apparatus 3400 according to an embodiment of the present disclosure may improve compression efficiency by increasing the efficiency of intra prediction.

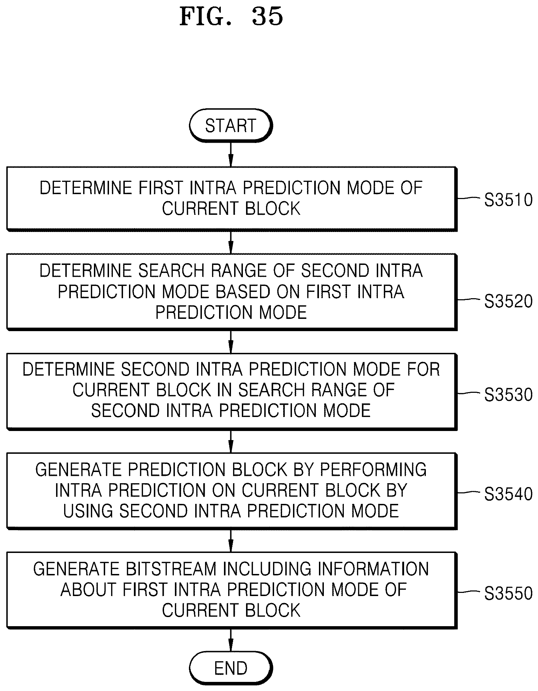

FIG. 35 is a flowchart illustrating an image encoding method that performs intra prediction for a current block by using an intra prediction mode, according to an embodiment of the present disclosure.

Referring to FIG. 35, in operation S3510, the image encoding apparatus 3400 may determine the first intra prediction mode of a current block. In operation S3520, the image encoding apparatus 3400 may determine the search range of the second intra prediction mode based on the first intra prediction mode. The search range may include a plurality of intra prediction modes including the first intra prediction mode.

In operation S3530, the image encoding apparatus 3400 may determine the second intra prediction mode for the current block within the search range of the second intra prediction mode.

In operation S3540, the image encoding apparatus 3400 may generate a prediction block by performing intra prediction on the current block by using the second intra prediction mode.

In operation S3550, the image encoding apparatus 3400 may generate a bitstream including information about the first intra prediction mode of the current block.

According to an embodiment of the present disclosure, an image decoding method is provided. The image decoding method may include obtaining information about a first intra prediction mode of a current block from a bitstream. The image decoding method may include determining the first intra prediction mode of the current block by using the information about the first intra prediction mode. The image decoding method may include determining a search range of a second intra prediction mode based on based on the first intra prediction mode. The search range may include a plurality of intra prediction modes including the first intra prediction mode. The image decoding method may include determining the second intra prediction mode for the current block within the search range of the second intra prediction mode. The image decoding method may include generating a prediction block by performing intra prediction on the current block by using the second intra prediction mode. The image decoding method may include generating a reconstructed image based on the prediction block. The image decoding method according to an embodiment of the present disclosure may improve prediction accuracy by performing prediction on a finer direction by using the second intra prediction mode.

According to an embodiment of the present disclosure, the first intra prediction mode may be one selected from among a plurality of intra prediction modes included in an intra prediction mode set. The plurality of intra prediction modes included in a search range may indicate a finer direction compared with the plurality of intra prediction modes included in the intra prediction mode set. The image decoding method according to an embodiment of the present disclosure may improve prediction accuracy by performing prediction on a finer direction by using the second intra prediction mode.

According to an embodiment of the present disclosure, the plurality of intra prediction modes included in the search range may indicate indexes included in a predetermined range based on the index of the first intra prediction mode. The image decoding method according to an embodiment of the present disclosure may improve prediction accuracy by performing prediction on a finer direction by using the second intra prediction mode and reduce an execution time by using a search range included in the predetermined range.

According to an embodiment of the present disclosure, the plurality of intra prediction modes included in the search range may indicate index values between an index value less than an index value indicating the first intra prediction mode by a first value and an index value greater than the index value indicating the first intra prediction mode by a second value. The image decoding method according to an embodiment of the present disclosure may improve prediction accuracy by performing prediction on a finer direction by using the second intra prediction mode and reduce an execution time by using a search range included in the predetermined range.

The image decoding method according to an embodiment of the present disclosure may include determining a plurality of gradients respectively for a plurality of reference samples of a reference area of the current block. The image decoding method may include determining a second intra prediction mode based on a plurality of gradients. The image decoding method according to an embodiment of the present disclosure may perform prediction on a finer direction by using the second intra prediction mode.

According to an embodiment of the present disclosure, image decoding method may include determining a predicted sample of a target area of a current block for a plurality of intra prediction modes included in a search range, by using a reconstructed sample of a reference area of the current block. The image decoding method may include determining an error for each of one or more prediction modes based on the predicted sample of a target area and the reconstructed sample of the target area. The image decoding method may include determining a prediction mode with the smallest error as a second intra prediction mode among a plurality of intra prediction modes included in a search range. The image decoding method according to an embodiment of the present disclosure may improve prediction accuracy by performing prediction on a finer direction by using the second intra prediction mode.

The information about the first intra prediction mode according to an embodiment of the present disclosure may include at least one of information about an index indicating the first intra prediction mode or information indicating a plurality of intra prediction modes that are determinable as the first intra prediction mode. The image decoding method according to an embodiment of the present disclosure may improve prediction accuracy by using various first intra prediction modes by expressing the information about the first intra prediction mode in various shapes.

The image decoding method according to an embodiment of the present disclosure may include splitting a current block into a plurality of sub-blocks. The second intra prediction mode may be determined for each of a plurality of sub-blocks. The prediction block may be determined by using the second intra prediction mode for each sub-block.

According to an embodiment of the present disclosure, the first intra prediction mode may be a DC mode. The second intra prediction mode may be one of a first DC mode, a second DC mode, and a third DC mode. The first DC mode may be calculated by using one or more left reference samples and one or more upper reference samples. The second DC mode may be calculated by using the one or more left reference samples. The third DC mode may be calculated by using the one or more upper reference samples. The image decoding method according to an embodiment of the present disclosure may improve prediction accuracy by performing prediction using various reference areas by using the second intra prediction mode.

The image decoding method according to an embodiment of the present disclosure may include determining a sub-pixel reference sample for a current sample of a current block by using the second intra prediction mode. The image decoding method may include performing interpolation filtering based on the position of the sub-pixel reference sample. The image decoding method according to an embodiment of the present disclosure may improve prediction accuracy by performing prediction on a finer direction by using the second intra prediction mode.

The image decoding method according to an embodiment of the present disclosure may include determining a reference template area similar to a template area of a current block in a current image. The image decoding method may include determining a second intra prediction mode based on the intra prediction mode of a reference block corresponding to the reference template area. The image decoding method according to an embodiment of the present disclosure may improve prediction accuracy by performing prediction on a finer direction by using the second intra prediction mode.

The image decoding method according to an embodiment of the present disclosure may include splitting a current block into a plurality of sub-blocks. The reference template area may be determined for each of the plurality of sub-blocks. The image decoding method according to an embodiment of the present disclosure may improve prediction accuracy by performing prediction on a finer direction by using the second intra prediction mode.

According to an embodiment of the present disclosure, an image decoding apparatus is provided. The image decoding apparatus may include memory and at least one processor. The at least one processor executes at least one instruction stored in the memory to obtain information about the first intra prediction mode of a current block from a bitstream. The at least one processor is configured to execute the at least one instruction stored in the memory to determine the first intra prediction mode of the current block by using information about the first intra prediction mode. The at least one processor is configured to execute the at least one instruction stored in the memory to determine the search range of the second intra prediction mode based on the first intra prediction mode. The search range may include a plurality of intra prediction modes including the first intra prediction mode. The at least one processor is configured to execute the at least one instruction stored in the memory to determine the second intra prediction mode for the current block within the search range of the second intra prediction mode. The at least one processor is configured to execute the at least one instruction stored in the memory to determine a prediction block by performing intra prediction on the current block by using the second intra prediction mode. The at least one processor is configured to execute the at least one instruction stored in the memory to generate a reconstructed image based on the prediction block.

According to an embodiment of the present disclosure, the first intra prediction mode may be one selected from among a plurality of intra prediction modes included in an intra prediction mode set. The plurality of intra prediction modes included in a search range may indicate a finer direction compared with the plurality of intra prediction modes included in the intra prediction mode set. The image decoding apparatus according to an embodiment of the present disclosure may improve prediction accuracy by performing prediction on a finer direction by using the second intra prediction mode.

According to an embodiment of the present disclosure, the plurality of intra prediction modes included in the search range may indicate indexes included in a predetermined range based on the index of the first intra prediction mode. The image decoding apparatus according to an embodiment of the present disclosure may improve prediction accuracy by performing prediction on a finer direction by using the second intra prediction mode and reduce an execution time by using a search range included in the predetermined range.

According to an embodiment of the present disclosure, the plurality of intra prediction modes included in the search range may indicate index values between an index value less than an index value indicating the first intra prediction mode by a first value and an index value greater than the index value indicating the first intra prediction mode by a second value. The image decoding apparatus according to an embodiment of the present disclosure may improve prediction accuracy by performing prediction on a finer direction by using the second intra prediction mode and reduce an execution time by using a search range included in the predetermined range.

The at least one processor according to an embodiment of the present disclosure is configured to execute at least one instruction stored in the memory to determine a plurality of gradients respectively for a plurality of reference samples of a reference area of the current block. The at least one processor is configured to execute the at least one instruction stored in the memory to determine the second intra prediction mode based on the plurality of gradients. The image decoding apparatus according to an embodiment of the present disclosure may perform prediction on a finer direction by using the second intra prediction mode.

The at least one processor according to an embodiment of the present disclosure is configured to execute the at least one instruction stored in the memory to determine a predicted sample of a target area of the current block with respect to the plurality of intra prediction modes included in the search range by using a reconstructed sample of a reference area of the current block. The at least one processor is configured to execute the at least one instruction stored in the memory to determine an error with respect to each of one or more prediction modes based on the predicted sample of a target area and the reconstructed sample of the target area. The at least one processor is configured to execute the at least one instruction stored in the memory to determine a prediction mode with the smallest error as the second intra prediction mode from among the plurality of intra prediction modes included in the search range. The image decoding apparatus according to an embodiment of the present disclosure may improve prediction accuracy by performing prediction on a finer direction by using the second intra prediction mode.

The information about the first intra prediction mode according to an embodiment of the present disclosure may include at least one of information about an index indicating the first intra prediction mode or information indicating a plurality of intra prediction modes that are determinable as the first intra prediction mode. The image decoding apparatus according to an embodiment of the present disclosure may improve prediction accuracy by using various first intra prediction modes by expressing the information about the first intra prediction mode in various shapes.

The at least one processor according to an embodiment of the present disclosure is configured to execute the at least one instruction stored in the memory to split a current block into a plurality of sub-blocks. The second intra prediction mode may be determined for each of a plurality of sub-blocks. The prediction block may be determined by using the second intra prediction mode for each sub-block.

According to an embodiment of the present disclosure, the first intra prediction mode may be a DC mode. The second intra prediction mode may be one of a first DC mode, a second DC mode, and a third DC mode. The first DC mode may be calculated by using one or more left reference samples and one or more upper reference samples. The second DC mode may be calculated by using the one or more left reference samples. The third DC mode may be calculated by using the one or more upper reference samples. The image decoding apparatus according to an embodiment of the present disclosure may improve prediction accuracy by using the second intra prediction mode by performing prediction using various reference areas.

The at least one processor according to an embodiment of the present disclosure is configured to execute the at least one instruction stored in the memory to determine a sub-pixel reference sample for a current sample of the current block by using the second intra prediction mode. The at least one processor is configured to execute the at least one instruction stored in the memory to perform interpolation filtering based on the position of the sub-pixel reference sample. The image decoding apparatus according to an embodiment of the present disclosure may improve prediction accuracy by performing prediction on a finer direction by using the second intra prediction mode.

The at least one processor according to an embodiment of the present disclosure is configured to execute the at least one instruction stored in the memory to determine a reference template area similar to a template area of the current block in a current image. The at least one processor is configured to execute the at least one instruction stored in the memory to determine the second intra prediction mode on the intra prediction mode of a reference block corresponding to the reference template area. The image decoding apparatus according to an embodiment of the present disclosure may improve prediction accuracy by performing prediction on a finer direction by using the second intra prediction mode.

The at least one processor according to an embodiment of the present disclosure is configured to execute the at least one instruction stored in the memory to split a current block into a plurality of sub-blocks. The reference template area may be determined for each of the plurality of sub-blocks. The image decoding apparatus according to an embodiment of the present disclosure may improve prediction accuracy by performing prediction on a finer direction by using the second intra prediction mode.

According to an embodiment of the present disclosure, an image encoding method is provided. The image encoding method may include determining a first intra prediction mode of a current block. The image encoding method may include determining a search range of a second intra prediction mode based on based on the first intra prediction mode. The search range may include a plurality of intra prediction modes including the first intra prediction mode. The image encoding method may include determining the second intra prediction mode for the current block within the search range of the second intra prediction mode. The image encoding method may include generating a prediction block by performing intra prediction on the current block by using the second intra prediction mode. The image encoding method may include generating a bitstream including information about the first intra prediction mode of a current block.

According to an embodiment of the present disclosure, the first intra prediction mode may be one selected from among a plurality of intra prediction modes included in an intra prediction mode set. The plurality of intra prediction modes included in a search range may indicate a finer direction compared with the plurality of intra prediction modes included in the intra prediction mode set. The image encoding method according to an embodiment of the present disclosure may improve prediction accuracy by performing prediction on a finer direction by using the second intra prediction mode.

According to an embodiment of the present disclosure, the plurality of intra prediction modes included in the search range may indicate indexes included in a predetermined range based on the index of the first intra prediction mode. The image encoding method according to an embodiment of the present disclosure may improve prediction accuracy by performing prediction on a finer direction by using the second intra prediction mode and reduce an execution time by using a search range included in the predetermined range.

According to an embodiment of the present disclosure, the plurality of intra prediction modes included in the search range may indicate index values between an index value less than an index value indicating the first intra prediction mode by a first value and an index value greater than the index value indicating the first intra prediction mode by a second value. The image encoding method according to an embodiment of the present disclosure may improve prediction accuracy by performing prediction on a finer direction by using the second intra prediction mode and reduce an execution time by using a search range included in the predetermined range.

The image encoding method according to an embodiment of the present disclosure may include determining a plurality of gradients respectively for a plurality of reference samples of a reference area of the current block. The image encoding method may include determining a second intra prediction mode based on a plurality of gradients. The image encoding method according to an embodiment of the present disclosure may perform prediction on a finer direction by using the second intra prediction mode.

According to an embodiment of the present disclosure, image encoding method may include determining a predicted sample of a target area of a current block for a plurality of intra prediction modes included in a search range, by using a reconstructed sample of a reference area of the current block. The image encoding method may include determining an error for each of one or more prediction modes based on the predicted sample of a target area and the reconstructed sample of the target area. The image encoding method may include determining a prediction mode with the smallest error as a second intra prediction mode among a plurality of intra prediction modes included in a search range. The image encoding method according to an embodiment of the present disclosure may improve prediction accuracy by performing prediction on a finer direction by using the second intra prediction mode.

The information about the first intra prediction mode according to an embodiment of the present disclosure may include at least one of information about an index indicating the first intra prediction mode or information indicating a plurality of intra prediction modes that are determinable as the first intra prediction mode. The image encoding method according to an embodiment of the present disclosure may improve prediction accuracy by using various first intra prediction modes by expressing the information about the first intra prediction mode in various shapes.

The image encoding method according to an embodiment of the present disclosure may include splitting a current block into a plurality of sub-blocks. The second intra prediction mode may be determined for each of a plurality of sub-blocks. The prediction block may be determined by using the second intra prediction mode for each sub-block.

According to an embodiment of the present disclosure, the first intra prediction mode may be a DC mode. The second intra prediction mode may be one of a first DC mode, a second DC mode, and a third DC mode. The first DC mode may be calculated by using one or more left reference samples and one or more upper reference samples. The second DC mode may be calculated by using the one or more left reference samples. The third DC mode may be calculated by using the one or more upper reference samples. The image encoding method according to an embodiment of the present disclosure may improve prediction accuracy by performing prediction using various reference areas by using the second intra prediction mode.

The image encoding method according to an embodiment of the present disclosure may include determining a sub-pixel reference sample for a current sample of a current block by using the second intra prediction mode. The image encoding method may include performing interpolation filtering based on the position of the sub-pixel reference sample. The image encoding method according to an embodiment of the present disclosure may improve prediction accuracy by performing prediction on a finer direction by using the second intra prediction mode.

The image encoding method according to an embodiment of the present disclosure may include determining a reference template area similar to a template area of a current block in a current image. The image encoding method may include determining a second intra prediction mode based on the intra prediction mode of a reference block corresponding to the reference template area. The image encoding method according to an embodiment of the present disclosure may improve prediction accuracy by performing prediction on a finer direction by using the second intra prediction mode.

The image encoding method according to an embodiment of the present disclosure may include splitting a current block into a plurality of sub-blocks. The reference template area may be determined for each of the plurality of sub-blocks. The image encoding method according to an embodiment of the present disclosure may improve prediction accuracy by performing prediction on a finer direction by using the second intra prediction mode.

According to an embodiment of the present disclosure, a computer-readable storage medium storing a bitstream is provided. The bitstream may be encoded by an image encoding method. The image encoding method may include determining a first intra prediction mode of a current block. The image encoding method may include determining a search range of a second intra prediction mode based on based on the first intra prediction mode. The search range may include a plurality of intra prediction modes including the first intra prediction mode. The image encoding method may include determining the second intra prediction mode for the current block within the search range of the second intra prediction mode. The image encoding method may include generating a prediction block by performing intra prediction on the current block by using the second intra prediction mode. The image encoding method may include generating a bitstream including information about the first intra prediction mode of a current block.

A machine readable storage medium may be provided in the form of a non-transitory storage medium. Here, the 'non-transitory storage medium' may mean that a storage medium is a tangible device, not including a signal (e.g., electromagnetic waves), but the term does not distinguish a case of semi-permanently storing data in a storage medium from a case of temporarily storing data. For example, the 'non-transitory storage medium' may include a buffer in which data is temporarily stored.

According to an embodiment, the method according to an embodiment of the present disclosure may be provided by being included in a computer program product. The computer program product as goods may be dealt between a seller and a buyer. The computer program product may be distributed in the form of a machine-readable storage medium (e.g., a compact disc read only memory (CD-ROM)), or through application stores, or may be distributed directly or online (e.g., download or upload), between two user devices (e.g., smart phones). In the case of online distribution, at least a part of the computer program product (e.g., a downloadable application) may be at least temporarily stored or temporarily generated in a machine-readable storage medium such as a manufacturer's server, an application store's server, or a memory of a relay server.

## Claims

1. An image decoding method comprising:
obtaining, from a bitstream, information about a first intra prediction mode of a current block (S2310);
determining the first intra prediction mode of the current block by using the information about the first intra prediction mode (S2320);
determining a search range of a second intra prediction mode based on the first intra prediction mode, the search range including a plurality of intra prediction modes including the first intra prediction mode (S2330);
determining the second intra prediction mode for the current block within the search range of the second intra prediction mode (S2340); and
generating a prediction block by performing intra prediction on the current block by using the second intra prediction mode (S2350); and
generating a reconstructed image based on the prediction block (S2360).

2. The image decoding method of claim 1, wherein the first intra prediction mode is selected from among a plurality of intra prediction modes included in an intra prediction mode set, and
wherein the plurality of intra prediction modes included in the search range indicate finer direction compared with the plurality of intra prediction modes included in the intra prediction mode set.

3. The image decoding method of any one of claims 1 or 2, wherein
the plurality of intra prediction modes included in the search range indicate indexes included in a predetermined range based on an index of the first intra prediction mode.

4. The image decoding method of claim 3, wherein the plurality of intra prediction modes included in the search range indicate index values between an index value less than an index value indicating the first intra prediction mode by a first value and an index value greater than the index value indicating the first intra prediction mode by a second value.

5. The image decoding method of any one of claims 1 to 4, further comprising:
determining a plurality of gradients respectively for a plurality of reference samples of a reference area of the current block; and
determining the second intra prediction mode based on the plurality of gradients.

6. The image decoding method of any one of claims 1 to 5, wherein the determining the second intra prediction mode comprises:
determining a predicted sample of a target area of the current block with respect to the plurality of intra prediction modes included in the search range, by using a reconstructed sample of a reference area of the current block;
determining an error with respect to each of the plurality of intra prediction modes, based on the predicted sample of the target area and a reconstructed sample of the target area; and
determining the second intra prediction mode with smallest error from among the plurality of intra prediction modes included in the search range.

7. The image decoding method of any one of claims 1 to 6, wherein the information about the first intra prediction mode includes at least one of information about an index indicating the first intra prediction mode or information indicating a plurality of intra prediction modes that are determinable as the first intra prediction mode.

8. The image decoding method of any one of claims 1 to 7, further comprising:
splitting the current block into a plurality of sub-blocks,
wherein the second intra prediction mode is determined for each of the plurality of sub-blocks, and
wherein the prediction block is generated by using the second intra prediction mode for each sub-block.

9. The image decoding method of any one of claims 1 to 8, wherein, when the first intra prediction mode is a DC mode, the second intra prediction mode is one of a first DC mode, a second DC mode, and a third DC mode,
wherein the first DC mode is calculated by using one or more left reference samples and one or more upper reference samples,
wherein the second DC mode is calculated by using the one or more left reference samples, and
wherein the third DC mode is calculated by using the one or more upper reference samples.

10. The image decoding method of any one of claims 1 to 9, further comprising:
determining a sub-pixel reference sample for a current sample of the current block by using the second intra prediction mode; and
performing interpolation filtering based on a position of the sub-pixel reference sample.

11. The image decoding method of any one of claims 1 to 10, further comprising:
determining a reference template area similar to a template area of the current block in a current image; and
determining the second intra prediction mode based on an intra prediction mode of a reference block corresponding to the reference template area.

12. The image decoding method of claim 11, further comprising
splitting the current block into a plurality of sub-blocks,
wherein the reference template area is determined for each of the plurality of sub-blocks.

13. An image decoding apparatus comprising:
memory; and
at least one processor,
wherein the at least one processor is configured to execute at least one instruction stored in the memory to:
obtain, from a bitstream, information about a first intra prediction mode of a current block;
determine the first intra prediction mode of the current block by using the information about the first intra prediction mode;
determine a search range of a second intra prediction mode based on the first intra prediction mode, the search range including a plurality of intra prediction modes including the first intra prediction mode;
determine the second intra prediction mode for the current block within the search range of the second intra prediction mode;
generate a prediction block by performing intra prediction on the current block by using the second intra prediction mode; and
generate a reconstructed image based on the prediction block.

14. An image encoding method comprising:
determining a first intra prediction mode of a current block (S3410);
determining a search range of a second intra prediction mode based on the first intra prediction mode, the search range including a plurality of intra prediction modes including the first intra prediction mode (S3420);
determining the second intra prediction mode for the current block within the search range of the second intra prediction mode (S3430);
generating a prediction block by performing intra prediction on the current block by using the second intra prediction mode (S3440); and
generating a bitstream including information about the first intra prediction mode of the current block (S3450).

15. A computer-readable storage medium storing a bitstream that is encoded by an image encoding method, the image encoding method comprising: determining a first intra prediction mode of a current block;
determining a search range of a second intra prediction mode based on the first intra prediction mode, the search range including a plurality of intra prediction modes including the first intra prediction mode;
determining the second intra prediction mode for the current block within the search range of the second intra prediction mode;
generating a prediction block by performing intra prediction on the current block by using the second intra prediction mode; and
generating the bitstream including information about the first intra prediction mode of the current block.
